# EUROPEAN PATENT APPLICATION

(11) **EP 4 528 016 A1**
(43) Date of publication of application: **26.03.2025**
(21) Application number: 23852687.5
(22) Date of filing: 25.05.2023
(51) Int. Cl.: D06F 39/10, D06F 34/20, D06F 34/05, D06F 34/10, D06F 34/28, B01D 29/88, B01D 35/02, B01D 35/16, D06F 34/34, D06F 103/42

(54) **FILTER DEVICE**

(30) Priority: 09.08.2022 KR 20220099531; 22.12.2022 KR 20220182345
(71) Applicant: Samsung Electronics Co., Ltd., Suwon-si, Gyeonggi-do 16677 (KR)
(72) Inventor: LEE, Jaebok, Suwon-si, Gyeonggi-do 16677 (KR); SEO, Dongpil, Suwon-si, Gyeonggi-do 16677 (KR); LEE, Kanghyun, Suwon-si, Gyeonggi-do 16677 (KR); CHO, Youngjin, Suwon-si, Gyeonggi-do 16677 (KR)
(74) Representative: Gulde & Partner
(86) International application number: PCT/KR2023/007131
(87) International publication number: WO 2024/034792

(57) **Abstract**

A filter apparatus positionable outside a washing machine and connectable to a drain device of the washing machine. The filter apparatus includes a housing; a filter case in the housing and including an inlet and an outlet that are configured so that, with the filter apparatus positioned outside the washing machine and connected to the drain device, water from the drain device is flowable through the inlet into the filter case, and water in the filter case is flowable through the outlet out of the filter case; a filter detachably installable in the filter case so that water flowing through the inlet is flowable through the filter, and then to the outlet; and circuitry between the housing and the filter case and including a controller configured to control the filter apparatus, and a communicator configured to transmit information obtained by the filter apparatus to at least one of the washing machine or a user device.

## Description

### [Technical Field]

The disclosure relates to a filter apparatus being connectable to a washing machine.

### [Background Art]

A washing machine is an apparatus for washing laundry put into the tub through friction by stirring the laundry together with water and a detergent by a driving force of a driving motor.

Operations that are performed by the washing machine include, regardless of the type of the washing machine, a washing operation for washing laundry put into the tub by supplying a detergent and water to the tub and rotating the drum, a rinsing operation for rinsing the laundry by supplying water to the tub and rotating the drum, and a dehydrating operation for dehydrating water of the laundry by discharging water from the tub and rotating the drum.

The washing machine includes a drain device configured to discharge water stored in the tub to the outside of the washing machine while the washing operation, the rinsing operation and/or the dehydrating operation is performed.

Because water discharged from the drain device includes pollutants (for example, microplastics), the pollutants need to be filtered to protect the environment.

### [Disclosure]

### [Technical Problem]

An aspect of various embodiments of the disclosure provides a filter apparatus capable of being easily managed.

Moreover, an aspect of various embodiments of the disclosure provides a filter apparatus capable of communicating with an external device.

Further, an aspect of various embodiments of the disclosure provides a filter apparatus that enables a user to easily check a state.

In addition, an aspect of various embodiments of the disclosure providea filter apparatus capable of being easily controlled by a user.

Technical aspects, features, and objects of the disclosure are not limited to those described above, and other technical aspects, features, and objects not described herein will also be clearly understood by a person who has a common knowledge in the technical field to which the disclosure pertains from the following detailed description.

### [Technical Solution]

According to various embodiments of the disclosure, a filter apparatus may be positionable outside a washing machine and may be connectable to a drain device of the washing machine. The filter apparatus may incudes a housing; a filter case inside the housing and including an inlet and an outlet that are configured so that, with the filter apparatus positioned outside the washing machine and connected to the drain device, water from the drain device is flowable through the inlet into the filter case, and water in the filter case is flowable through the outlet out of the filter case; a filter detachably installable in the filter case so that water flowing through the inlet is flowable through the filter, and then to the outlet; and circuitry between the housing and the filter case and including a controller configured to control the filter apparatus, and a communicator configured to transmit information obtained by the filter apparatus to at least one of the washing machine or a user device.

### [Description of Drawings]

FIG. 1 shows a clothes treating apparatus according to an embodiment of the disclosure;
FIG. 2 shows a cross section of the washing machine shown in FIG. 1;
FIG. 3 is a control block diagram of a washing machine according to an embodiment of the disclosure;
FIG. 4 shows a clothes treating apparatus according to an embodiment of the disclosure;
FIG. 5 shows a cross section of the washing machine shown in FIG. 4;
FIG. 6 shows inside of a filter apparatus shown in FIGS. 1 and 3;
FIG. 7 is an exploded view of the filter apparatus shown in FIG. 6;
FIG. 8 shows the filter apparatus shown in FIG. 7 in a direction that is different from a direction of FIG. 7;
FIG. 9 shows cross sections of some components of the filter apparatus shown in FIG. 6;
FIG. 10 is an exploded view of a circuitry module of a filter apparatus according to an embodiment of the disclosure;
FIG. 11 shows a circuitry of a filter apparatus according to an embodiment of the disclosure;
FIGS. 12A, 12B, 12C, 12D, and 12E show examples of various locations of a circuitry module according to an embodiment of the disclosure;
FIGS. 13A, 13B, 13C, 13D, and 13E show examples of various locations of a display panel of a filter apparatus according to an embodiment of the disclosure;
FIG. 14 is a control block diagram of a filter apparatus according to an embodiment of the disclosure;
FIG. 15 is a control block diagram of a washing machine, a filter apparatus, a sever, and a user device, according to an embodiment of the disclosure;
FIG. 16 shows an example of communication establishment between a washing machine, a filter apparatus, a server, and a user device, according to an embodiment of the disclosure;
FIGS. 17A and 17B show an example of communication establishment between a washing machine, a filter apparatus, a server, and a user device, according to an embodiment of the disclosure;
FIGS. 18A and 18B show an example of communication establishment between a washing machine, a filter apparatus, a server, and a user device, according to an embodiment of the disclosure;
FIG. 19 shows a state in which a washing machine according to an embodiment of the disclosure is connected to a filter apparatus by a wire;
FIG. 20 shows a connecting portion formed in a washing machine according to an embodiment of the disclosure;
FIG. 21 is a flowchart showing an example of a method in which a filter apparatus according to an embodiment of the disclosure transmits a drainage sensing signal to a washing machine and/or a user device;
FIG. 22 shows an example of a state in which drainage information is output to a filter apparatus according to an embodiment of the disclosure;
FIG. 23 shows an example of a state in which drainage information is output to a washing machine according to an embodiment of the disclosure;
FIG. 24 shows an example of a state in which drainage information is output to a user device according to an embodiment of the disclosure;
FIG. 25 is a flowchart showing an example of a method in which a filter apparatus according to an embodiment of the disclosure transmits a drainage interruption signal to a washing machine and/or a user device;
FIG. 26 shows an example of a state in which drainage interruption information is output to a filter apparatus according to an embodiment of the disclosure;
FIG. 27 shows an example of a state in which drainage interruption information is output to a washing machine according to an embodiment of the disclosure;
FIG. 28 shows an example of a state in which drainage interruption information is output to a user device according to an embodiment of the disclosure;
FIG. 29 is a flowchart showing an example of a method in which a filter apparatus according to an embodiment of the disclosure transmits a filter clogging signal to a washing machine and/or a user device;
FIG. 30 shows an example of a state in which filter clogging information is output to a filter apparatus according to an embodiment of the disclosure;
FIG. 31 shows an example of a state in which filter clogging information is output to a washing machine according to an embodiment of the disclosure;
FIG. 32 shows an example of a state in which filter clogging information is output to a user device according to an embodiment of the disclosure;
FIG. 33 is a flowchart showing an example of a method in which a washing machine according to an embodiment of the disclosure transmits a drainage start signal to a filter apparatus and/or a user device;
FIG. 34 is a flowchart showing an example of a method in which a washing machine according to an embodiment of the disclosure transmits a drainage interruption signal to a filter apparatus and/or a user device;
FIG. 35 is a flowchart showing an example of a method in which a washing machine according to an embodiment of the disclosure transmits a filter clogging signal to a filter apparatus and/or a user device;
FIG. 36 is a flowchart showing an example of a method in which a filter apparatus (washing machine) according to an embodiment of the disclosure transmits a sensor failure signal to a washing machine (filter apparatus) and/or a user device;
FIG. 37 shows an example of a state in which sensor failure information is output to a filter apparatus according to an embodiment of the disclosure;
FIG. 38 shows an example of a state in which sensor failure information is output to a washing machine according to an embodiment of the disclosure;
FIG. 39 shows an example of a state in which sensor failure information is output to a user device according to an embodiment of the disclosure;
FIG. 40 shows a state in which a user interface for enabling an input of a filter cleaning command is provided by a user device according to an embodiment of the disclosure;
FIG. 41 shows an example of a process in which a filter cleaning command is transferred from a user device to a filter apparatus via a server; and
FIG. 42 shows an example of a process in which a filter cleaning command is transferred from a user device to a filter apparatus via a washing machine.

### [Mode for Invention]

Configurations illustrated in the embodiments and the drawings described in the present specification are only the preferred embodiments of the disclosure, and thus it is to be understood that various modified examples, which may replace the embodiments and the drawings described in the present specification, are possible when filing the present application.

Also, the terms used in the present specification are merely used to describe the embodiments, and are not intended to limit and/or restrict the disclosure.

It is to be understood that the singular forms "a," "an," and "the" include plural referents unless the context clearly dictates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. For example, a phrase such as "at least one of A or B" includes any of the following: A, B, A and B. A phrase such as "at least one of A, B, or C" includes any of the following: A, B, C, A and B, A and C, B and C, A and B and C.

The term "and/or" includes any and all combinations of one or more of associated listed items.

As used herein, such terms as "1st" and "2nd," or "first" and "second" may be used to simply distinguish a corresponding component from another, and does not limit the components in other aspect (for example., importance or order).

It is to be understood that if a certain component (for example, a first component) is referred to, with or without the term "operatively" or "communicatively", as "coupled with," "coupled to," "connected with," or "connected to" another component (for example, a second component), it means that the component may be coupled with the other component directly (for example, wiredly), wirelessly, or via a third element.

It is to be understood that the terms such as "including" or "having," etc., are intended to indicate the existence of the features, numbers, steps, operations, components, parts, or combinations thereof disclosed in the specification, and are not intended to preclude the possibility that one or more other features, numbers, steps, operations, components, parts, or combinations thereof may exist or may be added.

It is to be understood that if a certain component is referred to as being "connected to," "coupled to," "supported on" or "in contact with" another component, it means that the component may be connected to, coupled to, supported on, or in contact with the other component directly or indirectly via a third component.

It will also be understood that when a certain component is referred to as being "on" or "over" another component, it can be directly on the other component or intervening components may also be present.

In addition, the terms "portion", "device", "block", "member", and "module" used herein refer to a unit for processing at least one function or operation. For example, the terms may mean at least one process that may be processed by at least one hardware such as field-programmable gate array (FPGA) or application specific integrated circuit (ASIC), or at least one software or processor stored in a memory.

A washing machine according to various embodiments of the disclosure may perform a washing operation, a rinsing operation, a drain operation, and a dehydrating operation. The washing machine may be a washing machine with a drying function, which is capable of drying laundry dehydrated. The washing machine may be an example of a clothes treating apparatus. The clothes treating apparatus may include an apparatus for washing clothes (objects to be washed and objects to be dried), an apparatus for drying clothes, and an apparatus for washing and drying clothes.

The washing machine according to various embodiments of the disclosure may include a top-loading washing machine, wherein an inlet through which laundry is put into or taken out of the top-loading washing machine is provided upward, or a front-loading washing machine, wherein an inlet through which laundry is put into or taken out of the front-loading washing machine is provided forward. The washing machine according to various embodiments of the disclosure may include another loading type of washing machine, except for the top-loading washing machine and the front-loading washing machine.

The top-loading washing machine may wash laundry with water streams generated by a rotating body such as a pulsator. The front-loading washing machine may wash laundry by rotating a drum to repeatedly raise and drop the laundry. The front-loading washing machine may include a lift for raising laundry. The front-loading washing machine may include a washing machine with a drying function, which is capable of drying laundry accommodated in a drum. The washing machine with the drying function may include a heating device for high-temperature air. The washing machine with the drying function may further include a condensation device for dry air. For example, the washing machine with the drying function may include a heat pump. The washing machine according to various embodiments of the disclosure may include a washing machine using another washing method in addition to the above-described washing methods.

Hereinafter, a washing machine according to various embodiments of the disclosure will be described in detail with reference to the accompanying drawings.

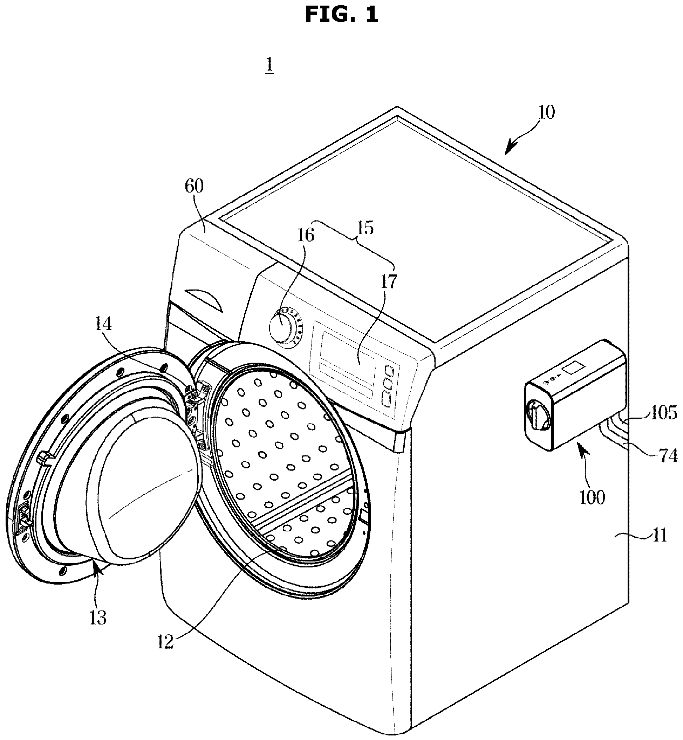

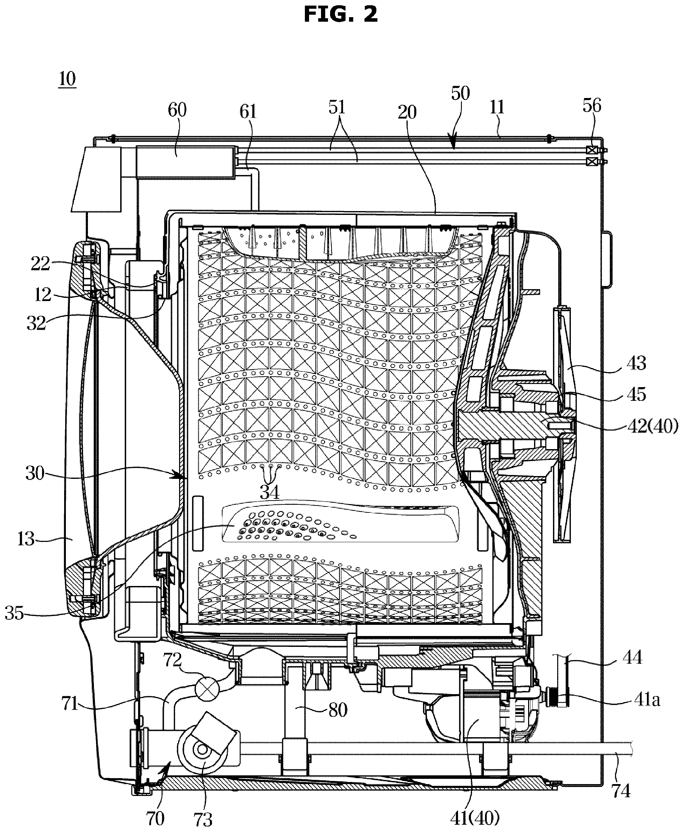

FIG. 1 shows a clothes treating apparatus according to an embodiment of the disclosure. FIG. 2 shows a cross section of the washing machine shown in FIG. 1.

As shown in FIGS. 1 and 2, a washing machine 10 of a clothes treating apparatus 1 may include a washing machine housing 11 for accommodating various components therein. The washing machine housing 11 may form an appearance of the washing machine 10. The washing machine housing 11 may be in a shape of a box of which a portion opens.

The washing machine housing 11 may include a housing opening 12 formed to allow an access to inside of a drum 30. The housing opening 12 may open substantially toward a front direction.

The washing machine 10 may include a door 13 for opening or closing the housing opening 12 provided in the washing machine housing 11. The door 13 may be rotatably mounted on the washing machine housing 11 by a hinge 14. At least one portion of the door 13 may be transparent or translucent to show the inside of the washing machine housing 11.

The washing machine 10 may include a tub 20 provided inside the washing machine housing 11 to store water. The tub 20 may be positioned inside the washing machine housing 11. The tub 20 may include a tub opening 22 corresponding to the housing opening 12. The tub opening 22 may open substantially toward the front direction. The tub 20 may be supported inside the washing machine housing 11. The tub 20 may have a substantially cylindrical shape of which one side opens.

The tub 20 may be elastically supported from the washing machine housing 11 by a damper 80. The damper 80 may connect the tub 20 to the washing machine housing 11. While vibrations generated according to a rotation of the drum 30 are transferred to the tub 20 and/or the washing machine housing 11, the damper 80 may absorb vibration energy between the tub 20 and the washing machine housing 11 to attenuate the vibrations.

The washing machine 10 may include the drum 30 accommodating laundry. The drum 30 may be rotatably provided inside the tub 20. The drum 30 may perform washing, rinsing, and/or dehydrating while rotating inside the tub 20. The drum 30 may include a through hole 34 that connects an inside space of the drum 30 to an inside space of the tub 20. The drum 30 may have a substantially cylindrical shape of which one side opens. On an inner circumferential surface of the drum 30, at least one lifter 35 may be installed to raise and drop laundry according to a rotation of the drum 30.

The drum 30 may include a drum opening 32 corresponding to the housing opening 12 and the tub opening 22. Laundry may be put into or taken out of the drum 30 through the housing opening 12, the tub opening 22, and the drum opening 32.

The washing machine 10 may include a washing machine driver 40 configured to rotate the drum 30. The washing machine driver 40 may include a driving motor 41, and a rotating shaft 42 for transferring a driving force generated by the driving motor 41 to the drum 30. The rotating shaft 42 may be connected to the drum 30 by penetrating the tub 20.

Washing machines may be classified into a direct driving type in which the rotating shaft 41 is connected directly to the driving motor 41 to rotate the drum 30, and an indirect driving type in which a pulley 43 is connected between the driving motor 41 and the rotating shaft 42 to drive the drum 30.

The washing machine 10 according to an embodiment of the disclosure may be the indirect driving type, although not limited thereto. However, the washing machine 10 may be the direct driving type.

One end of the rotating shaft 42 may be connected to the drum 30, and another end may be connected to the pulley 43 to receive power from the driving motor 41. At the rotating shaft 42 of the driving motor 41, a motor pulley 41a may be formed. A driving belt 44 may be provided between the motor pulley 41a and the pulley 43 such that the rotating shaft 42 is driven by the driving belt 44.

In the rear portion of the tub 20, a bearing housing 45 may be installed to rotatably support the rotating shaft 42. The bearing housing 45 may be made of an aluminum alloy. The bearing housing 45 may be inserted into the rear portion of the tub 20 upon injection-molding of the tub 20.

The washing machine driver 40 may rotate the drum 30 forward or backward to perform a washing operation, a rinsing operation and/or a dehydrating operation or a drying operation.

The washing machine 10 may include a water supply device 50. The water supply device 50 may supply water to the tub 20. The water supply device 50 may be positioned above the tub 20. The water supply device 50 may include a water supply tube 51, and a water supply valve 56 provided in the water supply tube 51. The water supply tube 51 may be connected to an external water supply source. The water supply tube 51 may extend to a detergent supply device 60 and/or the tub 20 from the external water supply source. Water may be supplied to the tub 20 via the detergent supply device 60. Water may be supplied to the tub 20 not via the detergent supply device 60.

The water supply valve 56 may open or close the water supply tube 51 in response to an electrical signal from a controller 90. The water supply valve 56 may allow or block supply of water from the external water supply source to the tub 20. The water supply valve 56 may include, for example, a solenoid valve that is opened or closed in response to an electrical signal.

The washing machine 10 may include the detergent supply device 60 configured to supply a detergent to the tub 20. The detergent supply device 60 may supply a detergent to the inside of the tub 20 during a water supply process. Water supplied through the water supply tube 51 may be mixed with a detergent via the detergent supply device 60. The water mixed with the detergent may be supplied to the inside of the tub 20. The detergent may include a conditioner for dryer, a deodorant, a sterilizer, or an air freshener, as well as a washing detergent. The detergent supply device 60 may be connected to the tub 20 through a connecting tube 61.

The washing machine 10 may include a drain device 70. The drain device 70 may discharge water accommodated in the tub 20 to outside. The drain device 70 may include a drain pump 73 for discharging water accommodated in the tub 20 to outside of the washing machine housing 11, a connecting hose 71 connecting the drain pump 73 to the tub 20 such that water stored in the tub 20 flows to the drain pump 73, and a drain hose 74 for guiding water pumped by the drain pump 73 to the outside of the washing machine housing 11. The drain device 70 may include a drain valve 72 provided in the connecting hose 71 to open or close the connecting hose 71.

The washing machine 10 may provide a user interface 15 for interactions with a user.

The washing machine 10 may include at least one user interface 15. The user interface 15 may include at least one input interface 16 and/or at least one output interface 17.

The at least one input interfac16 may convert sensory information received from a user into an electrical signal.

The at least one input interface 16 may include a power button, an operation button, a course selection dial (or a course selection button), and a washing/rinsing/dehydrating setting button. The at least one input interface 16 may include, for example, a tact switch, a push switch, a slide switch, a toggle switch, a micro switch, a touch switch, a touch pad, a touch screen, a jog dial and/or a microphone, etc.

The at least one output interface 17 may generate sensory information and transfer various data related to an operation of the washing machine 10 to a user.

For example, the at least one output interface 17 may transfer information related to a washing course and an operation time of the washing machine 10 or a washing setting/rinsing setting/dehydrating setting to a user. Information related to an operation of the washing machine 10 may be output through a screen, an indicator, a voice, etc. The at least one output interface 17 may include, for example, a Liquid Crystal Display (LCD) panel, a Light Emitting Diode (LED) panel, a LED module, a speaker, etc.

The clothes treating apparatus 1 may include a filter apparatus 100 that is connectable to the drain device 70 of the washing machine 10. For example, the filter apparatus 100 may be connectable to the drain hose 74.

The filter apparatus 100 may be positioned outside the washing machine 10. For example, the filter apparatus 100 may be provided outside the washing machine housing 11. The filter apparatus 100 may filter foreign materials from water discharged from the washing machine 10. The filter apparatus 100 may filter foreign materials having smaller sizes than those of foreign materials that are capable of being filtered in the washing machine 10. For example, the filter apparatus 100 may filter foreign materials having smaller sizes than those of foreign materials that are capable of being filtered in the drain device 70 of the washing machine 10.

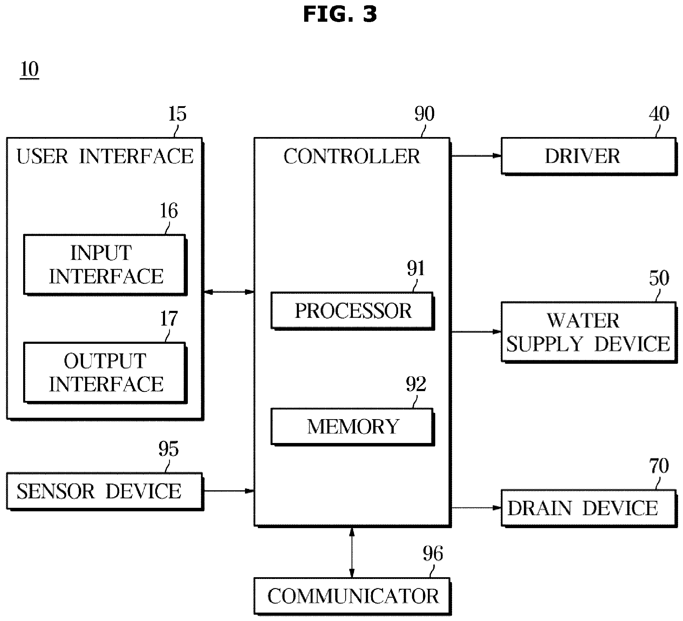

FIG. 3 is a control block diagram of a washing machine according to an embodiment of the disclosure.

According to an embodiment of the disclosure, the washing machine 10 may include the user interface 15, the driver 40, the water supply device 50, the drain device 70, a sensor device 95, a communicator 96, and the controller 90.

The user interface 15 may provide a user interface for interactions between a user and the washing machine 10.

The user interface 15 may include the at least one input interface 16 and the at least one output interface 17.

The at least one input interface 16 may convert sensory information received from a user into an electrical signal.

The at least one input interface 16 may include a power button, an operation button, a course selection dial (or a course selection button), and a washing/rinsing/dehydrating setting button. The at least one input interface 16 may include, for example, a tact switch, a push switch, a slide switch, a toggle switch, a micro switch, a touch switch, a touch pad, a touch screen, a jog dial and/or a microphone, etc.

The at least one output interface 17 may generate sensory information and transfer various data related to an operation of the washing machine 10 to a user.

For example, the at least one output interface 17 may transfer information related to a washing course and an operation time of the washing machine 10 or a washing setting/rinsing setting/dehydrating setting to a user. Information related to an operation of the washing machine 10 may be output through a screen, an indicator, a voice, etc. The at least one output interface 17 may include, for example, a LCD panel, a LED panel, a speaker, etc.

The driver 40 may include the driving motor 41 for providing a driving force for rotating the drum 30. The driver 40 may operate based on a control signal from the controller 90.

The water supply device 50 may include the water supply valve 56 for opening or closing the water supply tube 51 extending from the external water supply source to the detergent supply device 60 and/or the tub 20. The water supply valve 56 may be opened or closed based on a control signal from the controller 90.

The drain device 70 may include the drain pump 73 for discharging water stored in the tub 20 to the outside of the washing machine housing 11. The drain pump 73 may operate based on a control signal from the controller 90.

The sensor device 95 may include at least one sensor for obtaining information related to an operation state of the washing machine 10.

For example, the sensor device 95 may include at least one among a water level sensor for detecting a water level of the tub 20, a sensor for detecting an operation state of the driver 40, a flow sensor for detecting a rate of flow of water entering the tub 20 through the water supply device 50, or a sensor for detecting an operation state of the drain device 70.

The sensor for detecting the operation state of the driver 40 may include, for example, a current sensor for measuring driving current applied to the driving motor 41, although not limited thereto.

The sensor for detecting the operation state of the drain device 70 may include, for example, a current sensor for measuring driving current applied to the drain pump 73, although not limited thereto.

The washing machine 10 may include the communicator 96 for communicating with an external device (for example, a server, a user device, a home appliance and/or the filter apparatus 100) wiredly and/or wirelessly.

The communicator 96 may include at least one of a short-range wireless communication module or a long-distance wireless communication module.

The communicator 96 may transmit data to an external device or receive data from an external device. For example, the communicator 96 may establish communication with the filter apparatus 100, a server, a user device and/or another home appliance and transmit/receive various data to/from the filter apparatus 100, the server, the user device and/or the other home appliance.

For this, the communicator 96 may support establishment of a direct (for example, wired) communication channel or a wireless communication channel with an external device, and communications through an established communication channel. According to an embodiment of the disclosure, the communicator 96 may include a wireless communication module (for example, a cellular communication module, a short-range wireless communication module, or a global navigation satellite system (GNSS) communication module) or a wired communication module (for example, a local area network (LAN) communication module or a power line communication module). A corresponding communication module among the communication modules may communicate with an external electronic device through a first network (for example, a short-range wireless communication network, such as Bluetooth, wireless fidelity (WiFi) Direct, or Infrared data association (IrDA)) or a second network (for example, a long-distance wireless communication network, such as a legacy cellular network, a 5th Generation (5G) network, a next-generation communication network, the Internet, or a computer network (for example, a LAN or a wide area network (WAN)). The various kinds of communication modules may be integrated into a single component (for example, a single chip) or implemented with a plurality of separate components (for example, a plurality of chips).

The short-range wireless communication module may include a Bluetooth communication module, a Bluetooth Low Energy (BLE) communication module, a Near Field Communication (NFC) communication module, a Wireless Local Area Network (WLAN; WiFi) communication module, a Zigbee communication module, an IrDA communication module, a Wi-Fi Direct (WFD) communication module, a Ultrawideband (UWB) communication module, an Ant+ communication module, a microwave (uWave) communication module, etc., although not limited thereto.

The long-distance wireless communication module may include a communication module that performs various kinds of long-distance communications, and may include a mobile communicator. The mobile communicator may transmit/receive a wireless signal to/from at least one of a base station, an external terminal or a server on a mobile communication network.

According to an embodiment of the disclosure, the communicator 96 may communicate with an external device, such as a server, a user device, another home appliance, etc., through a surrounding Access Point (AP). The AP may connect a LAN to which the washing machine 10, the filter apparatus 100 and/or a user device is connected to a WAN to which a server is connected. The filter apparatus 100, the washing machine 10 and/or the user device may be connected to the server through the WAN.

The controller 90 may control various components (for example, the driver 40, the water supply device 50, and the drain device 70) of the washing machine 10. The controller 90 may control various components of the washing machine 10 to perform at least one operation including water supply, washing, rinsing, and/or dehydrating according to a user input. For example, the controller 90 may control the driving motor 41 of the driver 40 to adjust a rotation speed of the drum 30, control the water supply valve 56 of the water supply device 50 to supply water to the tub 20, or control the drain pump 73 of the drain device 70 to discharge water stored in the tub 20 to the outside.

The controller 90 may include hardware such as a central processing unit (CPU), Micom, or a memory, and software such as a control program. For example, the controller 90 may include at least one memory 92 that stores data in the form of an algorithm or program for controlling operations of components in the washing machine 10, and at least one processor 91 which performs the above-described operations and operations which will be described below by using the data stored in the at least one memory 92. The memory 92 and the processor 91 may be implemented with separate chips. The processor 91 may include one, two, or more processor chips or one, two, or more processing cores. The memory 92 may include one, two, or more memory chips or one, two, or more memory blocks. Also, the memory 92 and the processor 91 may be implemented with a single chip.

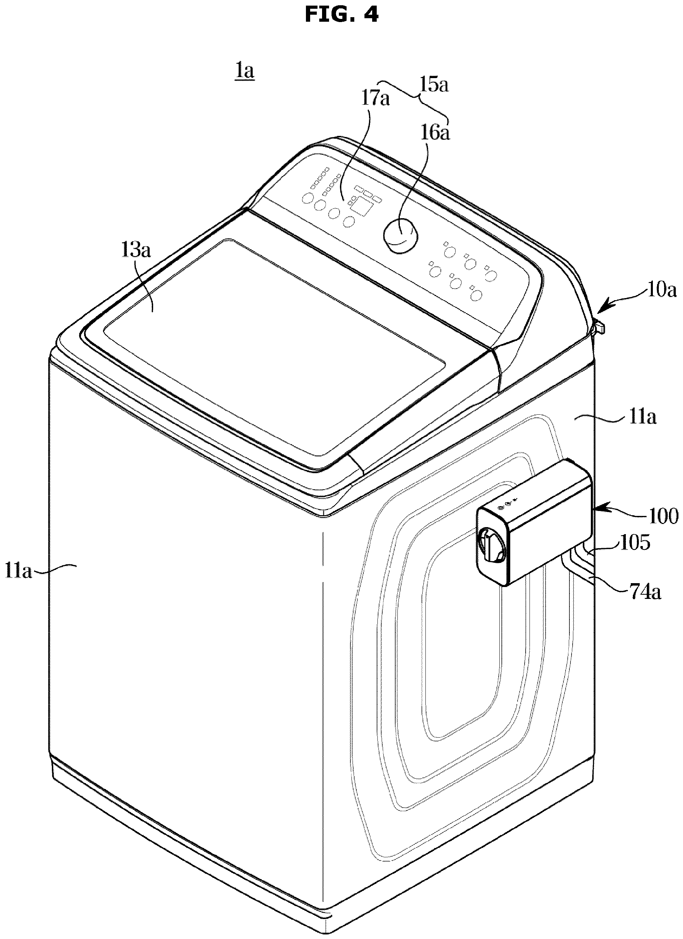

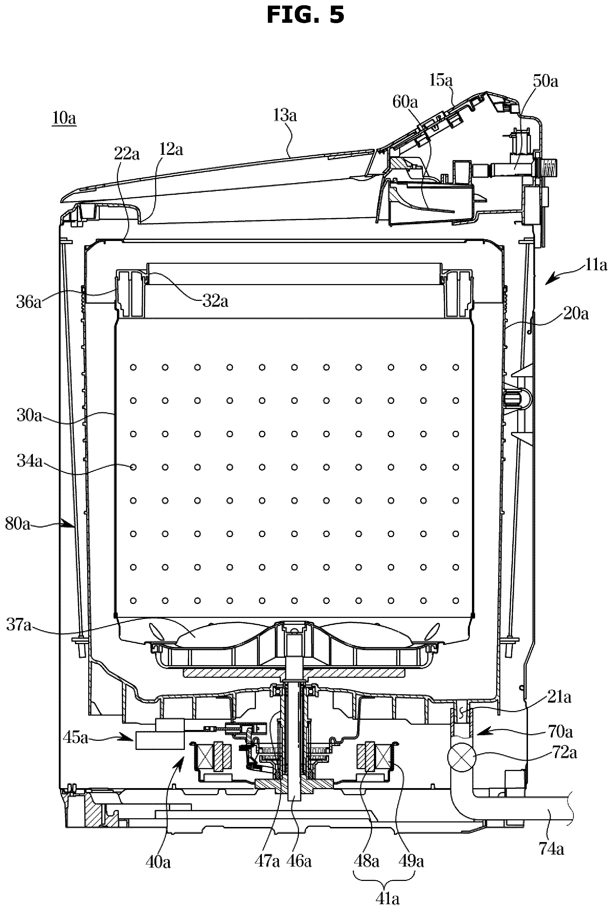

FIG. 4 shows a clothes treating apparatus according to an embodiment of the disclosure. FIG. 5 shows a cross section of the washing machine shown in FIG. 4.

As shown in FIGS. 4 and 5, a washing machine 10a as a clothes treating apparatus 1a may include a housing 11a for accommodating various components therein. The housing 11a may form an appearance of the washing machine 10a. The housing 11a may be in a shape of a box of which a portion opens.

The housing 11a may include a housing opening 12a formed to allow an access to inside of a drum 30a. The housing opening 12a may open substantially upward.

The washing machine 10a may include a door 13a for opening or closing the housing opening 12a provided in the housing 11a. The door 13a may be rotatably mounted on the housing 11a by a hinge. At least one portion of the door 13a may be transparent or translucent to show the inside of the housing 11a.

The washing machine 10a may include a tub 20a provided inside the housing 11a to store water. The tub 20a may be positioned inside the housing 11a. The tub 20a may include a tub opening 22a corresponding to the housing opening 12a. The tub opening 22a may open substantially upward. The tub 20a may be supported inside the housing 11a. The tub 20a may have a substantially cylindrical shape of which one side opens.

The tub 20a may be elastically supported from the housing 11a by a damper 80a. The damper 80a may connect the tub 20a to the housing 11a. While vibrations generated according to a rotation of the drum 30a are transferred to the tub 20a and/or the housing 11a, the damper 80a may absorb vibration energy between the tub 20a and the housing 11a to attenuate the vibrations.

The washing machine 10a may include a drum 30a accommodating laundry. The drum 30a may be rotatably provided inside the tub 20a. The drum 30a may perform washing, rinsing, and/or dehydrating while rotating inside the tub 20a. The drum 30a may include a through hole 34a connecting an inside space of the drum 30a to an inside space of the tub 20a. The drum 30a may have a substantially cylindrical shape of which one side opens.

On an upper portion of the drum 30a, a balancing unit 36a for releasing load imbalance caused by laundry may be installed. The balancing unit 36a may include a housing having a circular channel, and a mass body of a ball or fluid being movable inside the channel, and while the ball or fluid moves according to a rotation of the drum 30a, load imbalance of the drum 30a may be released.

A pulsator 37a may be rotatably provided on a lower portion of the drum 30a to generate water streams for washing. Laundry may be washed by water streams for washing generated by the pulsator 37a.

The drum 30a may include a drum opening 32a corresponding to the housing opening 12a and the tub opening 22a. Laundry may be put into or taken out of the drum 30a through the housing opening 12a, the tub opening 22a, and the drum opening 32a.

The washing machine 10a may include a washing machine driver 40a configured to rotate the drum 30a and the pulsator 37a. The washing machine driver 40a may include a driving motor 41a, and a shafting for transferring a driving force generated by the driving motor 41 to the drum 30a and the pulsator 37a.

The driving motor 41a may include a stator 48a fixed, and a rotor 49a rotating by electromagnetically interworking with the stator 48a.

The shafting may include a dehydrating shaft 47a for transferring a driving force of the driving motor 41a to the drum 30a, a washing shaft 46a for transferring a driving force of the driving motor 41a to the pulsator 37a, and a clutch device 45a connecting/disconnecting the driving motor 41a to/from the dehydrating shaft 47a.

The dehydrating shaft 47a may have a cavity, and the washing shaft 46a may be provided in the cavity of the dehydrating shaft 47a. The washing shaft 46a may be connected to the rotor 49a of the driving motor 46a, and the dehydrating shaft 47a may be connected to or disconnected from the rotor 49a of the driving motor 41a by the clutch device 45a.

While the clutch device 45a disconnects the dehydrating shaft 47a from the driving motor 41a, power may be transferred only to the washing shaft 46a, and only the pulsator 37a may rotate. While the clutch device 45a connects the dehydrating shaft 47a to the driving motor 41a, power may be transferred to both the dehydrating shaft 47a and the washing shaft 46a, and the drum 30a and the pulsator 37a may rotate simultaneously.

While only the pulsator 37a rotates, water streams for washing may be generated by the rotation of the pulsator 37a and laundry may rotate by the water streams for washing to rub against the drum 30a, thereby being washed. While the drum 30a and the pulsator 37a rotate simultaneously, laundry accommodated inside the drum 30a may rotate, water may be removed from the laundry by a centrifugal force, and thereby, the laundry may be dehydrated.

The washing machine 10a may include a water supply device 50a. The water supply device 50a may supply water to the tub 20a. The water supply device 50a may be positioned above the tub 20a. The water supply device 50a may include a water supply tube, and a water supply valve provided in the water supply tube. The water supply tube may be connected to an external water supply source. The water supply tube may extend from the external water supply source to a detergent supply device 60a and/or the tub 20a. Water may be supplied to the tub 20a via the detergent supply device 60a. Water may be supplied to the tub 20a not via the detergent supply device 60a.

The water supply valve may open or close the water supply tube in response to an electrical signal from the controller 90a. The water supply valve may allow or block supply of water from the external water supply source to the tub 20a. The water supply valve may include, for example, a solenoid valve that is opened or closed in response to an electrical signal.

The washing machine 10a may include the detergent supply device 60a configured to supply a detergent to the tub 20a. The detergent supply device 60a may supply a detergent to the inside of the tub 20a during a water supply process. Water supplied through the water supply tube may be mixed with a detergent via the detergent supply device 60a. The water mixed with the detergent may be supplied to the inside of the tub 20a. The detergent may include a conditioner for dryer, a deodorant, a sterilizer, or an air freshener, as well as a washing detergent.

The washing machine 10a may include a drain device 70a. The drain device 70a may be configured to discharge water accommodated in the tub 20a to the outside. In a lower portion of the tub 20a, a drain opening 21a for draining water stored in the tub 20a to the outside of the tub 20a may be formed. A drain hose 74a may be connected to the drain opening 21a, and a drain valve 72a for opening or closing the drain hose 74a may be provided in the drain hose 74a.

The washing machine 10a may provide a user interface 15a for interactions with a user.

The washing machine 10a may include at least one user interface 15a. The user interface 15a may include at least one input interface 16a and/or at least one output interface 17a.

The at least one input interface 16a may convert sensory information received from a user into an electrical signal.

The at least one input interface 16a may include a power button, an operation button, a course selection dial (or a course selection button), and a washing/rinsing/dehydrating setting button. The at least one input interface 16a may include, for example, a tact switch, a push switch, a slide switch, a toggle switch, a micro switch, a touch switch, a touch pad, a touch screen, a jog dial and/or a microphone, etc.

The at least one output interface 17a may transfer various data related to an operation of the washing machine 10a to the user by generating sensory information.

For example, the at least one output interface 17a may transfer information related to a washing course and an operation time of the washing machine 10a or a washing setting/rinsing setting/dehydrating setting to the user. Information related to an operation of the washing machine 10a may be output through a screen, an indicator, a voice, etc. The at least one output interface 17a may include, for example, a LCD panel, a LED panel, a speaker, etc.

The clothes treating apparatus 1a may include the same filter apparatus 100 as the filter apparatus 100 shown in FIGS. 1 and 2. For example, the filter apparatus 100 according to an embodiment of the disclosure may be connected to a front-loading washing machine or a top-loading washing machine. The filter apparatus 100 may be connectable to the drain device 70a of the washing machine 10a. The filter apparatus 100 may be positioned outside the washing machine 10a. The filter apparatus 100 may filter foreign materials from water discharged from the washing machine 10a. The filter apparatus 100 may filter foreign materials having smaller sizes than those of foreign materials that are filterable in the washing machine 10a. For example, the filter apparatus 100 may filter foreign materials having smaller sizes than those of foreign materials that are filterable in the drain device 70a of the washing machine 10a.

Components of the washing machine 10 shown in FIG. 3 may be applied to the washing machine 10a as the clothes treating apparatus 1a shown in FIGS. 4 and 5.

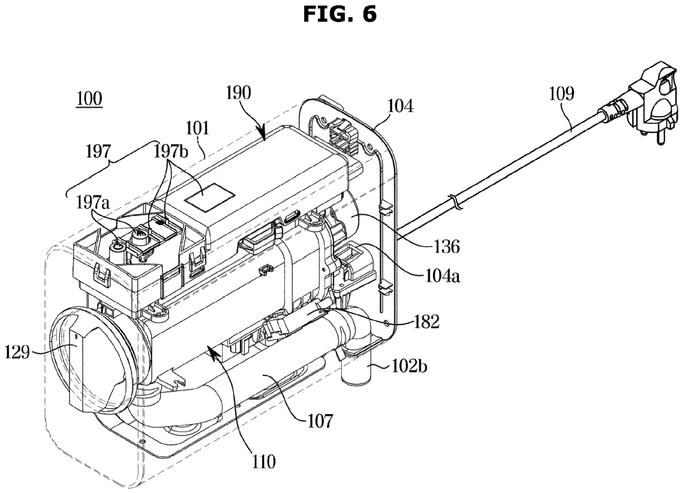

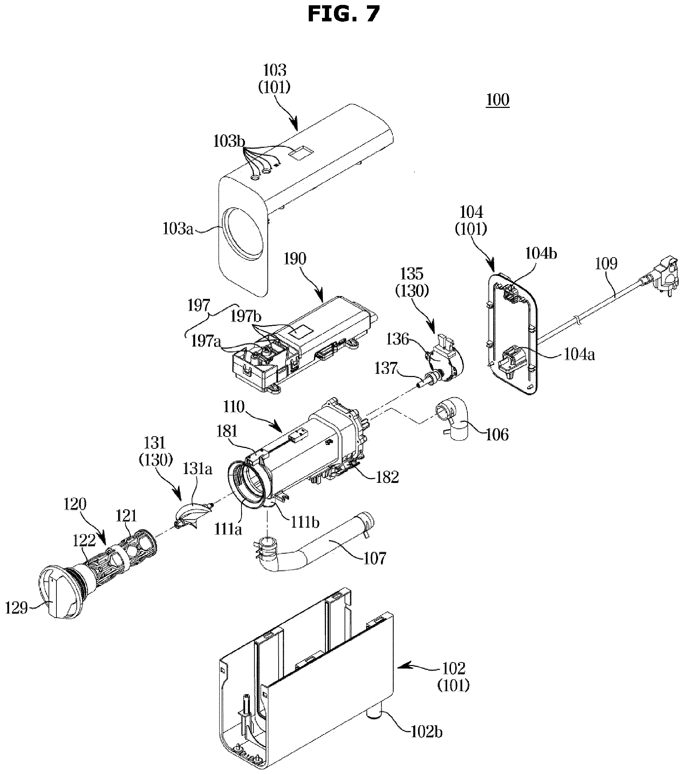

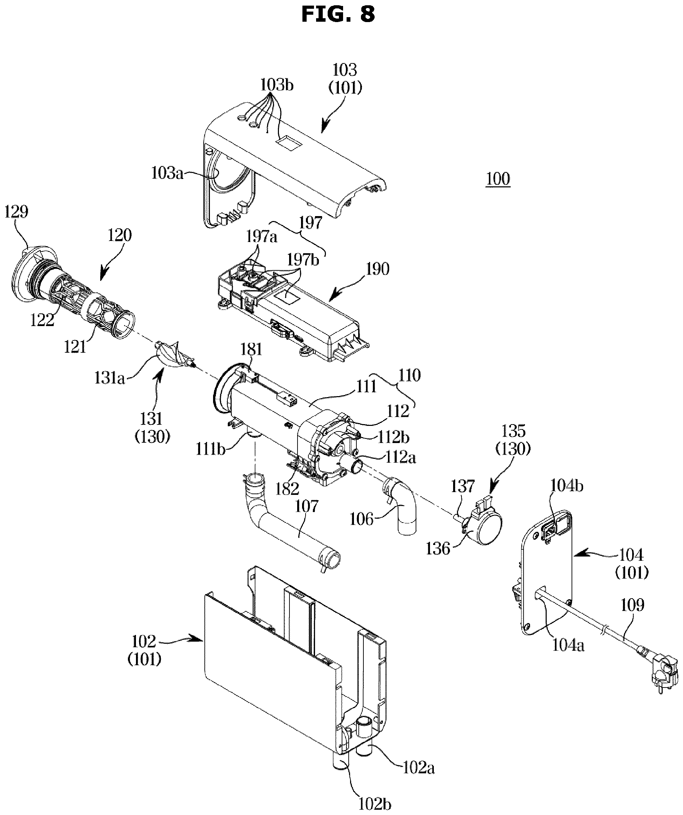

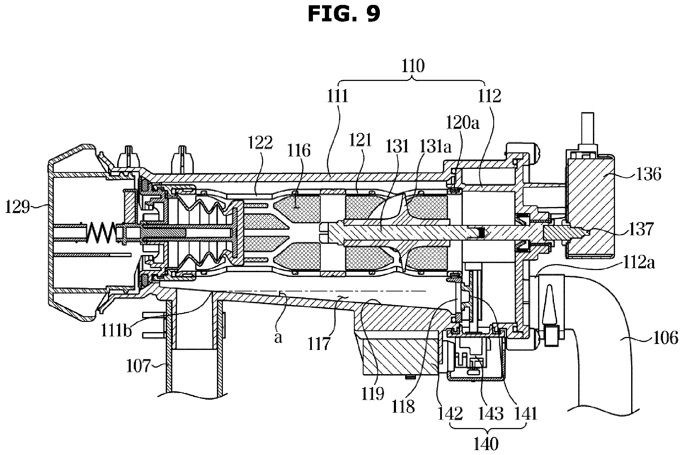

FIG. 6 shows inside of a filter apparatus shown in FIGS. 1 and 4. FIG. 7 is an exploded view of the filter apparatus shown in FIG. 6. FIG. 8 shows the filter apparatus shown in FIG. 7 in a direction that is different from a direction of FIG. 7. FIG. 9 shows cross sections of some components of the filter apparatus shown in FIG. 6.

Referring to FIGS. 6 to 8, the filter apparatus 100 according to an embodiment of the disclosure may include a filter housing 101 for accommodating various components. The filter housing 101 may include a housing body 102, a housing cover 103, and a housing bracket 104. For example, the housing body 102, the housing cover 103, and the housing bracket 104 may be separate components. For example, the housing body 102 and the housing cover 103 may be integrated into one body. For example, the housing body 102 and the housing bracket 104 may be integrated into one body. For example, the housing cover 103 and the housing bracket 104 may be integrated into one body. For example, the housing body 102, the housing cover 103, and the housing bracket 104 may be integrated into one body.

The housing body 102 may form a space for accommodating various components. A cross section of the housing body 102 being perpendicular to an extension direction of a filter 120 accommodated therein may be substantially in a shape of U. The housing body 102 may be in a shape of a box of which a front side, a rear side, and an upper side open. The housing body 102 may be detachably coupled to the housing cover 103 and/or the housing bracket 104.

The housing body 102 may include a housing inlet 102a through which water enters the filter apparatus 100, and a housing outlet 102b through which water entered the filter apparatus 100 is discharged from the filter apparatus 100. For example, the housing inlet 102a and/or the housing outlet 102b may be positioned in a lower portion of the housing body 102.

The housing inlet 102a may be connected to the drain hose 74 or 74a of the washing machine 10 or 10a. The housing outlet 102b may be connected to a drain line 105.

The housing cover 103 may cover the open front side and upper side of the housing body 102. The housing cover 103 may be detachably coupled to the housing body 102 and/or the housing bracket 104. The housing cover 103 may include a cover opening 103a to pass the filter 120 through. The housing cover 103 may include an installation portion 103b at which a user interface 197 is installed. At least one portion of the user interface 197 may be exposed to the outside of the filter apparatus 100 through the installation portion 103b.

The housing bracket 104 may cover the open rear side of the housing body 102. The housing bracket 104 may be detachably coupled to the housing body 102 and/or the housing cover 103. The housing bracket 104 may include a cable opening 104a to pass a power cable 109 through. The housing bracket 104 may include a connector installation portion 104b to which a connector 108 for communicating with an external device including the washing machine 10, etc. is connectable.

The filter apparatus 100 may include a filter case 110 positioned inside the filter housing 101. The filter case 110 may form a flow path through which water entered the filter apparatus 100 passes. The filter case 110 may accommodate the filter 120. For example, the filter case 110 may include a case body 111 and a case cover 112.

The case body 111 may extend along the extension direction of the filter 120 accommodated therein. The case body 111 may include a case opening 111a to pass the filter 120 through. The case opening 111a may correspond to the cover opening 103a. The case opening 111a may be positioned closer to a case outlet 111b than a case inlet 112a and pass the filter 120 through.

The case body 111 may include the case outlet 111b for discharging water entered the filter case 110 from the filter case 110. The case outlet 111b may be positioned in a lower portion of the case body 111. The case outlet 111b may be adjacent to the case opening 111a. The case outlet 111b may be close to another end of the filter 120, being opposite to one end of the filter 120 at which a filter opening 120a is positioned. The case outlet 111b may be closer to a second filter portion 122 of the filter 120 than a first filter portion 121 of the filter 120.

The case outlet 111b may be connected to the housing outlet 102b. The filter apparatus 100 may include a discharge guide 107 for connecting the case outlet 111b to the housing outlet 102b.

The case cover 112 may be detachably coupled to another end of the case body 111, being opposite to one end of the case body 111 at which the case opening 111a is positioned. For example, the case cover 112 may be integrated into the case body 111.

The case cover 112 may include the case inlet 112a through which water enters the filter case 110. The case inlet 112a may be connected to the housing inlet 102a. The filter apparatus 100 may include an inlet guide 106 for connecting the case inlet 112a to the housing inlet 102a. The case inlet 112a may include an inlet opening.

The case cover 112 may include a motor installation portion 112b for installing a filter cleaning device 130. The motor installation portion 112b may be positioned above the case inlet 112a. A cleaning motor 136 of the filter cleaning device 130 may be installed at the motor installation portion 112b.

The filter apparatus 100 may include the filter 120 that is detachably coupled to the filter case 110. The filter 120 may filter foreign materials having fine sizes. The filter 120 may filter microplastics having sizes of about 5 mm or less. The filter 120 may include a mesh filter. The filter 120 may include a mesh filter. The filter 120 may extend substantially between the case inlet 112a and the case outlet 111b.

The filter 120 may include the filter opening 120a that opens toward the case inlet 112a upon installation in the filter case 110. Water entered the filter case 110 through the case inlet 112a may move to the inside of the filter 120 through the filter opening 120a.

The filter 120 may include the first filter portion 121 and the second filter portion 122. The first filter portion 121 may be closer to the case inlet 112a than the second filter portion 122. Foreign materials of water entered the filter case 110 may be filtered in the first filter portion 121, or may pass through the first filter portion 121 without being filtered in the first filter portion 121 and then be filtered in the second filter portion 122. The first filter portion 121 and the second filter portion 122 may be positioned sequentially along the extension direction of the filter 120. Foreign materials transferred from the first filter portion 121 by the filter cleaning device 130 may be collected in the second filter portion 122.

The filter apparatus 100 may include a handle 129 of which at least one portion is exposed to outside of the filter housing 101 upon installation of the filter 120 in the filter case 110. The handle 129 may be detachably coupled to the filter 120. Because the handle 129 is detachably coupled to the filter 120, the filter 120 may be easily maintained and/or repaired. The handle 129 may be coupled to the cover opening 103a and/or the case opening 111a by rotating.

The filter apparatus 100 may include the filter cleaning device 130 for cleaning the filter 120. The filter cleaning device 130 may be installed in the filter case 110. The filter cleaning device 130 may include a cleaning member 131 for cleaning a surface of the filter 120 through which foreign materials are filtered, and a cleaning driver 135 for driving the cleaning member 131.

The cleaning member 131 may be positioned inside the filter 120. The cleaning member 131 may correspond to the first filter portion 121 of the filter 120. The cleaning member 131 may include a blade 131a extending in a spiral shape. The blade 131a may extend in a radial direction from a rotating shaft of the cleaning member 131. The cleaning member 131 may be in contact with the surface of the filter 120 through which foreign materials are filtered. The cleaning member 131 may be in contact with an inner surface of the filter 120. For example, the cleaning member 131 may include a plurality of brushes.

While the cleaning member 131 is driven by the cleaning driver 135, the cleaning member 131 may transfer foreign materials filtered in a portion of the filter 120 being close to the case inlet 112a to another portion of the filter 120 being close to the case outlet 111b of the filter 120. The cleaning member 131 may transfer foreign materials filtered in the first filter portion 121 to the second filter portion 122. For example, the cleaning member 131 may be rotatably provided inside the filter 120. The cleaning member 131 may include a flexible material. The cleaning member 131 may clean foreign materials filtered in the filter 120 while rotating in a state of being in contact with the filter 120. While the cleaning member 131 is driven in the state of being in contact with the filter 120, the cleaning member 131 may remove foreign materials attached on the surface of the filter 120 through which foreign materials are filtered, by raking out the foreign materials. For example, the cleaning member 131 may be slidable on the inner side of the filter 120.

The cleaning member 131 may transfer foreign materials filtered in the first filter portion 121 to the second filter portion 122, and while water entered the filter case 110 flows from the first filter portion 121 to the second filter portion 122, the foreign materials filtered in the first filter portion 121 may be efficiently collected in the second filter portion 122.

The cleaning driver 135 may include the cleaning motor 136 and a motor shaft 137. The cleaning motor 136 may generate power for driving the cleaning member 131. The motor shaft 137 may be connected to the cleaning member 131. The cleaning motor 136 may be installed in the filter case 110. The cleaning motor 136 may be closer to the case inlet 112a than the case outlet 111b.

The filter apparatus 100 may include a circuitry module 190 positioned inside the filter housing 101. The circuitry module 190 may be positioned at an upper end area inside the filter housing 101. The circuitry module 190 may be positioned to one side of the filter case 110. For example, the circuitry module 190 may be positioned above the filter case 110. For example, the circuitry module 190 may be positioned above the filter 120.

As another example, the circuitry module 190 may be positioned in a lower side, a left side, a right side, a front side and/or a rear side of the filter case 110.

In the circuitry module 190, a controller 191 for controlling the filter apparatus 100 and a communicator 199 for communicating with the washing machine 10 or 10a may be provided.

The filter apparatus 100 may include the user interface 197 positioned on the circuitry module 190. At least one portion of the user interface 197 may be exposed to the outside of the filter apparatus 100 through the installation portion 103b of the filter housing 101. The user interface 197 may be positioned on an upper surface of the filter apparatus 100. The user interface 197 may include at least one input interface 197a and at least one output interface 197b. According to various embodiments of the disclosure, the user interface 197 may be provided on an upper side, a lower side, a left side, a right side, a front side and/or a rear side of the filter housing 101.

The at least one input interface 197a may convert sensory information received from a user into an electrical signal.

The at least one input interface 197a may include a power button, an operation button and/or a communication button. The at least one input interface 16 may include, for example, a tact switch, a push switch, a slide switch, a toggle switch, a micro switch, a touch switch, a touch pad, a touch screen, a jog dial and/or a microphone, etc.

According to various embodiments of the disclosure, the power button may be a button for supplying power to the filter apparatus 100, the operation button may be a button for operating the filter cleaning device 130, and the communication button may be a button for switching a state of the filter apparatus 100 to a state of communicating with an external device (for example, a washing machine, a user device, a home appliance, etc.).

The at least one output interface 197b may generate sensory information and transfer various data related to an operation and/or state of the washing machine 10 to a user.

For example, the at least one output interface 197b may transfer, to a user, information related to whether water enters the filter apparatus 100, a clogged state of the filter 120, a state of at least one sensor provided in the filter apparatus 100, and an operation state of the filter cleaning device 130.

Various information about an operation and/or state of the filter apparatus 100 may be output through a screen, an indicator, a voice, etc. The at least one output interface 197b may include, for example, a LCD panel, a LED panel, a LED module, a speaker, etc.

The output interface 197b may be positioned on the upper surface of the filter apparatus 100. However, a location of the output interface 197b is not limited to this, and the output interface 197b may be provided on a front surface, a side surface or a rear surface of the filter apparatus 100.

According to various embodiments of the disclosure, the at least one input interface 197a and the at least one output interface 197b may be provided on different surfaces of the filter housing 101. For example, the at least one input interface 197a may be provided on an upper surface of the filter housing 101, and the output interface 197b may be provided on a front surface of the filter housing 101.

According to an embodiment of the disclosure, a user may check various information about an operation and/or state of the filter apparatus 100 through the output interface 197b in front of the filter apparatus 100 without having to approach the filter apparatus 100. Also, according to the disclosure, the user may easily input various commands through the at least one input interface 197a provided in the upper side of the filter apparatus 100 without having to lower his/her body.

The filter apparatus 100 may include a filter sensor 181 for obtaining information about a state of the filter 120. The filter sensor 181 may be installed on the filter case 110. The filter sensor 181 may be positioned on an outer side of the filter case 110. The filter sensor 181 may be positioned to correspond to the second filter portion 122 of the filter 120 installed in the filter case 110. For example, the filter sensor 150 may include a magnetic sensor, an optical sensor (for example, an infrared sensor) and/or an ultrasonic sensor.

The filter sensor 181 may detect an amount of foreign materials collected in the filter 120.

The filter apparatus 100 may include a water supply sensor 182 for detecting water entered the filter apparatus 100. The water supply sensor 182 may detect water received through the case inlet 112a.

The water supply sensor 182 may be installed on a lower portion of the filter case 110. The water supply sensor 182 may be positioned close to the case inlet 112a of the filter case 110. According to various embodiments of the disclosure, the water supply sensor 182 may be provided on an inner side of the case inlet 112a. For example, the water supply sensor 182 may include a capacitive sensor and/or a flow sensor.

Referring to FIG. 9, the filter case 110 may include a remaining water guide 119 for guiding remaining water existing in the filter case 110. The remaining water guide 119 may be positioned below the filter 120 in a direction of gravity. For example, the remaining water guide 119 may be inclined downward toward the case inlet 112a from the case outlet 111b. The remaining water guide 119 may be inclined with a preset angle g with respect to a direction that is perpendicular to the direction of gravity. The remaining water guide 119 may prevent water remaining in the filter case 110 from being discharged to the outside of the filter apparatus 100 through the case outlet 111b.

A location of a lower end of an entrance of the case outlet 111b in the direction of gravity may be higher than a location of a lower end of the case inlet 112a in the direction of gravity. Remaining water existing in the filter case 110 may move from around the case outlet 111b toward the case inlet 112a by gravity. For example, a bottom of the filter case 110 between the entrance of the case outlet 111b and the case inlet 112a may include a step portion.

The case inlet 112a may be positioned below the filter 120. An uppermost end of the case inlet 112a in the direction of gravity may be positioned below an uppermost end of the filter 120 in the direction of gravity. A lowest end of the case inlet 112a in the direction of gravity may be positioned below a lowest end of the filter 120 in the direction of gravity. The entrance of the case outlet 111b may be positioned below the filter 120.

The filter case 110 may include a connecting opening 118. The connecting opening 118 may be positioned at one end of the remaining water guide 119, which is close to the case inlet 112a. The connecting opening 118 may be formed in the filter case 110 to discharge water guided by the remaining water guide 119 toward the case inlet 112a.

The filter apparatus 100 may include a closing and opening device 140 for opening or closing the connecting opening 118. The closing and opening device 140 may include a connecting door 141 and a door motor 142 for operating the connecting door 141.

The connecting door 141 may open or close the connecting opening 118. The connecting door 141 may have a size and/or shape capable of closing the connecting opening 118. The connecting door 141 may be rotatably coupled to the filter case 110. The connecting door 141 may be rotatable in a direction in which water flows from the remaining water guide 119 to the case inlet 112a. The connecting door 141 may be rotatable in an opposite direction of a direction in which water received through the case inlet 112a flows to the connecting opening 118. The connecting door 141 may prevent the connecting opening 118 from opening by pressure of water received through the case inlet 112a.

The door motor 142 may generate power for operating the connecting door 141. The closing and opening device 140 may include a power transfer device 143 for transferring power generated in the door motor 142 to the connecting door 141. Power generated in the door motor 142 may be transferred to the connecting door 141 through the power transfer device 143.

Inside the filter case 110, a filtering flow path 116 passing through the filter 120 and a bypass flow path 117 bypassing the filter 120 may be formed. Water received through the case inlet 112a may move to the case outlet 111b through the filtering flow path 116 or the bypass flow path 117.

The connecting opening 119 may be positioned at one end of the bypass flow path 117, which is close to the case inlet 112. While the connecting door 141 opens the connecting opening 118, water received through the case inlet 112a may move directly to the bypass flow path 117 without passing through the filtering flow path 116. While the connecting door 141 opens the connecting opening 118, water of the bypass flow path 117 may move directly to the case inlet 112 without passing through the filter flow path 116. The connecting opening 118 may enable water of the bypass flow path 117 to move to the case inlet 112a or water entered the case inlet 112a to move to the bypass flow path 117.

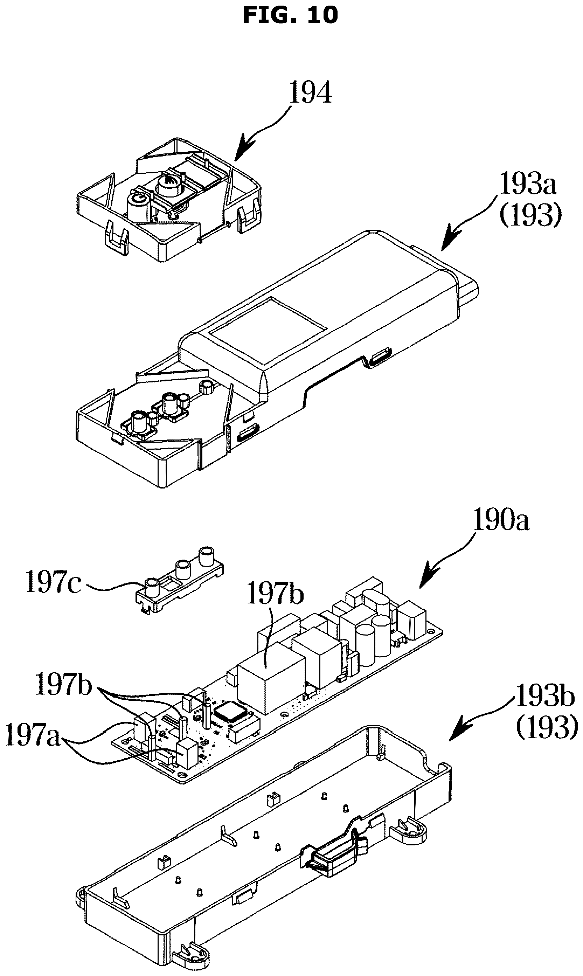

FIG. 10 is an exploded view of a circuitry module of a filter apparatus according to an embodiment of the disclosure.

Referring to FIG. 10, the circuitry module 190 may include a circuitry 190a, a circuitry case 193 accommodating the circuitry 190a therein, and an interface cover 194 coupled to the circuitry case 193 such that at least one component coupled to the circuitry 190a is exposed to outside of the circuitry case 193.

The interface cover 194 may include at least one opening to expose the user interface 197 electrically connected to the circuitry 190a to the outside of the circuitry case 193.

For example, the input interface 197a may be exposed to the outside of the circuitry case 193 by the interface cover 194 and exposed to the outside of the filter apparatus 100 by the installation portion 103b of the filter housing 101.

For example, the output interface 197b may be exposed to the outside of the circuitry case 193 by the interface cover 194 and exposed to the outside of the filter apparatus 100 by the installation portion 103b of the filter housing 101.

The circuitry case 193 may be provided on the upper side of the filter case 110. Accordingly, the circuitry 190a may be provided on the upper side of the filter case 110.

The circuitry case 193 may include an upper case 193a and a lower case 193b.

Because the circuitry 190a is provided on the upper side of the filter case 110, the circuitry 190a may be prevented from being damaged by water discharged from the filter case 110.

The circuitry case 193 (193a and 193b) may include an installation portion (for example, an opening) for enabling an electrical component (for example, the cleaning driver 135, the at least one sensor 181 and 182, or the power cable 109) of the filter apparatus 100 to be connectable to the circuitry 190a.

For example, the lower case 193b may include at least one opening for enabling the at least one sensor 181 and 182 to be electrically connectable to the circuitry 190a.

As another example, the lower case 193b may include at least one opening for enabling the cleaning driver 135 to be electrically connectable to the circuitry 190a.

As another example, the lower case 193b may include at least one opening for enabling the power cable 109 to be electrically connectable to the circuitry 190a.

According to various embodiments of the disclosure, the upper case 193a may include at least one opening to expose the user interface 197 to the outside of the filter housing 101.

For example, the upper case 193a may include at least one opening to expose the output interface 197b to the outside of the filter housing 101.

As another example, the upper case 193a may include at least one opening to expose the input interface 197a to the outside of the filter housing 101.

According to an embodiment of the disclosure, the output interface 197b may be covered by a bracket 197c.

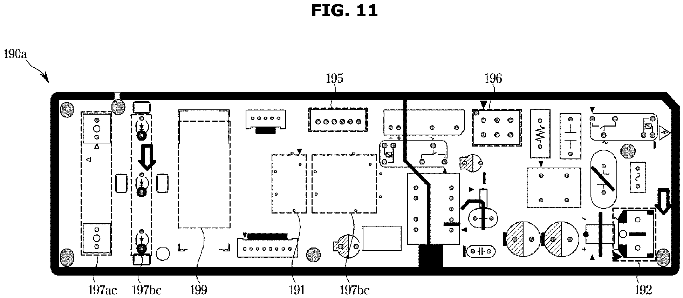

FIG. 11 shows a circuitry of a filter apparatus according to an embodiment of the disclosure.

Referring to FIG. 11, the circuitry 190a according to an embodiment of the disclosure may include a power supply 192 for receiving power, the controller 191 for controlling operations of the filter device 100, a sensor connector 195 to which the at least one sensor 181 and 182 may be coupled, a motor connector 196 to which the cleaning motor 136 may be coupled, an input connector 197ac to which the input interface 197a may be coupled, an output connector 197bc to which the output interface 197b may be coupled, and the communicator 199.

The power supply 192 may be connected to an external power source to supply power to the circuitry 190a.

According to an embodiment of the disclosure, the power supply 192 may receive power from the external power source through the power cable 109 (see FIG. 8).

According to various embodiments of the disclosure, the filter apparatus 100 may further include a battery (not shown), and the power supply 192 may receive power from the battery.

In the filter apparatus 100 including a battery, the battery may be provided on the rear side of the filter case 110. Also, in the filter apparatus 100 including the battery, the power cable 109 may be omitted, and a port for charging the battery may be exposed to the outside of the filter housing 101. The port for charging the battery may be provided in the housing bracket 104.

However, an example in which the power supply 192 receives power is not limited to the above-described example. For example, in a case in which the filter apparatus 100 includes a coil for receiving power, the power supply 192 may receive power from a coil for transmitting power through the coil for receiving power.

According to various embodiments of the disclosure, the washing machine 10 according to an embodiment of the disclosure may include a coil for transmitting power, and in a case in which the filter apparatus 100 is installed at a location corresponding to the coil for transmitting power, included in the washing machine 10, the filter apparatus 100 may receive power from the coil for transmitting power, included in the washing machine 10.

The controller 191 may control various components (for example, the user interface 197, the cleaning motor 136, and the communicator 199) of the filter apparatus 100. For example, the controller 191 may control the communicator 199 to establish communication with an external device, control the output interface 197b to output certain information, or control the cleaning motor 136 to perform a cleaning operation.

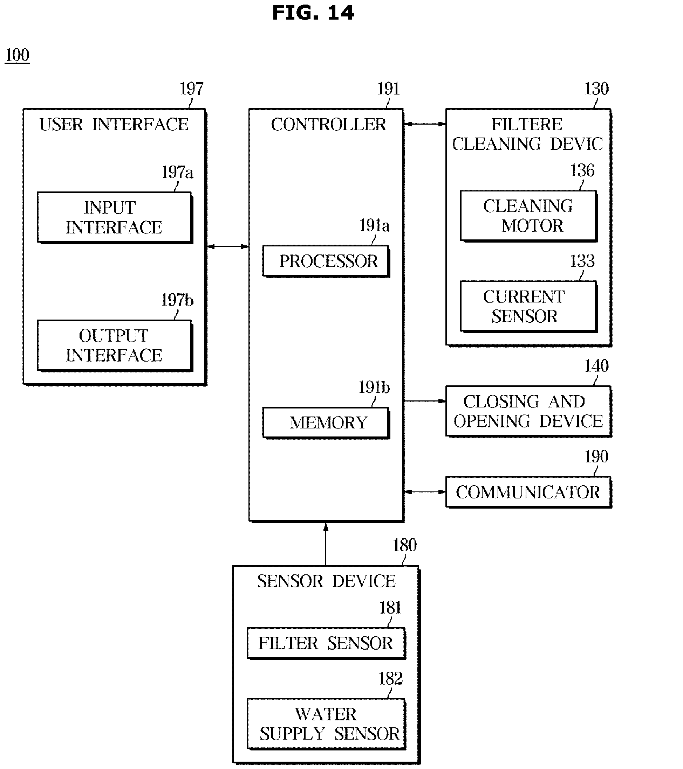

The controller 191 may include hardware, such as a CPU, Micom or a memory, and software such as a control program. For example, the controller 191 may include at least one memory 191b (see FIG. 14) that stores data in the form of an algorithm or program for controlling operations of components in the filter apparatus 100, and at least one processor 191a (see FIG. 14) which performs the above-described operations and operations which will be described below by using the data stored in the at least one memory 191b. The memory 191b and the processor 191a may be implemented with separate chips. The processor 191a may include one, two, or more processor chips or one, two, or more processing cores. The memory 191b may include one, two, or more memory chips or one, two, or more memory blocks. Also, the memory 191b and the processor 191a may be implemented with a single chip.

The sensor connector 195 may be connected to the at least one sensor 181 and 182 of the filter apparatus 100 to receive a sensor signal detected by the at least one sensor 181 and 182.

The sensor signal received through the sensor connector 195 may be transferred to the controller 191.

For example, the sensor connector 195 may receive a sensor signal detected by the filter sensor 181. The filter sensor 181 may output a filter clogging signal in response to an identification that an amount of foreign materials collected in the filter 120 is more than a preset amount.

The controller 191 may receive the filter clogging signal output from the filter sensor 181 through the sensor connector 195.

According to an embodiment of the disclosure, the filter sensor 181 may transfer data about an amount of foreign materials collected in the filter 120 to the controller 191 through the sensor connector 195.

The controller 191 may receive the data about the amount of foreign materials collected in the filter 120 from the filter sensor 181 through the sensor connector 195, and identify the amount of foreign materials collected in the filter 120 based on a result of processing on the data. The controller 191 may detect clogging of the filter 120 in response to an identification that the amount of foreign materials collected in the filter 120 is more than the preset amount.

As another example, the sensor connector 195 may receive a sensor signal detected by the water supply sensor 182. The water supply sensor 182 may output a drainage sensing signal in response to a detection of reception of water through the case inlet 112a.

The controller 191 may receive the drainage sensing signal from the water supply sensor 182 through the sensor connector 195.

The motor connector 196 may be connected to the cleaning motor 136 of the filter cleaning device 130 to transfer an electrical signal to the cleaning motor 136.

The controller 191 may control the cleaning motor 136 connected to the motor connector 196.

According to various embodiments of the disclosure, the circuitry 190a may further include a current sensor 133 (see FIG. 14) for measuring driving current that is applied to the cleaning motor 136 through the motor connector 196.

The controller 191 may identify a load of the cleaning motor 136 in response to a result of processing on data about driving current that is applied to the cleaning motor 136.

The controller 191 may detect clogging of the filter 120 based on the load of the cleaning motor 136. For example, the controller 191 may detect clogging of the filter 120 in response to an identification that a load of the cleaning motor 136 is greater than or equal to a preset load value for a preset time while the cleaning motor 136 operates.

That is, the controller 191 may detect clogging of the filter 120 in response to an identification that a value of driving current that is applied to the cleaning motor 136 is greater than or equal to a reference value for the preset time.

The input connector 197ac may be connected to the input interface 197a (for example, a button) to receive an input signal generated by a control of the input interface 197a.

For example, the input connector 197ac may be electrically connected to the power button, the operation button, and/or the communication button.

An input signal received through the input connector 197ac may be transferred to the controller 191.

For example, a power signal generated in response to pressing of the power button may be transferred to the controller 191. The controller 191 may supply power supplied from the power supply 192 to various components of the circuitry 190a in response to reception of the power signal.

For example, an operation signal generated in response to pressing of the operation button may be transferred to the controller 191. The controller 191 may drive the cleaning motor 136 in response to reception of the operation signal.

For example, a communication signal generated in response to pressing of the communication button may be transferred to the controller 191. The controller 191 may activate the communicator 199 in response to reception of the communication signal.

The output connector 197bc may be connected to the output interface 197b to transfer a control signal to the output interface 197b.

The controller 191 may transmit the control signal to the output interface 197b through the output connector 197bc to control the output interface 197b to output visualized information.

The communicator 199 may include at least one of a short-range wireless communication module or a long-distance wireless communication module.

The communicator 199 may transmit data to an external device (for example, the washing machine 10, the server 2, the user device 3 and/or another home appliance) or receive data from an external device. For example, the communicator 199 may establish communication with the washing machine 10, the server 2, the user device 2 and/or the other home appliance and transmit/receive various data to/from the washing machine 10, the server 2, the user device 2 and/or the other home appliance.

For this, the communication module 199 may support establishment of a direct (for example, wired) communication channel or a wireless communication channel with an external device, and communications through an established communication channel. According to an embodiment of the disclosure, the communicator 199 may include a wireless communication module (for example, a cellular communication module, a short-range wireless communication module, or a GNSS communication module) or a wired communication module (for example, a LAN communication module or a power line communication module). A corresponding communication module among the communication modules may communicate with an external device through the first network (for example, a short-range wireless communication network, such as Bluetooth, WiFi Direct, or IrDA) or the second network (for example, a long-distance wireless communication network, such as a legacy cellular network, a 5G network, a next-generation communication network, the Internet, or a computer network (for example, LAN or WAN)). The various kinds of communication modules may be integrated into a single component (for example, a single chip) or implemented with a plurality of separate components (for example, a plurality of chips).

The short-range wireless communication module may include a Bluetooth communication module, a BLE communication module, a NFC communication module, a WLAN (WiFi) communication module, a Zigbee communication module, an IrDA communication module, a WFD communication module, a UWB communication module, an Ant+ communication module, a uWave communication module, etc., although not limited thereto.

The long-distance wireless communication module may include a communication module that performs various kinds of long-distance communications, and may include a mobile communicator. The mobile communicator may transmit/receive a wireless signal to/from at least one of a base station, an external terminal, or the server 2 on a mobile communication network.

According to an embodiment of the disclosure, the communicator 199 may communicate with an external device, such as the server, the user device 3, another home appliance, etc., through a surrounding AP. The AP may connect a LAN to which the filter apparatus 100, the washing machine 10 and/or the user device 3 is connected to a WAN to which the server 2 is connected. The filter apparatus 100, the washing machine 10 and/or the user device 3 may be connected to the server 2 through the WAN.

According to the disclosure, the filter apparatus 100 provided outside the washing machine housing 11 and connected to the drain device 70 of the washing machine 10 may perform various operations by including the circuitry 190a.

Also, according to the disclosure, the filter apparatus 100 may transmit/receive various information to/from an external device through the communicator 199.

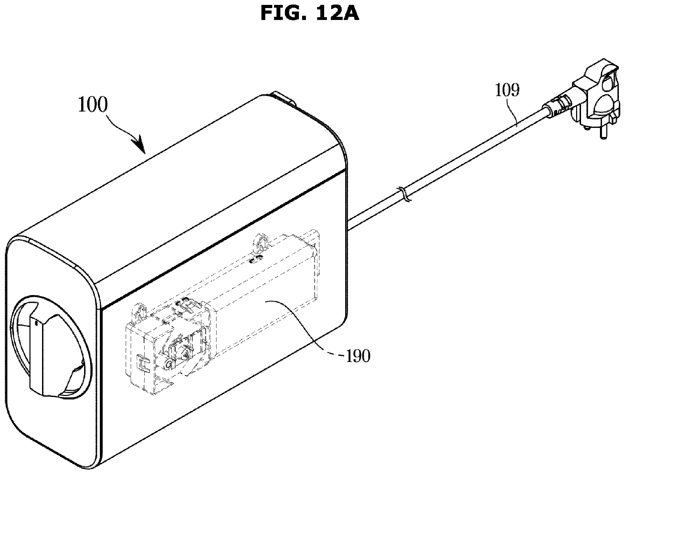

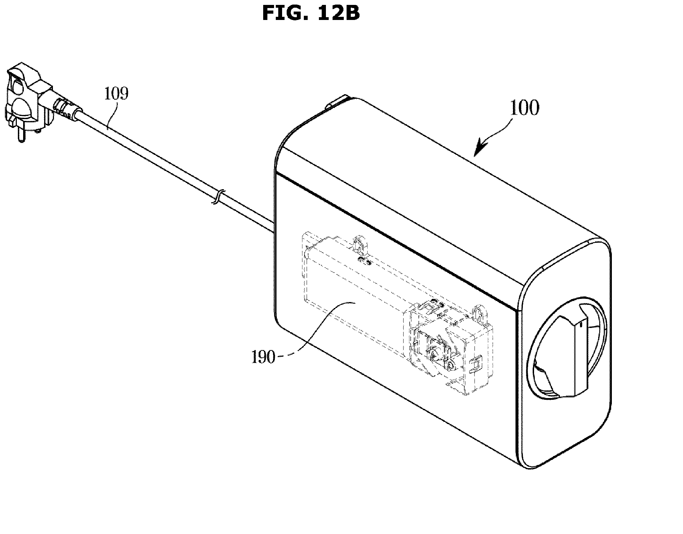

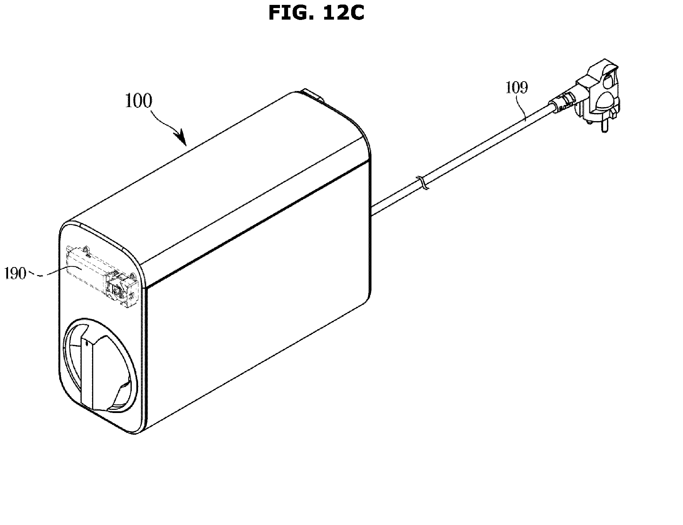

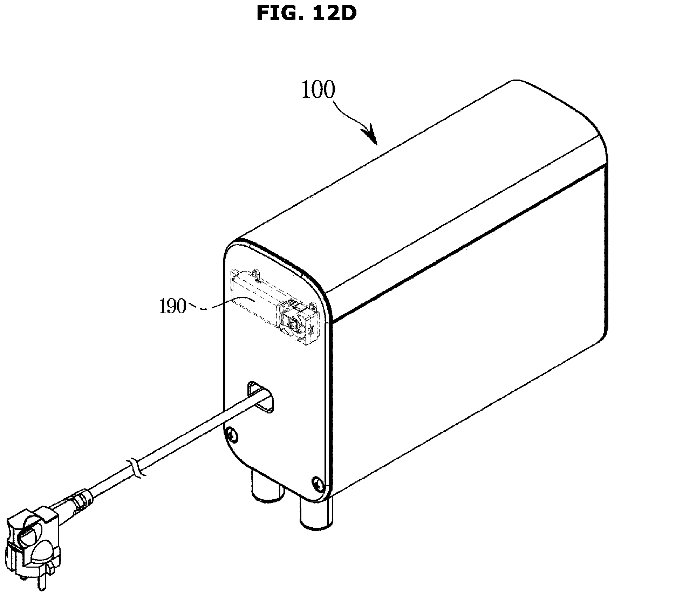

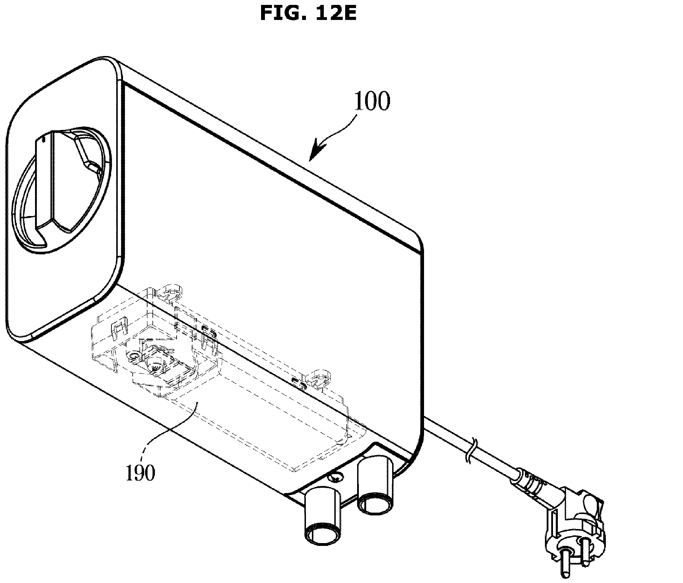

FIGS. 12A, 12B, 12C, 12D, and 12E show examples of various locations of a circuitry module according to an embodiment of the disclosure.

The circuitry module 190 according to an embodiment of the disclosure may be provided between the filter housing 101 and the filter case 110.

Referring to FIG. 12A, the circuitry module 190 according to an embodiment of the disclosure may be positioned in the left side of the filter case 110. Accordingly, the circuitry module 190 may be positioned to a left side of the filter 120.

According to an embodiment of the disclosure, because the circuitry module 190 is positioned in the left side of the filter case 110, the user interface 197 may be positioned in the left side of the filter housing 101.

The left side of the filter housing 101 may include an installation portion (for example, an opening) corresponding to the user interface 197.

According to the disclosure, a right surface of the filter apparatus 100 may be in contact with the washing machine 10, and in this case, a user may easily control the user interface 197 or check information provided from the user interface 197.

Referring to FIG. 12B, the circuitry module 190 according to an embodiment of the disclosure may be positioned in the right side of the filter case 110. Accordingly, the circuitry module 190 may be positioned to a right side of the filter 120.

According to an embodiment of the disclosure, because the circuitry module 190 is positioned in the right side of the filter case 110, the user interface 197 may be positioned in the right side of the filter housing 101.

The right side of the filter housing 101 may include an installation portion corresponding to the user interface 197.

According to the disclosure, a left surface of the filter apparatus 100 may be in contact with the washing machine 10, and in this case, a user may easily control the user interface 197 or check information provided from the user interface 197.

Referring to FIG. 12C, the circuitry module 190 according to an embodiment of the disclosure may be positioned in the front side of the filter case 110. Accordingly, the circuitry module 190 may be positioned to a front side of the filter 120.

According to various embodiments of the disclosure, because the circuitry module 190 is positioned in the front side of the filter case 110, the user interface device 197 may be provided in the front side of the filter housing 101.

According to various embodiments of the disclosure, because the circuitry module 190 is positioned in the front side of the filter case 110, the cover opening 103a for passing the filter 120 through may be positioned at a lower location than that shown in FIGS. 6 to 8.

The front side of the filter housing 101 may include an installation portion corresponding to the user interface 197.

According to the disclosure, the left or right surface of the filter apparatus 100 may be in contact with the washing machine 10, and in this case, a user may easily control the user interface 197 or check information provided from the user interface 197.

Referring to FIG. 12D, the circuitry module 190 according to an embodiment of the disclosure may be positioned in the rear side of the filter case 110. Accordingly, the circuitry module 190 may be positioned to a rear side of the filter 120.

According to an embodiment of the disclosure, because the circuitry module 190 is positioned in the rear side of the filter case 110, the user interface 197 may be provided in the rear side of the filter housing 101.

The rear side of the filter housing 101 may include an installation portion corresponding to the user interface 197.

According to the disclosure, because the circuitry module 190 is provided adjacent to the cleaning driver 135, an electrical connection between the circuitry module 190 and the cleaning driver 135 may be easy.

Referring to FIG. 12E, the circuitry module 190 according to an embodiment of the disclosure may be positioned in the lower side of the filter case 110. Accordingly, the circuitry module 190 may be positioned to a lower side of the filter 120.

According to an embodiment of the disclosure, because the circuitry module 190 is positioned in the lower side of the filter case 110, the user interface 197 may be provided in the lower side of the filter housing 101.

The lower side of the filter housing 101 may include an installation portion corresponding to the user interface 197.

According to the disclosure, an appearance of the input interface 197a is not shown to users, resulting in a simpler appearance of the filter apparatus 100.

According to various embodiments of the disclosure, a location of the circuitry module 190 is not limited to those shown in FIGS. 6 to 8 and FIGS. 12A to 12E.

Also, according to various embodiments of the disclosure, a plurality of circuitry modules 190 may be provided, and each of the plurality of circuitry modules 190 may be provided at any one of locations described above with reference to FIGS. 6 to 8 and FIGS. 12A to 12E.

For example, the circuitry module 190 may include a first circuitry module that is electrically connectable to the input interface 197a and/or the output interface 197b, and a second circuitry module that is electrically connectable to the output interface 197b, wherein the first circuitry module may be provided in the upper side of the filter case 110 and the second circuitry module may be provided in the front side of the filter case 110.

According to the disclosure, by enabling the circuitry module 190 to be positioned at various locations, a degree of freedom of arrangement of electrical components of the filter apparatus 100 may be improved.

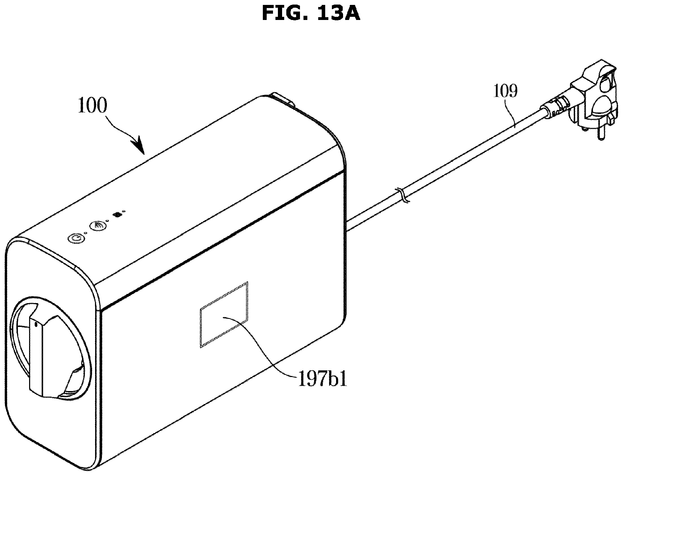

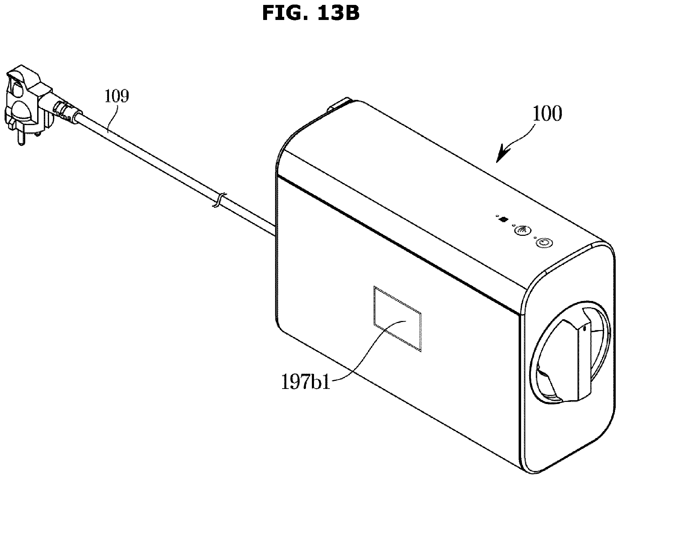

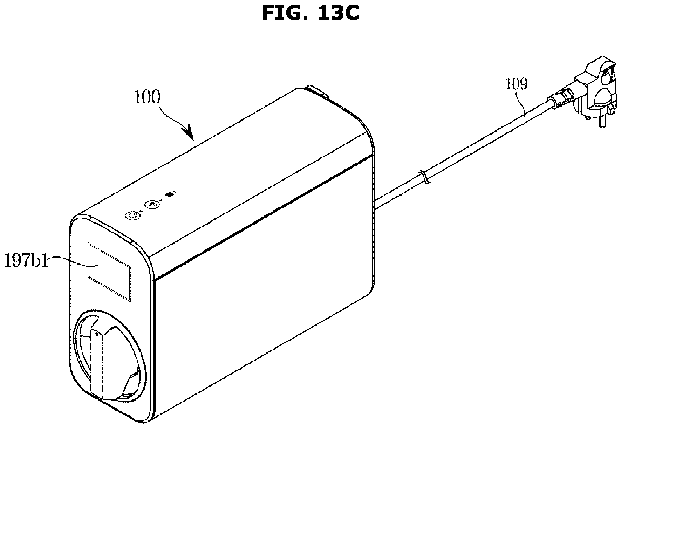

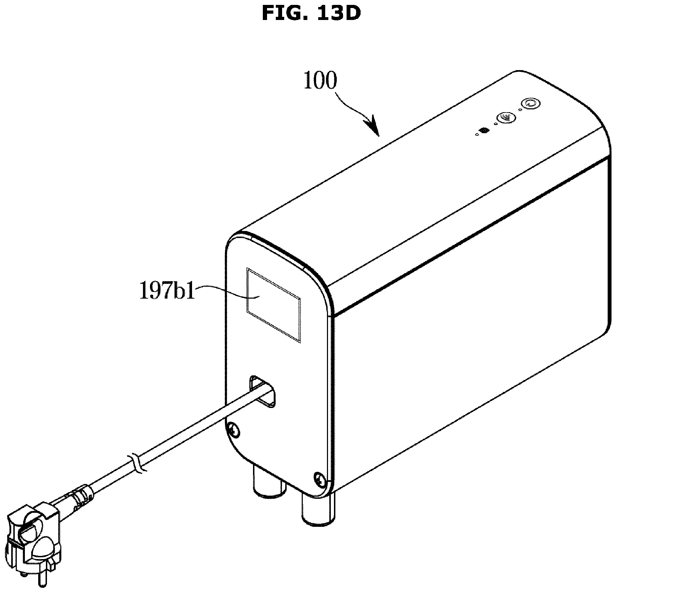

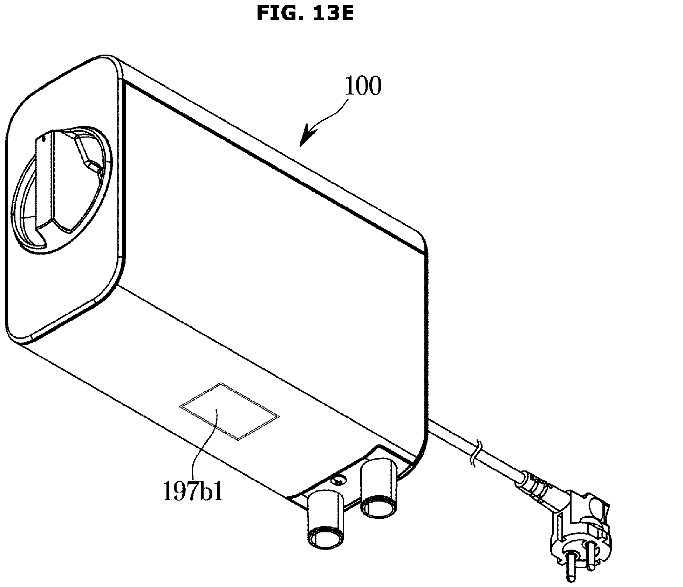

FIGS. 13A, 13B, 13C, 13D, and 13E show examples of various locations of a display panel of a filter apparatus according to an embodiment of the disclosure.

The output interface 197b may include a LCD panel, a LED panel, and a LED module.

According to an embodiment of the disclosure, the output interface 197b may include a display panel and/or at least one indicator.

According to various embodiments of the disclosure, the display panel and the at least one indicator included in the output interface 197b may be provided on the same surface of the filter housing 101 or different surfaces of the filter housing 101.

Referring to FIGS. 13A, according to an embodiment of the disclosure, a display panel 197b1 may be provided on the left surface of the filter apparatus 100. The display panel 197b1 may be provided on the left surface of the filter housing 101.

For this, the circuitry module 190 may also be provided in the left side of the filter case 110, although not limited thereto. However, the circuitry module 190 is not installed at any location as long as the circuitry module 190 is electrically connectable to the display panel 197b1.

The display panel 197b1 may be provided on the left surface of the filter apparatus 100 to output information about a state of the filter apparatus 100.

According to the disclosure, the right surface of the filter apparatus 100 may be in contact with the washing machine 10, and in this case, a user may recognize various information by checking the left surface of the filter apparatus 100.

Referring to FIG. 13B, according to an embodiment, the display panel 197b1 may be provided on the right surface of the filter apparatus 100. The display panel 197b1 may be provided on the right surface of the filter housing 101.

For this, the circuitry module 190 may also be provided in the right side of the filter case 110, although not limited thereto. However, the circuitry module 190 is not installed at any location as long as the circuitry module 190 is electrically connectable to the display panel 197b1.

The display panel 197b1 may be provided on the right surface of the filter apparatus 100 to output information about a state of the filter apparatus 100.

According to the disclosure, the left surface of the filter apparatus 100 may be in contact with the washing machine 10, and in this case, a user may recognize various information by checking the right surface of the filter apparatus 100.

Referring to FIG. 13C, according to an embodiment, the display panel 197b1 may be provided on the front surface of the filter apparatus 100. The display panel 197b1 may be provided on the front surface of the filter housing 101.

For this, the circuitry module 190 may also be provided in the front side of the filter case 110, although not limited thereto. However, the circuitry module 190 is not installed at any location as long as the circuitry module 190 is electrically connectable to the display panel 197b1.

The display panel 197b1 may be provided on the front surface of the filter apparatus 100 to output information about a state of the filter apparatus 100.

According to the disclosure, a user may recognize various information in front of the filter apparatus 100.

Referring to FIG. 13D, according to an embodiment, the display panel 197b1 may be provided on the rear surface of the filter apparatus 100. The display panel 197b1 may be provided on the rear surface of the filter housing 101.

For this, the circuitry module 190 may also be provided in the rear side of the filter case 110, although not limited thereto. However, the circuitry module 190 is not installed at any location as long as the circuitry module 190 is electrically connectable to the display panel 197b1.

The display panel 197b1 may be provided on the rear surface of the filter apparatus 100 to output information about a state of the filter apparatus 100.

According to the disclosure, in a state in which the rear surface of the filter apparatus 100 is easily observable, a user may easily recognize various information.

Referring to FIG. 13E, according to an embodiment of the disclosure, the display panel 197b1 may be provided on the lower surface of the filter apparatus 100. The display panel 197b1 may be provided on the lower surface of the filter housing 101.

For this, the circuitry module 190 may also be provided in the lower side of the filter case 110, although not limited thereto. However, the circuitry module 190 is not installed at any location as long as the circuitry module 190 is electrically connectable to the display panel 197b1.

The display panel 197b1 may be provided on the lower surface of the filter apparatus 100 to output information about a state of the filter apparatus 100.

According to the disclosure, in a state in which the lower surface of the filter apparatus 100 is easily observable, a user may easily recognize various information.

According to various embodiments of the disclosure, a location of the display panel 197b1 is not limited to those shown in FIGS. 6 to 8 and FIGS. 13A to 13E.

Also, according to various embodiments of the disclosure, a plurality of display panels 197b1 may be provided, and each of the plurality of display panels 197b1 may be provided at any one of locations described above with reference to FIGS. 6 to 8 and FIGS. 13A to 13E.

According to the disclosure, by enabling the display panel 197b1 to be positioned at various locations, a user's requirement according to an installation environment of the filter apparatus 100 may be satisfied.

FIG. 14 is a control block diagram of a filter apparatus according to an embodiment of the disclosure.

Referring to FIG. 14, the filter apparatus 100 may include the user interface 197, the filter cleaning device 130, the closing and opening device 140, a sensor device 180, the communicator 199, and the controller 191.

Descriptions overlapping with those described above in relation to the components of the filter apparatus 100 will be omitted.

The sensor device 180 may include the filter sensor 181 and the water supply sensor 182, and data and/or information obtained by the sensor device 180 may be transferred to the controller 191.

The communicator 199 may transmit information obtained by the filter apparatus 100 to an external device. For example, the communicator 199 may transmit information obtained by the filter apparatus 100 to at least one of the washing machine 10 or the user device 3.

The transmitting of information obtained by the filter apparatus 100 to at least one of the washing machine 10 or the user device 3 may include transmitting information obtained by the filter apparatus 100 directly to the washing machine 10 or the user device 3 and transmitting information obtained by the filter apparatus 100 to at least one of the washing machine 10 or the user device 3 through the server 2.

The information obtained by the filter apparatus 100 may include information obtained by the sensor device 180 and/or information obtained through the communicator 199.

The information obtained by the filter apparatus 100 may include information obtained by the filter sensor 181, information obtained by the water supply sensor 182, information obtained by the current sensor 133, and/or information obtained from an external device through the communicator 199.

The controller 191 may control the communicator 199 to transfer the information obtained by the filter apparatus 100 to an external device in response to an identification that the information obtained by the filter apparatus 100 satisfies a preset condition.

According to an embodiment of the disclosure, the controller 191 may perform, in response to reception of a control command from an external device through the communicator 199, an operation corresponding to the control command.

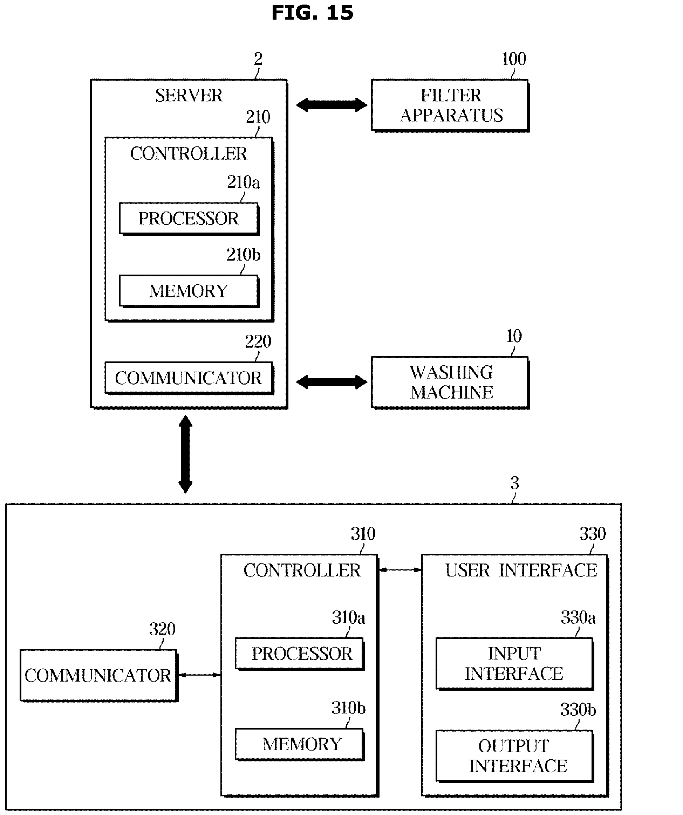

FIG. 15 is a control block diagram of a washing machine, a filter apparatus, a sever, and a user device, according to an embodiment of the disclosure.

Referring to FIG. 15, a communication system of the filter apparatus 100 according to an embodiment of the disclosure may include the filter apparatus 100 and the washing machine 10.

According to various embodiments of the disclosure, the communication system of the filter apparatus 100 may further include the server 2 and the user device 3.

Components of the filter apparatus 100 and the washing machine 10 have been described above, and accordingly, descriptions thereof will be omitted.

The server 2 according to an embodiment of the disclosure may include a controller 210 for controlling operations of the server 2, and a communicator 220. The controller 210 may include at least one memory 210b that stores various information, such as data in the form of an algorithm or program for controlling operations of components in the server 2 and information of the user device 3, and at least one processor 210a which performs the above-described operations and operations which will be described below by using the data stored in the at least one memory 210b.

The communicator 220 may include at least one of a short-range wireless communication module or a long-distance wireless communication module.

The user device 3 according to an embodiment of the disclosure may include a controller 310 for controlling operations of the user device 3, a communicator 320, and a user interface 330. The controller 310 may include at least one memory 310b that stores various information, such as data in the form of an algorithm or program for controlling operations of components in the user device 3 and information of the user device 3, and at least one processor 310a which performs the above-described operations and operations which will be described below by using the data stored in the at least one memory 310b.

The user device 3 may include various electronic devices, such as, for example, a smart phone, a notebook, a laptop, and a smart watch.

The communicator 320 may include at least one of a short-range wireless communication module or a long-distance wireless communication module.

The user interface 330 may include an input interface 330a and an output interface 330b.

The input interface 330a may convert sensory information received from a user into an electrical signal.

The output interface 330b may transfer various information to a user by generating sensory information.

The filter apparatus 100, the washing machine 10, the server 2 and/or the user device 3 may transmit/receive information to/from each other through the respective communicators 96, 199, 220, and 330.

A method in which the filter apparatus 100, the washing machine 10, the server 2 and/or the user device 3 transmits/receives information to/from each other through the respective communicators 96, 199, 220, and 330 will be described below.

According to an embodiment of the disclosure, a user may register user account information in the server 2 through the user device 3. The user account information may include user identification information and/or information about the user's home appliance.

According to various embodiments of the disclosure, the at least one memory 210b of the server 2 may store the user account information received from the user device 3.

Information about various devices (for example, the washing machine 10 and the filter apparatus 100) linked with the user's account may be stored in the at least one memory 210b, and the user may control the various devices linked with the user's account or receive information collected by the various devices linked with the user's account, through the user device 3.

For example, after the user executes an application for managing a home appliance through the user device 3, the user may log on to the user's account to transmit various control commands to the home appliance linked with the account or receive various information from the home appliance linked with the account.

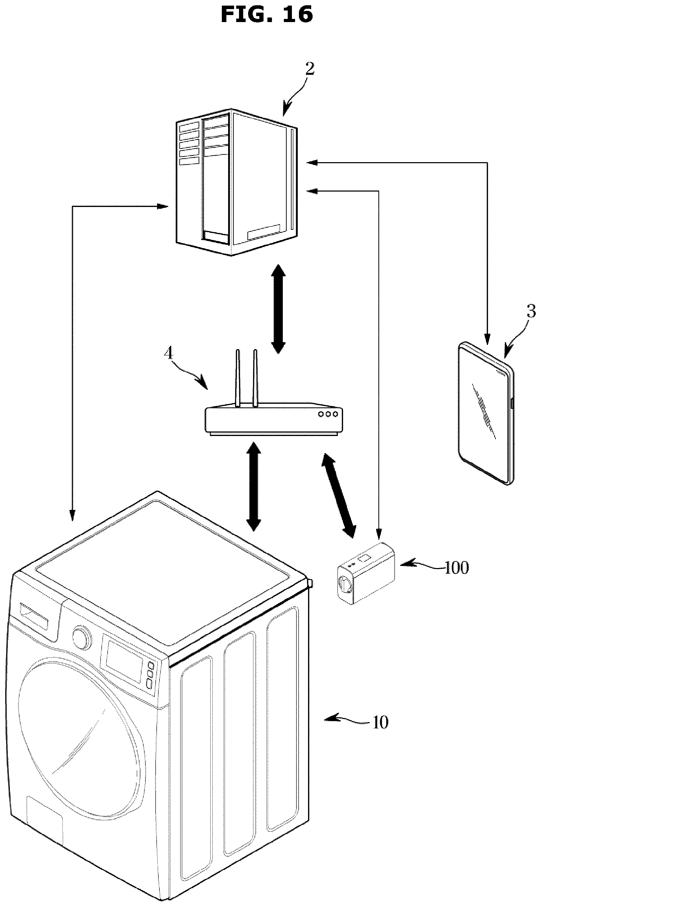

FIG. 16 shows an example of communication establishment between a washing machine, a filter apparatus, a server, and a user device, according to an embodiment of the disclosure.

According to an embodiment of the disclosure, the washing machine 10, the filter apparatus 100, and the user device 3 may transmit/receive information to/from each other via the server 2 through a WAN.

Referring to FIG. 16, a wireless access point apparatus 4 may include a slot that is connectable to a wired communication cable and transmit/receive data to/from the server 2 through the wired communication cable.

The washing machine 10 may establish communication with the wireless access point apparatus 4 through the communicator 96 (for example, a WLAN (WiFi) communication module).

The washing machine 10 may communicate with the server 2 through the WAN in response to communication establishment with the wireless access point apparatus 4.

According to an embodiment of the disclosure, the washing machine 10 may transmit identification information for identifying the washing machine 10 to the server 2. The identification information for identifying the washing machine 10 may have been stored in the memory 92, and include at least one of a serial number of the washing machine 10, an Internet Protocol (IP) address of the washing machine 10, or a mac address of the washing machine 10.

The filter apparatus 100 may establish communication with the wireless access point apparatus 4 through the communicator 199 (for example, a WLAN (WiFi) communication module).

The filter apparatus 100 may communicate with the server 2 through the WAN in response to communication establishment with the wireless access point apparatus 4.

According to an embodiment of the disclosure, the filter apparatus 100 may transmit identification information for identifying the filter apparatus 100 to the server 2. The identification information for identifying the filter apparatus 100 may have been stored in the memory 191b, and include at least one of a serial number of the filter apparatus 100, an IP address of the filter apparatus 100, or a mac address of the filter apparatus 100.

The communicator 320 (for example, a WLAN (WiFi) communication module) of the user device 3 may establish communication with the wireless access point apparatus 4, and accordingly, the communicator 320 may communicate with the server 2 through the WAN.

According to various embodiments of the disclosure, the communicator 320 (for example, a cellular communication module) of the user device 3 may communicate with the server 2 through the WAN without connecting to the wireless access point apparatus 4.

The user device 3 may establish communication with the server 2 in response to logging-on to a user's account after the user executes a preset application through the user device 3.

According to various embodiments of the disclosure, the server 2 may transmit a communication request message to the washing machine 10 and/or the filter apparatus 100 via the wireless access point apparatus 4 in response to communication establishment between the user device 3 and the server 2.

The washing machine 10 may transfer information to the filter apparatus 100 and/or the user device 3 through the server 2.

For example, the washing machine 10 may transfer preset information to the server 2, and the server 2 may transfer the preset information to the filter apparatus 100 and/or the user device 3.

The filter apparatus 100 may transfer information to the washing machine 10 and/or the user device 3 through the server 2.

For example, the filter apparatus 100 may transfer preset information to the server 2, and the server 2 may transfer the preset information to the washing machine 10 and/or the user device 3.

The user device 3 may transfer information to the washing machine 10 and/or the filter apparatus 100 through the server 2.

For example, the user device 3 may transfer preset information to the server 2, and the server 2 may transfer the preset information to the washing machine 10 and/or the filter apparatus 100. The preset information may include a control command.

According to the disclosure, the filter apparatus 100, the washing machine 10, and/or the user device 3 may transmit/receive various information to/from each other through the server 2.

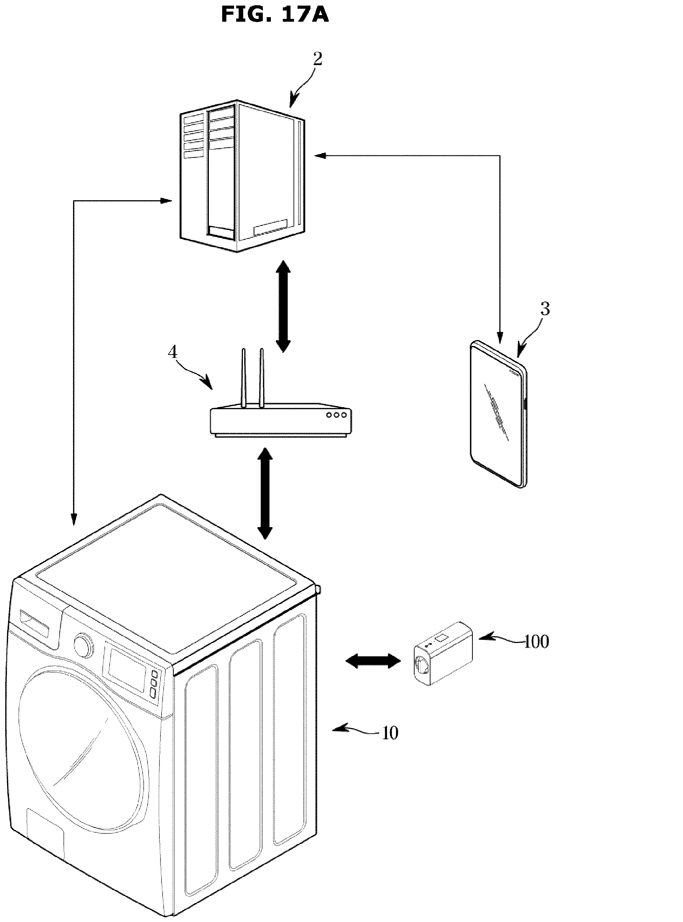

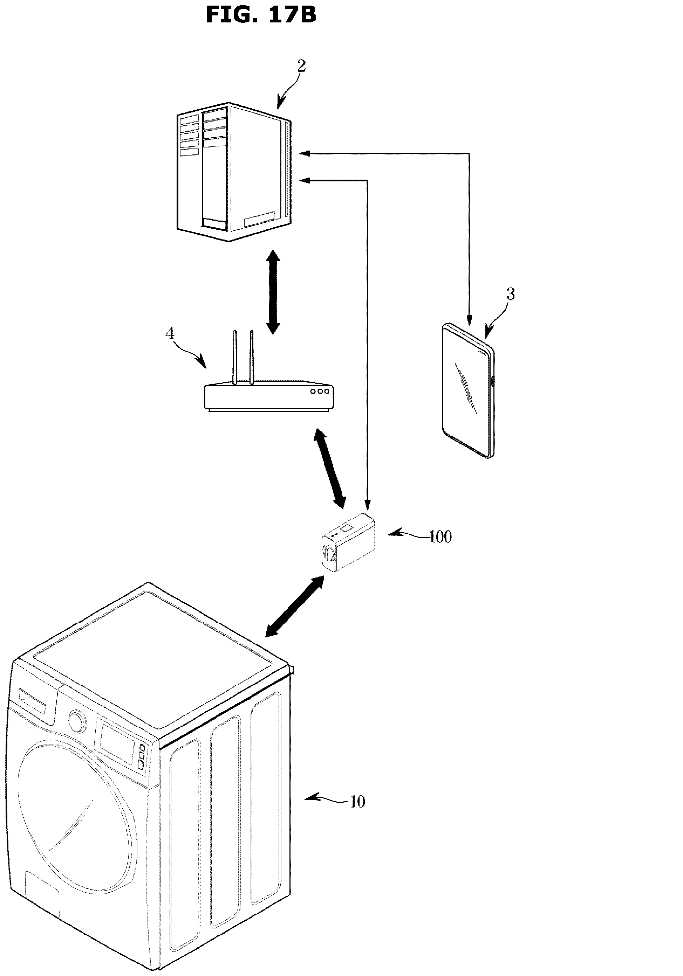

FIGS. 17A and 17B show an example of communication establishment between a washing machine, a filter apparatus, a server, and a user device, according to an embodiment of the disclosure.

According to an embodiment of the disclosure, the washing machine 10 and/or the filter apparatus 100 may establish communication with each other through the communicators 96 and 199 (for example, Bluetooth communication modules or BLE communication modules), and the washing machine 10 and/or the filter apparatus 100 may establish communication with the server 2 by the communicator (for example, a WLAN (WiFi) communication module) 96 or 199 through the wireless access point apparatus 4.

Referring to FIG. 17A, the washing machine 10 and/or the filter apparatus 100 may establish communication with each other through the communicators (for example, Bluetooth communication modules or BLE communication modules) 96 and 199.

That is, the filter apparatus 100 may be paired with the communicator (for example, a Bluetooth communication module or a BLE communication module) 96 of the washing machine 10 through the communicator (for example, a Bluetooth communication module or a BLE communication module) 199.

According to an embodiment of the disclosure, the communicator 96 of the washing machine 10 may include a first communication module (for example, a Bluetooth communication module or a BLE communication module) for communicating with the communicator 199 of the filter apparatus 100, and a second communication module (for example, a WLAN (WiFi) communication module) for communicating with the sever 2 through the wireless access point apparatus 4.

Meanwhile, the communicator 199 of the filter apparatus 100 may include only a first communication module for communicating with the communicator 96 of the washing machine 10.

The washing machine 10 may transfer information to the user device 3 through the server 2.

For example, the washing machine 10 may transfer preset information to the server 2 through the second network (for example, a WAN network), and the server 2 may transfer the preset information to the user device 3 through the second network. The preset information may be information obtained by the filter apparatus 100.

The filter apparatus 100 may transfer information to the user device 3 through the washing machine 10 and the server 2. That is, the filter apparatus 100 may transfer preset information to the user device 3 via the washing machine 10.

For example, the filter apparatus 100 may transfer preset information to the washing machine 10 through the first network (for example, a Bluetooth communication network and/or a BLE communication network), the washing machine 10 may transfer the preset information to the server 2 through the second network, and the server 2 may transfer the preset information to the user device 3 through the second network.

The user device 3 may transfer information to the filter apparatus 100 through the server 2 and the washing machine 10. That is, the filter apparatus 100 may receive preset information from the user device 3 via the washing machine 10.

For example, the user device 3 may transfer preset information to the server 2 through the second network, the server 2 may transfer the preset information to the washing machine 10 through the second network, and the washing machine 10 may transfer the preset information to the filter apparatus 100 through the first network.

According to the disclosure, although the filter apparatus 100 does not include a communication module for using the second network, the filter apparatus 100 may transmit/receive information to/from the user device 3.

Referring to FIG. 17B, the washing machine 10 and/or the filter apparatus 100 may establish communication with each other through the communicators 196 and 199 (for example, Bluetooth communication modules or BLE communication modules).

That is, the filter apparatus 100 may be paired with the communicator (for example, a Bluetooth communication module or a BLE communication module) 96 of the washing machine 96 through the communicator (for example, a Bluetooth communication module or a BLE communication module) 199.

According to an embodiment of the disclosure, the communicator 199 of the filter apparatus 100 may include a first communication module (for example, a Bluetooth communication module or a BLE communication module) for communicating with the communicator 96 of the washing machine 10 and a second communication module (for example, a WLAN (WiFi) communication module) for communicating with the server 2 through the wireless access point apparatus 4.

Meanwhile, the communicator 96 of the washing machine 10 may include only a first communication module for communicating with the communicator 199 of the filter apparatus 100.

The filter apparatus 100 may transfer information to the user device 3 through the server 2.

For example, the filter apparatus 100 may transfer preset information to the server 2 through the second network (for example, a WAN network), and the server 2 may transfer the preset information to the user device 3 through the second network. The preset information may be information obtained by the filter apparatus 100.

The washing machine 10 may transfer information to the user device 3 through the filter apparatus 100 and the server 2. That is, the washing machine 10 may transfer preset information to the user device 3 via the filter apparatus 100.

For example, the washing machine 10 may transfer preset information to the filter apparatus 100 through the first network (for example, a Bluetooth communication network and/or a BLE communication network), the filter apparatus 100 may transfer the preset information to the server 2 through the second network, and the server 2 may transfer the preset information to the user device 3 through the second network.

The user device 3 may transfer information to the washing machine 10 through the server 2 and the filter apparatus 100. That is, the washing machine 10 may receive preset information from the user device 3 via the filter apparatus 100.

For example, the user device 3 may transfer preset information to the server 2 through the second network, the server 2 may transfer the preset information to the filter apparatus 100 through the second network, and the filter apparatus 100 may transfer the preset information to the washing machine 10 through the first network.

According to the disclosure, although the washing machine 10 does not include a communication module for using the second network, the washing machine 10 may transmit/receive information to/from the user device 3.

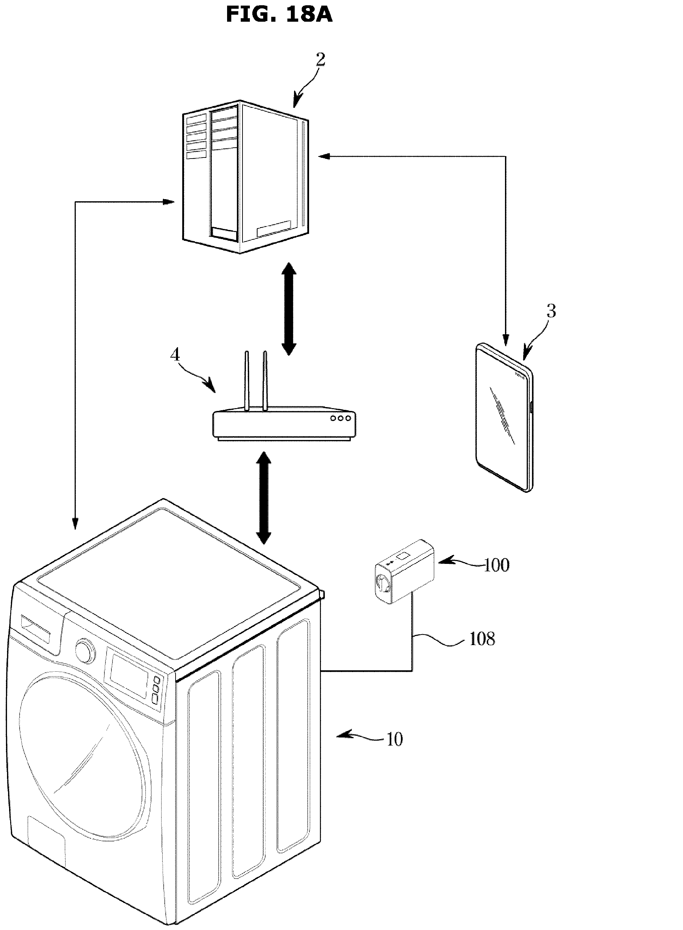

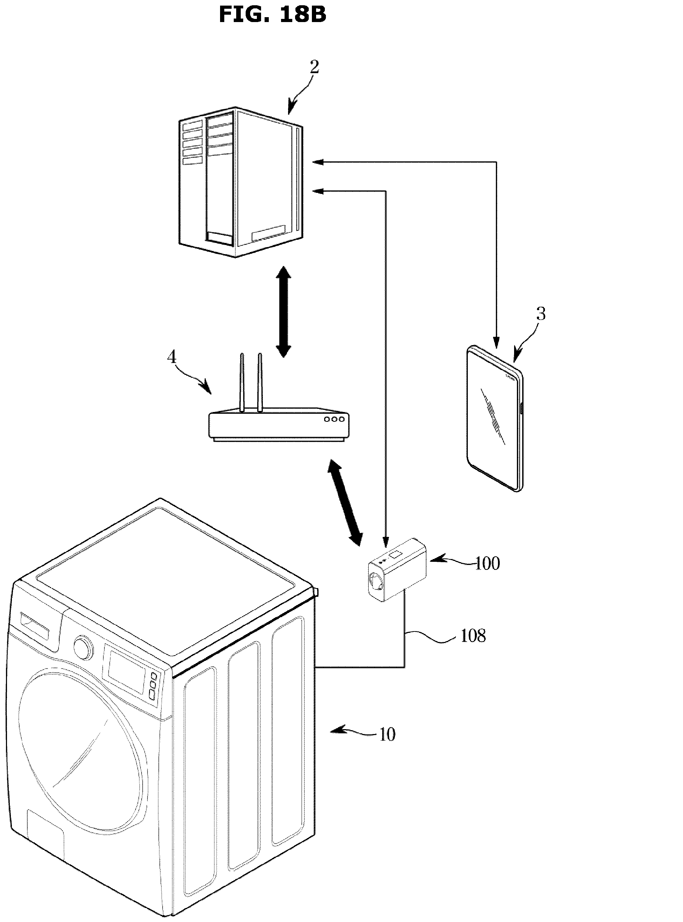

FIGS. 18A and 18B show an example of communication establishment between a washing machine, a filter apparatus, a server, and a user device, according to an embodiment of the disclosure.

According to an embodiment of the disclosure, the washing machine 10 and/or the filter apparatus 100 may establish wired communication through the communicators 96 and 199 (for example, wired communication modules), and the washing machine 10 and/or the filter apparatus 100 may establish communication with the server 2 through the wireless access point apparatus 4 by the communicator (for example, a WLAN (WiFi) communication module) 96 or 199.

Referring to FIG. 18A, the washing machine 10 and/or the filter apparatus 100 may establish communication with each other through the communicators (for example, wired communication modules) 96 and 199.

That is, the filter apparatus 100 may be connected to the washing machine 10 wiredly.

According to an embodiment of the disclosure, the communicator 96 of the washing machine 96 may include a third communication module (for example, a wired communication module) for communicating with the communicator 199 of the filter apparatus 100 wiredly and a second communication module (for example, a WLAN (WiFi) communication module) for communicating with the server 2 through the wireless access point apparatus 4.

Meanwhile, the communicator 199 of the filter apparatus 100 may include only a third communication module for communicating with the communicator 96 of the washing machine 10 wiredly.

The washing machine 10 may transfer information to the user device 3 through the server 2.

For example, the washing machine 10 may transfer preset information to the server 2 through the second network (for example, a WAN network), and the server 2 may transfer the preset information to the user device 3 through the second network. The preset information may be information obtained by the filter apparatus 100.

The filter apparatus 100 may transfer information to the user device 3 through the washing machine 10 and the server 2. That is, the filter apparatus 100 may transfer preset information to the user device 3 via the washing machine 10.

For example, the filter apparatus 100 may transfer preset information to the washing machine 10 through a wired communication network, the washing machine 10 may transfer the preset information to the server 2 through the second network, and the server 2 may transfer the preset information to the user device 3 through the second network.

The user device 3 may transfer information to the filter apparatus 100 through the server 2 and the washing machine 10. That is, the filter apparatus 100 may receive preset information from the user device 3 via the washing machine 10.

For example, the user device 3 may transfer preset information to the server 2 through the second network, the server 2 may transfer the preset information to the washing machine 10 through the second network, and the washing machine 10 may transfer the preset information to the filter apparatus 100 through the wired communication network.

According to the disclosure, although the filter apparatus 100 does not include a communication module for using the second network, the filter apparatus 100 may transmit/receive information to/from the user device 3 through the wired communication network.

Referring to FIG. 18B, the washing machine 10 and/or the filter apparatus 100 may establish wired communication with each other through the communicators 96 and 199 (for example, wired communication modules).

That is, the filter apparatus 100 may be connected to the washing machine 10 wiredly.

According to an embodiment of the disclosure, the communicator 199 of the filter apparatus 100 may include a third communication module (for example, a wired communication module) for communicating with the communicator 96 of the washing machine 10, and a second communication module (for example, a WAN (WiFi) communication module) for communicating with the server 2 through the wireless access point apparatus 4.

Meanwhile, the communicator 96 of the washing machine 10 may include only a third communication module for communicating with the communicator 199 of the filter apparatus 100.

The filter apparatus 100 may transfer information to the user device 3 through the server 2.

For example, the filter apparatus 100 may transfer preset information to the server 2 through the second network (for example, a WAN network), and the server 2 may transfer the preset information to the user device 3 through the second network. The preset information may be information obtained by the filter apparatus 100.

The washing machine 10 may transfer information to the user device 3 through the filter apparatus 100 and the server 2. That is, the washing machine 10 may transfer preset information to the user device 3 via the filter apparatus 100.

For example, the washing machine 10 may transfer preset information to the filter apparatus 100 through a wired communication network, the filter apparatus 100 may transfer the preset information to the server 2 through the second network, and the server 2 may transfer the preset information to the user device 3 through the second network.

The user device 3 may transfer information to the washing machine 10 through the server 2 and the filter apparatus 100. That is, the washing machine 10 may receiver preset information from the user device 3 via the filter apparatus 100.

For example, the user device 3 may transfer preset information to the server 2 through the second network, the server 2 may transfer the preset information to the filter apparatus 100 through the second network, and the filter apparatus 100 may transfer the preset information to the washing machine 10 through the wired communication network.

According to the disclosure, although the washing machine 10 does not include a communication module for using the second network, the washing machine 10 may transmit/receive information to/from the user device 3 through wired communication.

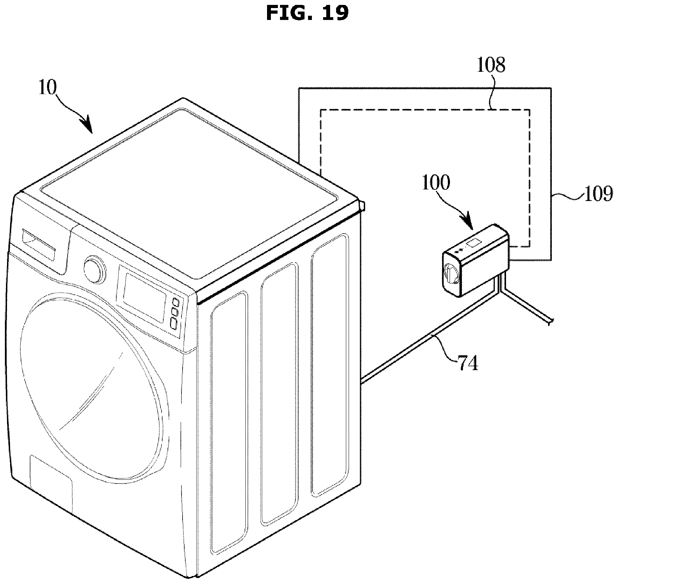

FIG. 19 shows a state in which a washing machine according to an embodiment of the disclosure is connected to a filter apparatus by a wire.

Referring to FIG. 19, the filter apparatus 100 may include a connector 108 for communicating with the user device 3, and a power cable 109 for receiving power from an external power source.

According to various embodiments of the disclosure, the connector 108 may be connected to the washing machine 10.

Because the connector 108 is connected to the washing machine 10, wired communication between the filter apparatus 100 and the washing machine 10 may be established.

According to an embodiment of the disclosure, the communicators 96 and 199 may include wired communication modules for forming a wired communication network.

According to various embodiments of the disclosure, the power cable 109 may be connected to a socket or the washing machine 10.

According to a connection of the power cable 109 to the washing machine 10, the filter apparatus 100 may receive power from a power supply of the washing machine 10.

According to a connection of the power cable 109 to a socket, the filter apparatus 100 may receive external power.

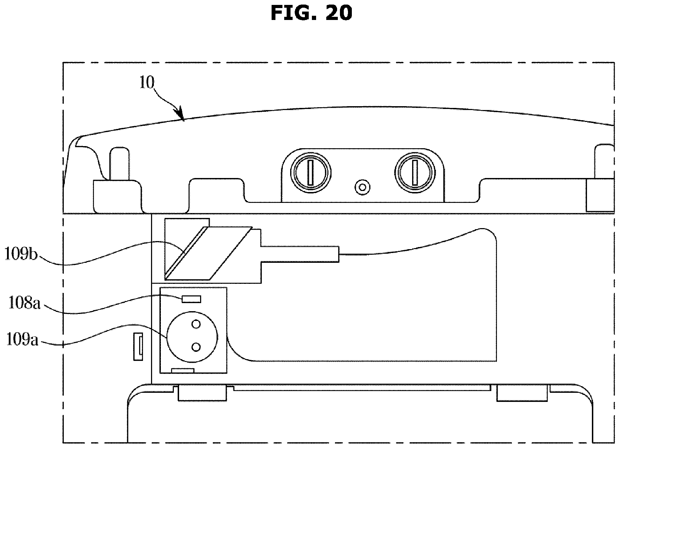

FIG. 20 shows a connecting portion formed in a washing machine according to an embodiment of the disclosure.

Referring to FIG. 20, the washing machine 10 according to an embodiment of the disclosure may include a communication socket 108a and/or a power socket 109a.

The communication socket 108a and/or the power socket 109a may be installed at a hole provided in the rear side of the washing machine 10, and the hole may be opened or closed by a cover 109b.

According to various embodiments of the disclosure, the communication socket 108a and/or the power socket 109a may be provided in the washing machine housing 11.

For example, the communication socket 108a and/or the power socket 109a may be provided in the rear side of the washing machine housing 11.

According to an insertion of the connector 108 in the communication socket 108a, a wired communication network may be formed between the filter apparatus 100 and the washing machine 10.

That is, according to an insertion of the connector 108 in the communication socket 108a, the communicator 96 of the washing machine 10 may transmit/receive various information to/from the communicator 199 of the filter apparatus 100 wiredly.

According to an insertion of the power cable 109 in the power socket 109a, the filter apparatus 100 may receive power from the washing machine 10.

That is, according to an insertion of the power cable 109 in the power socket 109a, the power supply of the washing machine 10 may supply power to the filter apparatus 100.

According to the disclosure, a separate socket for supplying power to the filter apparatus 100 may be not needed, which contributes to a user's convenience.

Also, according to the disclosure, the filter apparatus 100 may transmit/receive information to/from the washing machine 10 through wired communication.

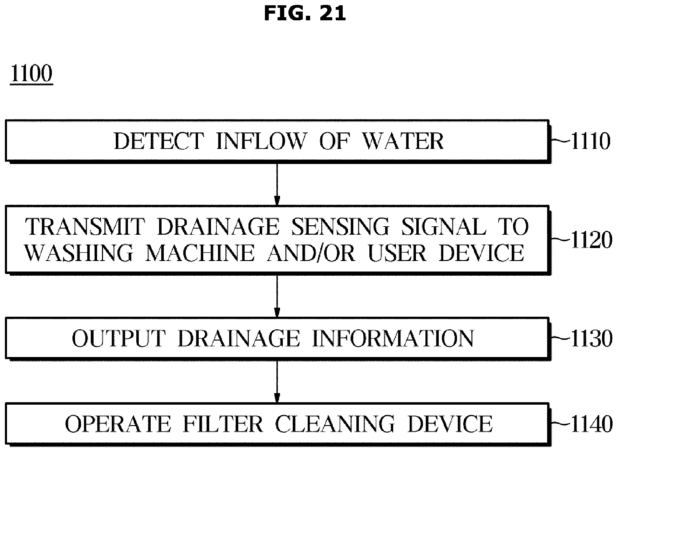

FIG. 21 is a flowchart showing an example of a method in which a filter apparatus according to an embodiment of the disclosure transmits a drainage sensing signal to a washing machine and/or a user device.

An exemplary process of a method 1100 in which the filter apparatus 100 according to an embodiment of the disclosure transmits a drainage sensing signal to the washing machine 10 and/or the user device 3 is shown in FIG. 21.

The filter apparatus 100 according to an embodiment of the disclosure may detect an inflow of water (operation 1110).

According to an operation of the drain device 70 of the washing machine 10, water may enter the housing inlet 102 and the case inlet 112a through the drain hose 74 of the washing machine 10.

The water supply sensor 182 may detect an inflow of water through the case inlet 112a.

The water supply sensor 182 may transfer a sensing signal to the controller 191 based on the detection of the inflow of water through the case inlet 112a.

The filter apparatus 100 may transmit a drainage sensing signal to the washing machine 10 and/or the user device 3 in response to the detection of the inflow of water by the water supply sensor 182 (operation 1120).

The transmitting of the drainage sensing signal to the washing machine 10 and/or the user device 3 by the filter apparatus 100 may include reception of the drainage sensing signal transmitted from the filter apparatus 100 by the washing machine 10 and/or the user device 3.

The controller 191 may control the communicator 199 to transmit the drainage sensing signal to the washing machine 10 and/or the user device 3 in response to reception of the sensing signal from the water supply sensor 182.

The drainage sensing signal may include information indicating that drainage of the washing machine 10 has been detected and/or information indicating that an inflow of water into the filter apparatus 100 has been detected.

Referring to FIG. 16, the filter apparatus 100 may transmit the drainage sensing signal to the washing machine 10 and/or the user device 3 via the server 2.

For example, the filter apparatus 100 may transmit the drainage sensing signal to the server 2 through the second network (for example, a WAN network), and the server 2 may transfer the drainage sensing signal to the washing machine 10 and/or the user device 3 through the second network in response to reception of the drainage sensing signal from the filter apparatus 100.

Referring to FIG. 17A, the filter apparatus 100 may transmit the drainage sensing signal to the user device 3 via the washing machine 10 and the server 2, and the filter apparatus 100 may transmit the drainage sensing signal directly to the washing machine 10 through Device to Device (D2D) communication not via the server 2.

According to an embodiment of the disclosure, the filter apparatus 100 may transmit the drainage sensing signal to the washing machine 10 through the first network (for example, a Bluetooth communication network and/or a BLE communication network).

According to an embodiment of the disclosure, the washing machine 10 may transfer the drainage sensing signal to the server 2 through the second network in response to reception of the drainage sensing signal from the filter apparatus 100 through the first network, and the server 2 may transfer the drainage sensing signal to the user device 3 through the second network in response to reception of the drainage sensing signal from the washing machine 10.

Referring to FIG. 17B, the filter apparatus 100 may transmit the drainage sensing signal to the user device 3 via the server 2, and the filter apparatus 100 may transmit the drainage sensing signal directly to the washing machine 10 through D2D communication not via the server 2.

According to an embodiment of the disclosure, the filter apparatus 100 may transmit the drainage sensing signal to the washing machine 10 through the first network (for example, a Bluetooth communication network and/or a BLE communication network).

According to an embodiment of the disclosure, the filter apparatus 100 may transfer the drainage sensing signal to the server 2 through the second network, and the server 2 may transfer the drainage sensing signal to the user device 3 through the second network in response to reception of the drainage sensing signal from the filter apparatus 100.

Referring to FIG. 18A, the filter apparatus 100 may transmit the drainage sensing signal to the user device 3 via the washing machine 10 and the server 2, and the filter apparatus 100 may transmit the drainage sensing signal directly to the washing machine 10 through D2D communication not via the server 2.

According to an embodiment of the disclosure, the filter apparatus 100 may transmit the drainage sensing signal to the washing machine 10 through the third network (for example, a wired communication network).

According to an embodiment of the disclosure, the washing machine 10 may transmit the drainage sensing signal to the server 2 through the second network in response to reception of the drainage sensing signal from the filter apparatus 100 through the third network, and the server 2 may transmit the drainage sensing signal to the user device 3 through the second network in response to reception of the drainage sensing signal from the washing machine 10.

According to the disclosure, although the filter apparatus 100 does not include a module for internet network communication, the filter apparatus 100 may transfer information of the washing machine 10 to the user device 3.

Referring to FIG. 18B, the filter apparatus 100 may transmit the drainage sensing signal to the user device 3 via the server 2, and the filter apparatus 100 may transmit the drainage sensing signal directly to the washing machine 10 through D2D communication not via the server 2.

According to an embodiment of the disclosure, the filter apparatus 100 may transmit the drainage sensing signal to the washing machine 10 through the third network (for example, a wired communication network).

According to an embodiment of the disclosure, the filter apparatus 100 may transfer the drainage sensing signal to the server 2 through the second network, and the server 2 may transfer the drainage sensing signal to the user device 3 through the second network in response to reception of the drainage sensing signal from the filter apparatus 100.

According to various embodiments of the disclosure, the washing machine 10, the filter apparatus 100, and/or the user device 3 may output drainage information (operation 1130).

The drainage information may include information indicating that the washing machine 10 drains water and/or information indicating that water enters the filter apparatus 100.

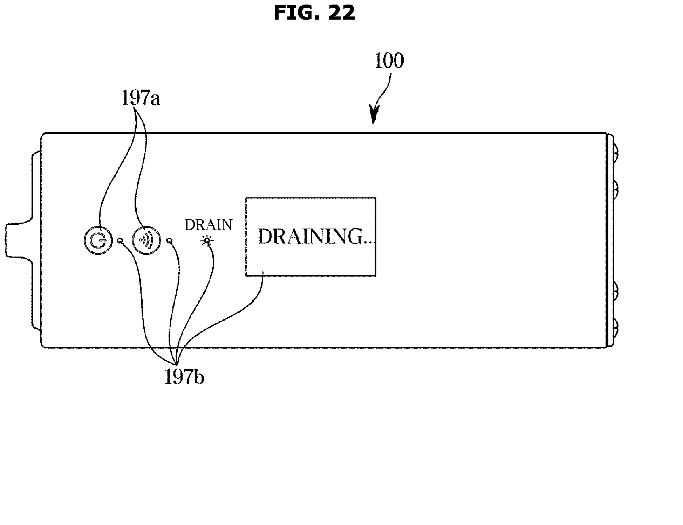

FIG. 22 shows an example of a state in which drainage information is output to a filter apparatus according to an embodiment of the disclosure.

Referring to FIG. 22, the filter apparatus 100 may output drainage information in response to a detection of an inflow of water by the water supply sensor 182.

For example, the controller 191 may control the output interface 197b to output information indicating that the washing machine 10 drains water and/or information indicating that water enters the filter apparatus 100, in response to reception of a sensing signal from the water supply sensor 182.

The output interface 197b may include a display, and the outputting of the information indicating that the washing machine 10 drains water and/or the information indicating that water enters the filter apparatus 100 may include displaying, on the display, a visual indicator informing that the washing machine 10 drains water and/or a visual indicator informing that water enters the filter apparatus 100.

**In** the disclosure, the visual indicator may include all kinds of mediums, such as text, a figure, an icon and an animation, which are capable of transferring visualized information.

That is, the controller 191 may control the output interface 197b to display a visual indicator informing that the washing machine 10 drains water and/or a visual indicator informing that water enters the filter apparatus 100, in response to reception of a sensing signal from the water supply sensor.

As another example, the output interface 197b may include at least one indicator lamp, and the outputting of the information indicating that the washing machine 10 drains water and/or the information indicating that water enters the filter apparatus 100 may include turning on or off an indicator lamp corresponding to drainage among the at least one indicator lamp.

That is, the controller 191 may control the output interface 197b to turn on or off the indicator lamp corresponding to drainage in response to reception of a sensing signal from the water supply sensor 182.

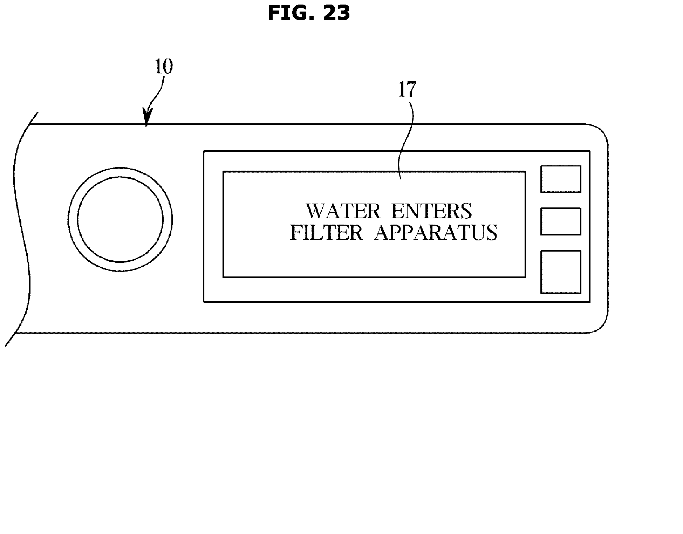

FIG. 23 shows an example of a state in which drainage information is output to a washing machine according to an embodiment of the disclosure.

Referring to FIG. 23, the washing machine 10 may output drainage information in response to reception of a drainage sensing signal from the filter apparatus 100.

For example, the controller 90 may control the output interface 17 to output information indicating that water enters the filter apparatus 100 in response to reception of a drainage sensing signal from the filter apparatus 100 through the communicator 96.

The output interface 17 may include a display, and the outputting of the information indicating that water enters the filter apparatus 100 may include displaying, on the display, a visual indicator informing that water enters the filter apparatus 100.

That is, the controller 90 may control the output interface 17 to display a visual indicator informing that water enters the filter apparatus 100, in response to reception of a drainage sensing signal from the filter apparatus 100 through the communicator 96.

As another example, the output interface 17 may include at least one indicator lamp, and the outputting of the information indicating that water enters the filter apparatus 100 may include turning on or off an indicator lamp corresponding to drainage among the at least one indicator lamp.

That is, the controller 90 may control the output interface 17 to turn on off the indicator lamp corresponding to drainage in response to reception of a drainage sensing signal from the filter apparatus 100 through the communicator 96.

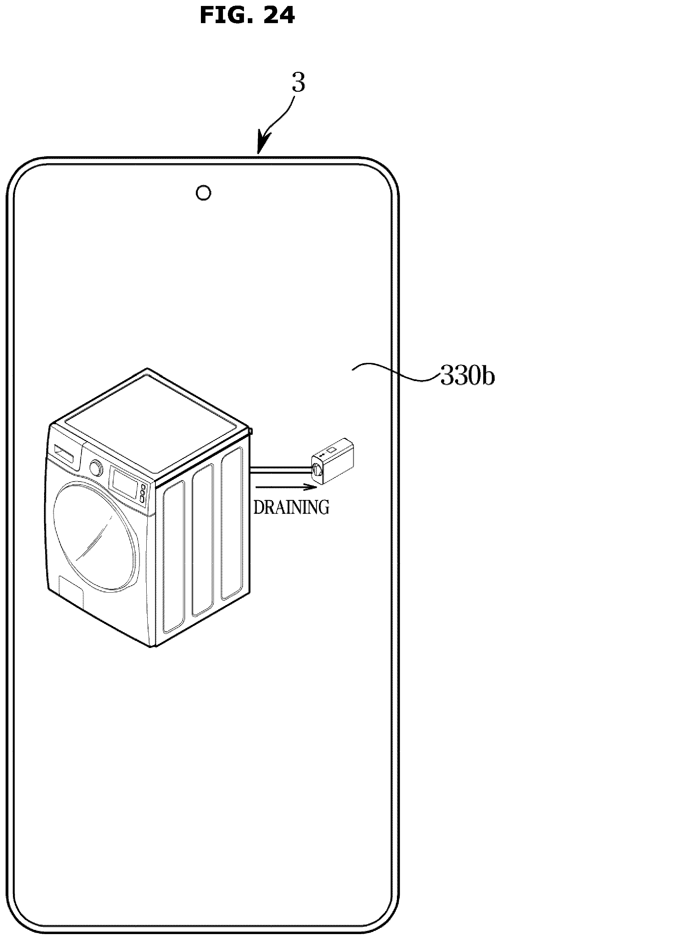

FIG. 24 shows an example of a state in which drainage information is output to a user device according to an embodiment of the disclosure.

Referring to FIG. 24, the user device 3 may output drainage information in response to reception of a drainage sensing signal from the filter apparatus 100.

For example, the controller 310 may control the output interface 330b to output information indicating that the washing machine 10 drains water and/or information indicating that water enters the filter apparatus 100, in response to reception of a drainage sensing signal from the filter apparatus 100 through the communicator 320.

The output interface 330b may include a display, and the outputting of the information indicating that the washing machine 10 drains water and/or information indicating that water enters the filter apparatus 100 may include displaying, on the display, a visual indicator informing that the washing machine 10 drains water and/or a visual indicator informing that water enters the filter apparatus 100.

That is, the controller 310 may control the output interface 330b to display a visual indicator informing that the washing machine 10 drains water and/or that water enters the filter apparatus 100, in response to reception of a drainage sensing signal from the filter apparatus 100 through the communicator 320.

As another example, the output interface 330b may include at least one indicator lamp, and the outputting of the information indicating that the washing machine 10 drains water and/or that water enters the filter apparatus 100 may include turning on or off an indicator lamp corresponding to drainage among the at least one indicator lamp.

That is, the controller 310 may control the output interface 330b to turn on or off the indicator lamp corresponding to drainage in response to reception of a drainage sensing signal from the filter apparatus 100 through the communicator 320.

According to the disclosure, because the filter apparatus 100 transmits a drainage sensing signal to an external device (for example, the washing machine 10 and/or the user device 3) in response to a detection of an inflow of water, information about a state of the filter apparatus 100 may be easily notified to a user.

Again referring to FIG. 21, the filter apparatus 100 may operate the filter cleaning device 130 in response to the detection of the inflow of water (operation 1140).

The controller 191 may drive the cleaning motor 136 in response to the detection of the inflow of water by the water supply sensor 182.

According to various embodiments of the disclosure, the controller 191 may control the closing and opening device 140 to close the connecting opening 118 in response to the detection of the inflow of water by the water supply sensor 182.

According to the disclosure, by driving the filter cleaning device 130 in a state in which water enters the filter apparatus 100, a filtering effect of the filter apparatus 100 may be improved.

According to various embodiments of the disclosure, the controller 191 may drive the cleaning motor 136 after a preset time elapses, in response to a detection of a water inflow start by the water supply sensor 182.

According to the disclosure, by driving the filter cleaning device 130 after a certain level of water is filled in the filter apparatus 100, energy efficiency may be improved.

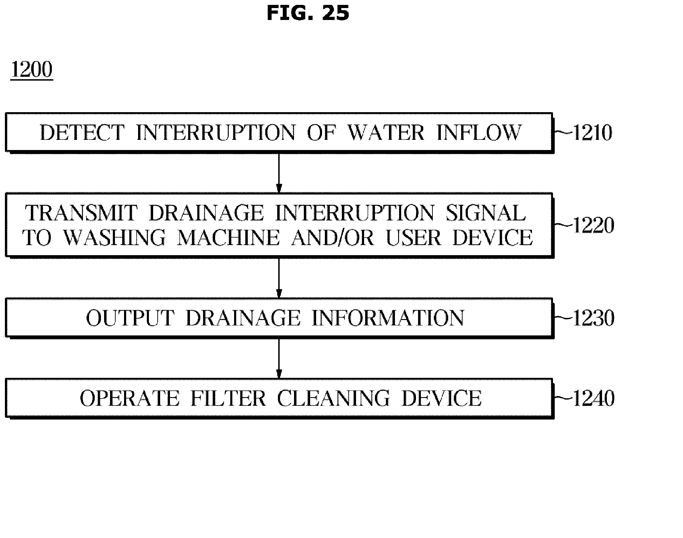

FIG. 25 is a flowchart showing an example of a method in which a filter apparatus according to an embodiment of the disclosure transmits a drainage interruption signal to a washing machine and/or a user device.

Referring to FIG. 25, an exemplary process of a method 1200 in which the filter apparatus 100 according to an embodiment of the disclosure transmits a drainage interruption signal to the washing machine 10 and/or the user device 3 is shown in FIG. 25.

The filter apparatus 100 according to an embodiment of the disclosure may detect an interruption of a water inflow (operation 1210).

According to a stop of an operation of the drain device 70 of the washing machine 10, water may no longer enter the housing inlet 102a and the case inlet 112a through the drain hose 74 of the washing machine 10.

The water supply sensor 182 may detect an interruption(or stop) of a water inflow through the case inlet 112a.

The water supply sensor 182 may transfer an interruption detection signal to the controller 191 based on the detection of the interruption of the water inflow through the case inlet 112a.

The filter apparatus 100 may transmit a drainage interruption signal to the washing machine 10 and/or the user device 3 in response to the detection of the interruption of the water inflow by the water supply sensor 182 (operation 1220).

The transmitting of the drainage interruption signal to the washing machine 10 and/or the user device 3 by the filter apparatus 100 may include reception of the drainage interruption signal transmitted from the filter apparatus 100 by the washing machine 10 and/or the user device 3.

The controller 191 may control the communicator 199 to transmit the drainage interruption signal to the washing machine 10 and/or the user device 3 in response to reception of the drainage interruption signal from the water supply sensor 182.

The drainage interruption signal may include information indicating that drainage of the washing machine 10 has been interrupted (or completed) and/or information indicating that a water inflow into the filter apparatus 100 has been interrupted (or completed).

A method for transmitting a drainage interruption signal to the washing machine 10 and/or the user device 3 in the controller 191 may be the same as operation 1120, and accordingly, a detailed description thereof will be omitted.

According to various embodiments of the disclosure, the washing machine 10, the filter apparatus 100, and/or the user device 3 may output drainage interruption information (operation 1230).

The drainage interruption information may include information indicating that drainage of the washing machine 10 has been interrupted and/or information indicating that a water inflow into the filter apparatus 100 has been interrupted.

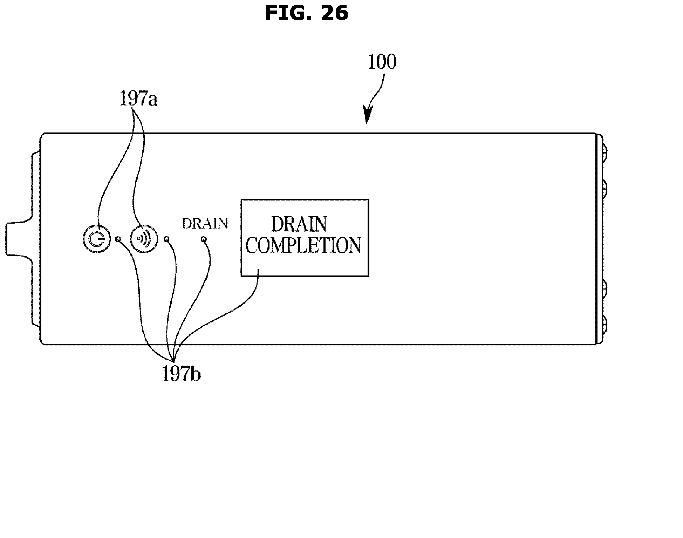

FIG. 26 shows an example of a state in which drainage interruption information is output to a filter apparatus according to an embodiment of the disclosure.

Referring to FIG. 26, the filter apparatus 100 may output drainage interruption information in response to a detection of an interruption of a water inflow by the water supply sensor 182.

For example, the controller 191 may control the output interface 197b to output information indicating that drainage of the washing machine 10 has been interrupted and/or information indicating that a water inflow into the filter apparatus 100 has been interrupted, in response to reception of an interruption sensing signal from the water supply sensor 182.

The output interface 197b may include a display, and the outputting of the information indicating that drainage of the washing machine 10 has been interrupted and/or the information indicating that a water inflow into the filter apparatus 100 has been interrupted may include displaying, on the display, a visual indicator informing that drainage of the washing machine 10 has been completed and/or a visual indicator informing that a water inflow into the filter apparatus 100 has been interrupted.

That is, the controller 191 may control the output interface 197b to display a visual indicator informing that drainage of the washing machine 10 has been completed and/or a visual indicator informing that a water inflow into the filter apparatus 100 has been interrupted, in response to reception of an interruption sensing signal from the water supply sensor 182.

As another example, the output interface 197b may include at least one indicator lamp, and the outputting of the information indicating that drainage of the washing machine 10 has been interrupted and/or the information indicating that a water inflow into the filter apparatus 100 has been interrupted may include turning off an indicator lamp corresponding to drainage among the at least one indicator lamp.

That is, the controller 191 may control the output interface 197b to turn off the indicator lamp corresponding to drainage in response to reception of a sensing signal from the water supply sensor 182.

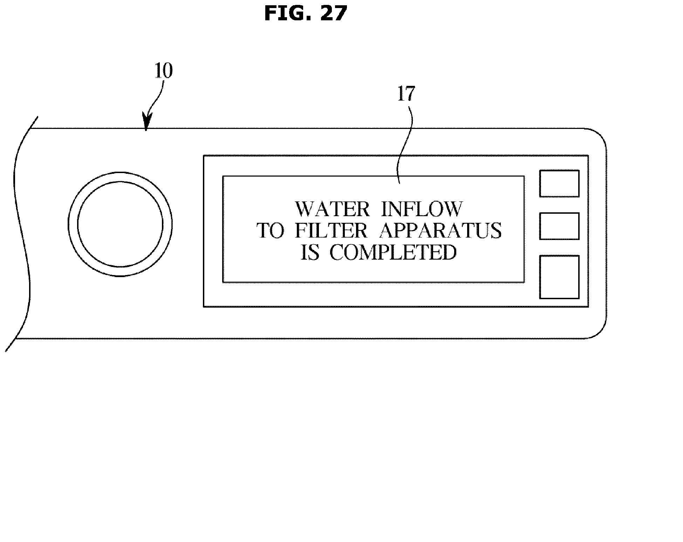

FIG. 27 shows an example of a state in which drainage interruption information is output to a washing machine according to an embodiment of the disclosure.

Referring to FIG. 27, drainage interruption information may be output in response to reception of a drainage interruption signal from the filter apparatus 100.

For example, the controller 90 may control the output interface 17 to output information indicating that a water inflow into the filter apparatus 100 has been interrupted, in response to reception of a drainage interruption signal from the filter apparatus 100 through the communicator 96.

The output interface 17 may include a display, and the outputting of the information indicating that a water inflow into the filter apparatus 100 has been interrupted may include displaying, on the display, a visual indicator informing that a water inflow into the filter apparatus 100 has been interrupted.

That is, the controller 90 may control the output interface 17 to display a visual indicator informing that a water inflow into the filter apparatus 100 has been interrupted in response to reception of a drainage interruption signal from the filter apparatus 100 through the communicator 96.

As another example, the output interface 17 may include at least one indicator lamp, and the outputting of the information indicating that water inflows into the filter apparatus 100 has been interrupted may include turning off an indicator lamp corresponding to drainage among the at least one indicator lamp.

That is, the controller 90 may control the output interface 17 to turn off the indicator lamp corresponding to drainage in response to reception of a drainage interruption signal from the filter apparatus 100 through the communicator 96.

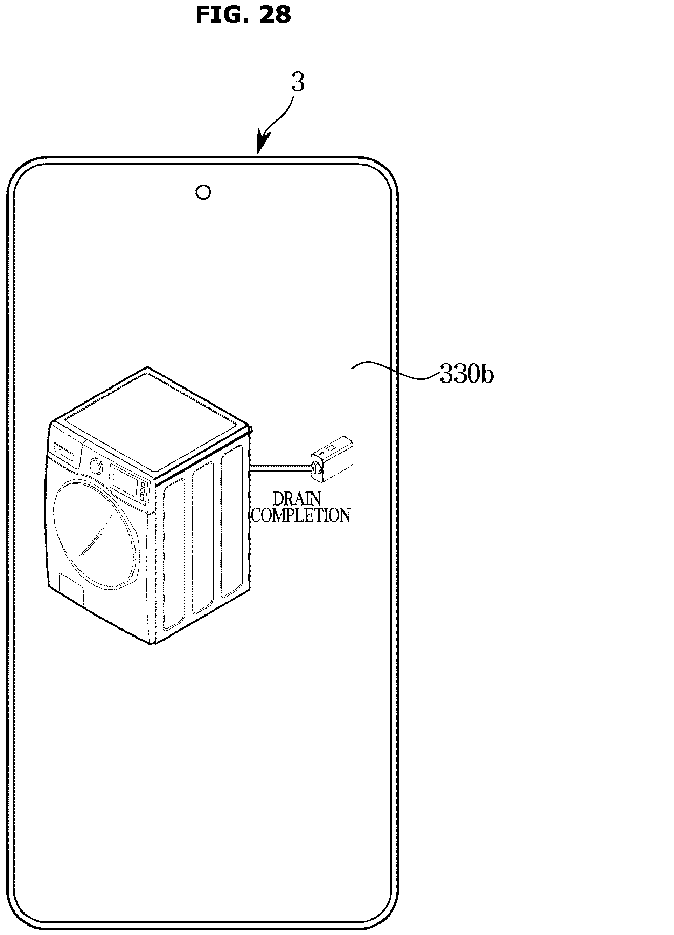

FIG. 28 shows an example of a state in which drainage interruption information is output to a user device according to an embodiment of the disclosure.

Referring to FIG. 28, the user device 3 may output drainage information in response to reception of a drainage interruption signal from the filter apparatus 100.

For example, the controller 310 may control the output interface 330b to output information indicating that drainage of the washing machine 10 has been interrupted and/or information indicating that a water inflow into the filter apparatus 100 has been interrupted, in response to reception of a drainage interruption signal from the filter apparatus 100 through the communicator 320.

The output interface 330b may include a display, and the outputting of the information indicating that drainage of the washing machine 10 has been interrupted and/or the information indicating that a water inflow into the filter apparatus 100 has been interrupted may include displaying, on the display, a visual indicator informing that drainage of the washing machine 10 has been completed and/or a visual indicator informing that a water inflow into the filter apparatus 100 has been interrupted.

That is, the controller 310 may control the output interface 330b to display a visual indicator informing that drainage of the washing machine 10 has been completed and/or a visual indicator informing that a water inflow into the filter apparatus 100 has been interrupted, in response to reception of a drainage interruption signal from the filter apparatus 100 through the communicator 320.

As another example, the output interface 330b may include at least one indicator lamp, and the outputting of the information indicating that drainage of the washing machine 100 has been interrupted and/or the information indicating that a water inflow into the filter apparatus 100 has been interrupted may include turning off an indicator lamp corresponding to drainage among the at least one indicator lamp.

That is, the controller 310 may control the output interface 330b to turn off the indicator lamp corresponding to drainage in response to reception of a drainage interruption signal from the filter apparatus 100 through the communicator 320.

According to the disclosure, because the filter apparatus 100 transmits a drainage interruption signal to an external device (for example, the washing machine 10 and/or the user device 3) in response to a detection of a water inflow interruption, the filter apparatus 100 may easily inform a user of information about a state of the filter apparatus 100.

Again referring to FIG. 25, the filter apparatus 100 may stop driving the filter cleaning device 130 in response to a detection of a water inflow interruption(operation 1240).

The controller 191 may stop driving the cleaning motor 136 in response to the detection of the water inflow interruption by the water supply sensor 182.

According to various embodiments of the disclosure, the controller 191 may control the closing and opening device 140 to open the connecting opening 118 in response to the detection of the water inflow interruption by the water supply sensor 182.

According to the disclosure, by stopping driving the filter cleaning device 130 according to an interruption of a water inflow into the filter apparatus 100, energy efficiency may be improved.

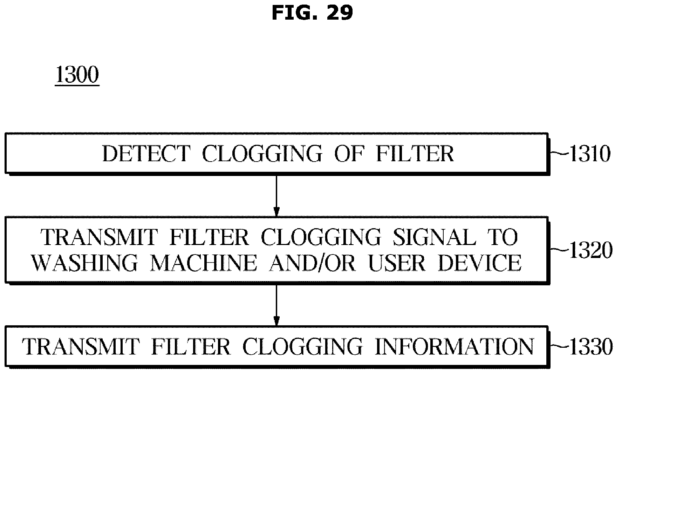

FIG. 29 is a flowchart showing an example of a method in which a filter apparatus according to an embodiment of the disclosure transmits a filter clogging signal to a washing machine and/or a user device.

An exemplary process of a method 1300 in which the filter apparatus 100 according to an embodiment of the disclosure transmits a filter clogging signal to the washing machine 10 and/or the user device 3 is shown in FIG. 29.

The filter apparatus 100 according to an embodiment of the disclosure may detect clogging of the filter 120 (operation 1310).

After the washing machine 10 performs a plurality of courses, a large amount of foreign materials may be collected in the filter 120.

The filter sensor 181 may detect an amount of foreign materials collected in the filter 120.

For example, the filter sensor 181 may output a filter clogging signal in response to an identification that an amount of foreign materials collected in the filter 120 is more than a preset amount.

For example, the controller 191 may detect clogging of the filter 120 in response to reception of a filter clogging signal from the filter sensor 181.

As another example, the filter sensor 181 may transmit data about an amount of foreign materials collected in the filter 120 to the controller 191, and the controller 191 may identify that the amount of foreign materials collected in the filter 120 is more than the preset amount in response to a result of processing on the data about the amount of foreign materials collected in the filter 120, and detect clogging of the filter 120 in response to the identification that the amount of foreign materials collected in the filter 120 is more than the preset amount.

According to an embodiment of the disclosure, the controller 191 may detect clogging of the filter 120 based on a load of the cleaning motor 136.

For example, the controller 191 may detect clogging of the filter 120 in response to an identification that a load of the cleaning motor 136 is greater than or equal to a preset load value for a preset time while the cleaning motor 136 operates.

The filter apparatus 100 may transmit a filter clogging signal to the washing machine 10 and/or the user device 3 in response to the detection of the clogging of the filter 120 (operation 1320).

The controller 191 may control the communicator 199 to transmit the filter clogging signal to the washing machine 10 and/or the user device 3 in response to the detection of the clogging of the filter 120.

The transmitting of the filter clogging signal to the washing machine 10 and/or the user device 3 by the filter apparatus 100 may include reception of the filter clogging signal transmitted from the filter apparatus 100 by the washing machine 10 and/or the user device 3.

The filter clogging signal may include information indicating that the filter 120 has been clogged.

A method in which the controller 191 transmits a filter clogging signal to the washing machine 10 and/or the user device 3 may be the same as operation 1120, and a detailed description thereof will be omitted.

According to various embodiments of the disclosure, the washing machine 10, the filter apparatus 100, and/or the user device 3 may output filter clogging information (operation 1330).

The filter clogging information may include information indicating that the filter 120 of the filter apparatus 100 has been clogged.

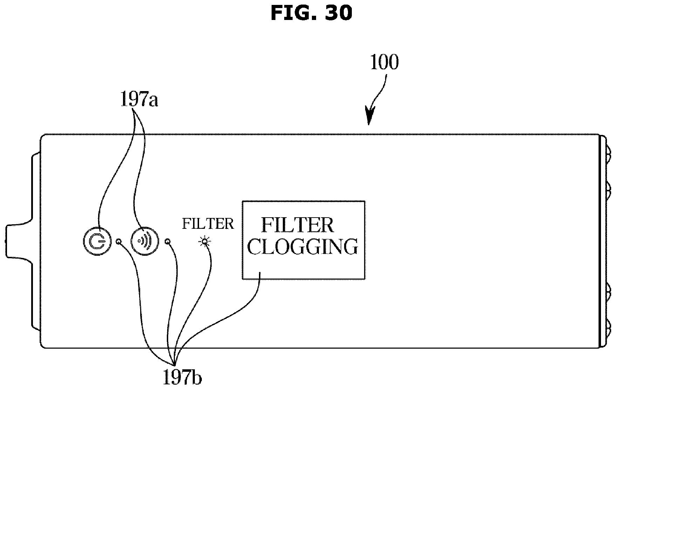

FIG. 30 shows an example of a state in which filter clogging information is output to a filter apparatus according to an embodiment of the disclosure.

Referring to FIG. 30, the filter apparatus 100 may output filter clogging information in response to a detection of clogging of the filter 120.

For example, the controller 191 may control the output interface 197b to output information indicating that the filter 120 has been clogged, in response to reception of a filter clogging signal from the filter sensor 181.

As another example, the controller 191 may identify clogging of the filter 120 in response to a result of processing on data received from the filter sensor 181, and control the output interface 197b to output information indicating that the filter 120 has been clogged, in response to an identification that the filter 120 has been clogged.

As another example, the controller 191 may detect clogging of the filter 120 in response to an identification that a load of the cleaning motor 136 is greater than or equal to the preset load value for the preset time while the cleaning motor 136 operates, and control the output interface 197b to output information indicating that the filter 120 has been clogged, in response to the detection of the clogging of the filter 120.

The output interface 197b may include a display, and the outputting of the information indicating that the filter 120 has been clogged may include displaying, on the display, a visual indicator informing clogging of the filter 120.

As another example, the output interface 197b may include at least one indicator lamp, and the outputting of the information indicating that the filter 120 has been clogged may include turning on or off an indicator lamp corresponding to filter clogging among the at least one indicator lamp.

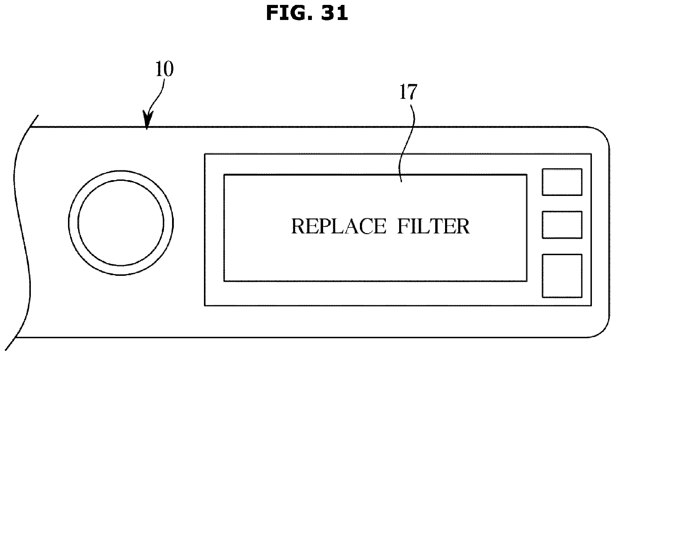

FIG. 31 shows an example of a state in which filter clogging information is output to a washing machine according to an embodiment of the disclosure.

Referring to FIG. 31, the washing machine 10 may output filter clogging information in response to reception of a filter clogging signal from the filter apparatus 100.

For example, the controller 90 may control the output interface 17 to output information indicating that water enters the filter apparatus 100, in response to reception of a filter clogging signal from the filter apparatus 100 through the communication 96.

The output interface 17 may include a display, and the outputting of the information indicating that the filter apparatus 100 has been clogged may include displaying, on the display, a visual indicator informing clogging of the filter apparatus 100.

That is, the controller 90 may control the output interface 17 to display a visual indicator informing that water enters the filter apparatus 100, in response to reception of a filter clogging signal from the filter apparatus 100 through the communicator 96.

As another example, the output interface 17 may include at least one indicator lamp, and the outputting of the information indicating that the filter 120 has been clogged may include turning on or off an indicator lamp corresponding to filter clogging among the at least one indicator lamp.

That is, the controller 90 may control the output interface 17 to turn on or off the indicator lamp corresponding to filter clogging in response to reception of a filter clogging signal from the filter apparatus 100 through the communicator 96.

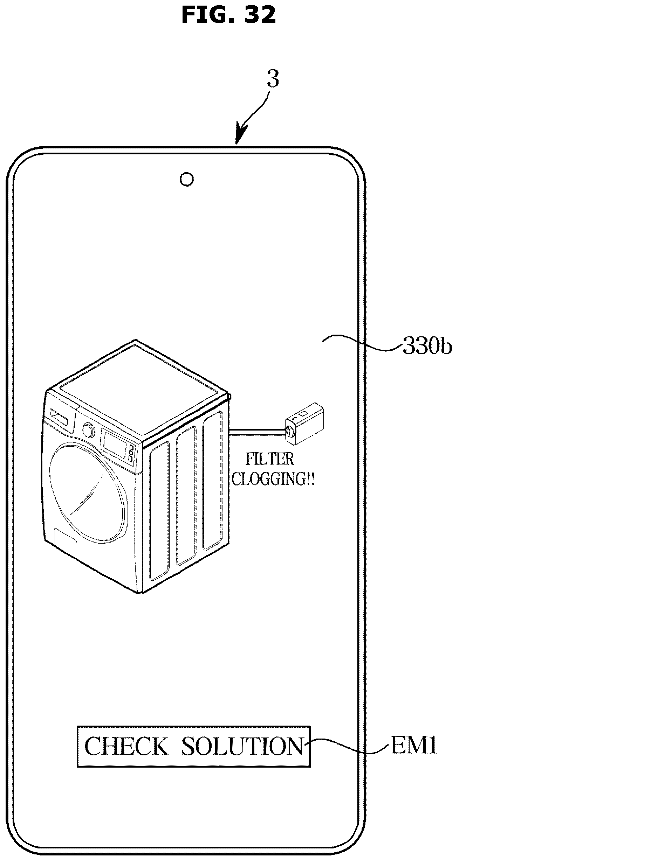

FIG. 32 shows an example of a state in which filter clogging information is output to a user device according to an embodiment of the disclosure.

Referring to FIG. 32, the user device 3 may output filter clogging information in response to reception of a filter clogging signal from the filter apparatus 100.

For example, the controller 310 may control the output interface 330b to output information indicating that the filter 120 has been clogged, in response to reception of a filter clogging signal from the filter apparatus 100 through the communicator 320.

The output interface 330b may include a display, and the outputting of the information indicating that the filter 120 has been clogged may include displaying, on the display, a visual indicator informing that the filter 120 has been clogged.

That is, the controller 310 may control the output interface 330b to display a visual indicator informing that the filter 120 has been clogged, in response to reception of a filter clogging signal from the filter apparatus 100 through the communicator 320.

As another example, the output interface 330b may include at least one indicator lamp, and the outputting of the information indicating that the filter 120 has been clogged may include turning on or off an indicator lamp corresponding to filter clogging among the at least one indicator lamp.

That is, the controller 310 may control the output interface 330b to turn on or off the indicator lamp corresponding to filter clogging in response to reception of a filter clogging signal from the filter apparatus 100 through the communicator 320.

According to various embodiments of the disclosure, the controller 310 may control the output interface 330b to display a user interface element EM1 for checking a guide for solving clogging of the filter 120.

The guide for solving clogging of the filter 120 may be provided in response to a selection of the user interface element EM1.

According to the disclosure, clogging of the filter 120 of the filter apparatus 100 may be easily notified to a user.

Also, according to the disclosure, a user who has recognized clogging of the filter 120 of the filter apparatus 100 may easily manage the filter apparatus 100 by replacing the filter 120.

Also, according to the disclosure, upon clogging of the filter 120 of the filter apparatus 100, a solution may be easily transferred to a user.

According to the disclosure, information obtained by the filter apparatus 100 may be transferred to an external device (for example, the washing machine 10 and/or the user device 3).

Meanwhile, the filter apparatus 100 may receive necessary information from an external device.

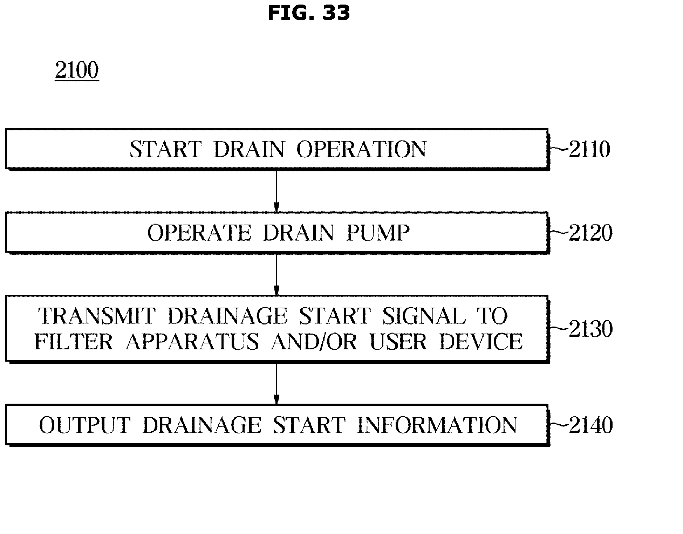

FIG. 33 is a flowchart showing an example of a method in which a washing machine according to an embodiment of the disclosure transmits a drainage start signal to a filter apparatus and/or a user device.

An exemplary process of a method 2100 in which the washing machine 10 according to an embodiment of the disclosure transmits a drainage start signal to the filter apparatus 100 and/or the user device 3 is shown in FIG. 33.

The washing machine 10 according to an embodiment of the disclosure may start a washing course selected through at least one input interface 16.

Washing courses may be largely divided into a washing operation, a rinsing operation, and a dehydrating operation, and in each of the washing operation, the rinsing operation, and/or the dehydrating operation, at least one drain operation may be performed.

The washing machine 10 may start a drain operation in response to an identification that a start condition of a drain operation is satisfied (operation 2110). For example, the washing machine 10 may start a drain operation in response to completion of a washing operation of laundry after water is supplied.

The washing machine 10 may operate the drain pump 73 based on the start of the drain operation (operation 2120).

The controller 90 may operate the drain pump 73 in response to an identification that the start condition of the drain operation is satisfied.

The washing machine 10 may transmit a drainage start signal to the filter apparatus 100 and/or the user device 3 in response to the start of the drain operation (operation 2130).

The transmitting of the drainage start signal to the filter apparatus 100 and/or the user device 3 by the washing machine 10 may include reception of the drainage start signal transmitted from the filter apparatus 100 by the filter apparatus 100 and/or the user device 3.

The drainage start signal may include information indicating that drainage of the washing machine 10 starts.

According to an embodiment of the disclosure, the controller 90 may control the communicator 96 to transmit the drainage start signal to the filter apparatus 100 and/or the user device 3 in response to an identification that the start condition of the drain operation is satisfied.

According to various embodiments of the disclosure, the controller 90 may control the communicator 96 to transmit the drainage start signal to the filter apparatus 100 and/or the user device 3 in response to an operation of the drain pump 73.

As another example, the controller 90 may control the communicator 96 to transmit the drainage start signal to the filter apparatus 100 and/or the user device 3 in response to an elapse of a preset time after the drain pump 73 operates.

According to the disclosure, by a time that water actually enters the filter apparatus 100, the drainage start signal may be transmitted to the filter apparatus 100 and/or the user device 3.

Referring to FIG. 16, the washing machine 10 may transmit the drainage start signal to the filter apparatus 100 and/or the user device 3 via the server 2.

For example, the washing machine 10 may transmit the drainage start signal to the server 2 through the second network (for example, a WAN network), and the server 2 may transfer the drainage start signal to the filter apparatus 100 and/or the user device 3 through the second network in response to reception of the drainage start signal from the washing machine 10.

Referring to FIG. 17A, the washing machine 10 may transmit the drainage start signal to the user device 3 via the server 2, and the washing machine 10 may transmit the drainage start signal directly to the filter apparatus 100 through D2D communication not via the server 2.

According to an embodiment of the disclosure, the washing machine 10 may transmit the drainage start signal to the filter apparatus 100 through the first network (for example, a Bluetooth communication network and/or a BLE communication network).

According to an embodiment of the disclosure, the washing machine 10 may transfer the drainage start signal to the server 2 through the second network, and the server 2 may transfer a drainage sensing signal to the user device 3 through the second network in response to reception of the drainage start signal from the washing machine 10.

Referring to FIG. 17B, the washing machine 10 may transmit the drainage start signal to the user device 3 via the filter apparatus 100 and the server 2, and the washing machine 10 may transmit a drainage sensing signal directly to the filter apparatus 100 through D2D communication not via the server 2.

According to an embodiment of the disclosure, the washing machine 10 may transmit the drainage start signal to the filter apparatus 100 through the first network (for example, a Bluetooth communication network and/or a BLE communication network).

According to an embodiment of the disclosure, the filter apparatus 100 may transfer the drainage start signal to the server 2 through the second network in response to reception of the drainage start signal from the washing machine 10 through the first network, and the server 2 may transfer the drainage start signal to the user device 3 through the second network in response to reception of the drainage start signal from the filter apparatus 100.

Referring to FIG. 18A, the washing machine 10 may transmit the drainage start signal to the user device 3 via the server 2, and the washing machine 10 may transmit the drainage start signal directly to the filter apparatus 100 through D2D communication not via the server 2.

According to an embodiment of the disclosure, the washing machine 10 may transmit the drainage start signal to the filter apparatus 100 through the third network (for example, a wired communication network).

According to an embodiment of the disclosure, the washing machine 10 may transfer the drainage start signal to the server 2 through the second network, and the server 2 may transfer the drainage start signal to the user device 3 through the second network in response to reception of the drainage start signal from the washing machine 10.

Referring to FIG. 18B, the washing machine 10 may transmit the drainage start signal to the user device 3 via the filter apparatus 100 and the server 2, and the washing machine 10 may transmit the drainage start signal directly to the filter apparatus 100 through D2D communication not via the server 2.

According to an embodiment of the disclosure, the washing machine 10 may transmit the drainage start signal to the filter apparatus 10 through the third network (for example, a wired communication network).

According to an embodiment of the disclosure, the filter apparatus 100 may transfer the drainage start signal to the server 2 through the second network in response to reception of the drainage start signal from the washing machine 10 through the third network, and the server 2 may transfer the drainage start signal to the user device 3 through the second network in response to reception of the drainage start signal from the filter apparatus 100.

According to the disclosure, although the washing machine 10 does not include a module for internet network communication, the washing machine 10 may transfer information about the washing machine 10 to the user device 3.

According to various embodiments of the disclosure, the washing machine 10, the filter apparatus 100 and/or the user device 3 may output drainage start information (operation 2140).

For example, the washing machine 10 may output drainage start information in response to an operation of the drain pump 73.

The filter apparatus 100 may output drainage start information in response to reception of a drainage start signal from the washing machine 10.

The user device 3 may output drainage start information in response to reception of a drainage start signal from the washing machine 10.

The drainage start information may include information indicating that the washing machine 10 drains water.

An example in which the washing machine 10, the filter apparatus 100 and/or the user device 3 outputs drainage start information may correspond to the examples shown in FIGS. 22 to 24, and accordingly, overlapping descriptions will be omitted.

According to an embodiment of the disclosure, the washing machine 10 may identify a failure of the water supply sensor 182 of the filter apparatus 100.

For example, the controller 90 may identify a failure of the water supply sensor 182 in response to an identification that no drainage sensing signal is received from the filter apparatus 100 although a preset time elapses after the controller 90 operates the drain pump 73.

The controller 90 may control the communicator 96 to transfer sensor failure information to the user device 3 in response to the identification of the failure of the water supply sensor 182, which will be described below.

According to an embodiment of the disclosure, the washing machine 10 may identify clogging of the drain hose 74 in response to an identification that no drainage sensing signal is received from the filter apparatus 100 although the preset time elapses after the controller 90 operates the drain pump 73.

According to various embodiments of the disclosure, the filter apparatus 100 may identify a failure of the water supply sensor 182.

For example, the controller 191 may identify a failure of the water supply sensor 182 in response to an identification that no inflow of water is detected by the water supply sensor 182 although a preset time elapses after the controller 191 receives a drainage start signal from the washing machine 10.

The controller 191 may control the communicator 199 to transfer sensor failure information to the user device 3 in response to the identification of the failure of the water supply sensor 182, which will be described below.

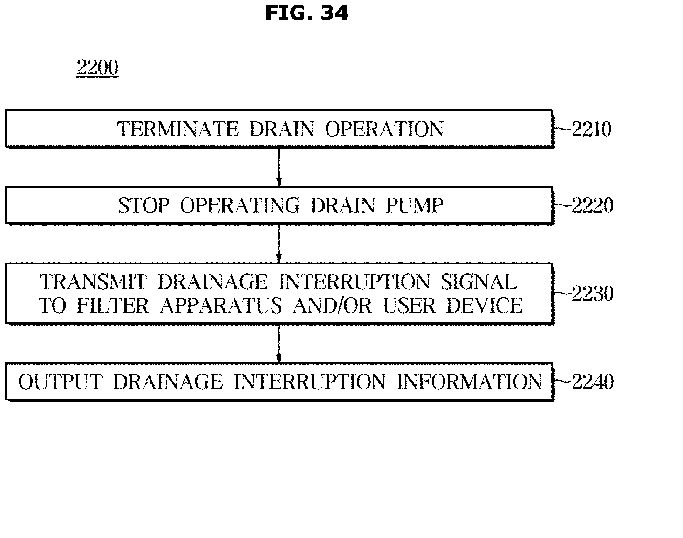

FIG. 34 is a flowchart showing an example of a method in which a washing machine according to an embodiment of the disclosure transmits a drainage interruption signal to a filter apparatus and/or a user device.

An exemplary process of a method 2200 in which the washing machine 10 according to an embodiment of the disclosure transmits a drainage interruption signal to the filter apparatus 100 and/or the user device 3 is shown in FIG. 34.

The washing machine 10 may terminate a drain operation in response to an identification that a termination condition of a drain operation is satisfied (operation 2210). For example, the washing machine 10 may terminate a drain operation in response to an identification that a water level of the tub 20 is lowered to a preset water level or less after the washing machine 10 operates the drain pump 73.

For example, the washing machine 10 may terminate a drain operation according to an elapse of a preset time from a time at which a water level of the tub 20 reaches the preset water level after the washing machine 10 operates the drain pump 73.

The washing machine 10 may stop operating the drain pump 73 based on the termination of the drain operation (operation 2220).

The controller 90 may stop operating the drain pump 73 based on the identification that the termination condition of the drain operation is satisfied.

The washing machine 10 may transmit a drainage interruption signal (or a drainage completion signal) to the filter apparatus 100 and/or the user device 3 in response to the termination of the drain operation (operation 2230).

A method in which the washing machine 10 transmits a drainage interruption signal to the filter apparatus 100 and/or the user device 3 may be the same as operation 2130, and accordingly, a detailed description thereof will be omitted.

The drainage interruption signal may include information indicating that drainage of the washing machine 10 has been completed.

According to an embodiment of the disclosure, the controller 90 may control the communicator 96 to transmit the drainage interruption signal to the filter apparatus 100 and/or the user device 3 in response to an identification that the termination condition of the drain operation is satisfied.

According to various embodiments of the disclosure, the controller 90 may control the communicator 96 to transmit the drainage interruption signal to the filter apparatus 100 and/or the user device 3 in response to a stop of an operation of the drain pump 73.

The washing machine 10, the filter apparatus 100, and/or the user device 3 may output drainage interruption information (operation 2240).

For example, the washing machine 10 may output drainage interruption information in response to a stop of an operation of the drain pump 73.

The filter apparatus 100 may output drainage interruption information in response to reception of the drainage interruption signal from the washing machine 10.

The user device 3 may output drainage interruption information in response to reception of the drainage interruption signal from the washing machine 10.

The drainage interruption information may include information indicating that drainage of the washing machine 10 has been completed.

An example in which the washing machine 10, the filter apparatus 100 and/or the user device 3 outputs drainage interruption information may correspond to the examples shown in FIGS. 26 to 28, and accordingly, overlapping descriptions will be omitted.

According to an embodiment of the disclosure, the washing machine 10 may identify a failure of the water supply sensor 182 of the filter apparatus 100.

For example, the controller 90 may identify a failure of the water supply sensor 182 in response to an identification that no drainage interruption signal is received from the filter apparatus 100 although a preset time elapses after the controller 90 stops operating the drain pump 73.

The controller 90 may control the communicator 96 to transfer sensor failure information to the user device 3 in response to the identification of the failure of the water supply sensor 182, which will be described below.

According to an embodiment of the disclosure, the washing machine 10 may identify clogging of the drain hose 74 in response to an identification that no drainage sensing signal is received from the filter apparatus 100 although a preset time elapses after the washing machine 10 stops operating the drain pump 73.

According to various embodiments of the disclosure, the filter apparatus 100 may identify a failure of the water supply sensor 182.

For example, the controller 191 may identify a failure of the water supply sensor 182 in response to an identification that no water inflow interruption is detected by the water supply sensor 182 although a preset time elapses after the controller 191 receives a drainage interruption signal from the washing machine 10.

The controller 191 may control the communicator 199 to transfer sensor failure information to the user device 3 in response to the identification of the failure of the water supply sensor 182, which will be described below.

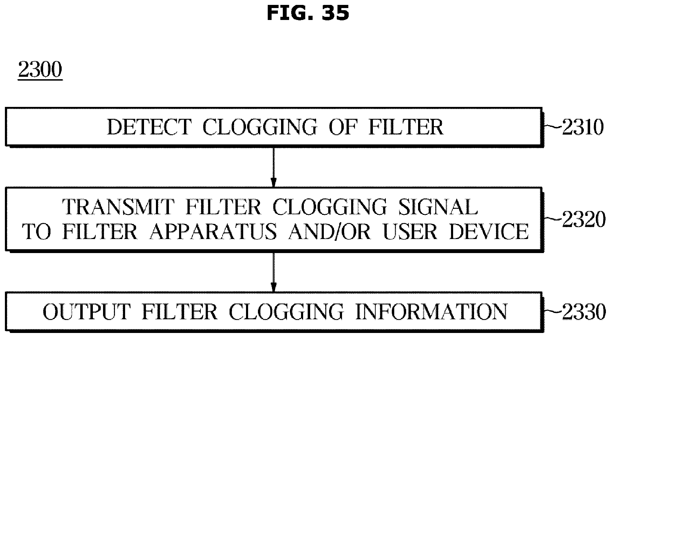

FIG. 35 is a flowchart showing an example of a method in which a washing machine according to an embodiment of the disclosure transmits a filter clogging signal to a filter apparatus and/or a user device.

An exemplary process of a method 2300 in which the washing machine 10 according to an embodiment of the disclosure transmits a filter clogging signal to the filter apparatus 100 and/or the user device 3 is shown in FIG. 35.

The washing machine 10 according to an embodiment of the disclosure may detect clogging of the filter 120 (operation 2310).

For example, the controller 90 may detect clogging of the filter 120 in response to an identification that a change amount in water level of the tub 20 per hour is less than or equal to a preset value while the drain pump 73 operates. For this, the washing machine 10 may further include a water level sensor for detecting a water level of the tub 20.

As another example, the controller 90 may detect clogging of the filter 120 in response to an identification that a load value of the drain pump 73 is greater than or equal to a preset value while the drain pump 73 operates.

For example, the controller 90 may detect clogging of the filter 120 in response to an identification that a driving current value (or, a driving voltage value) applied to the drain pump 73 is greater than or equal to a preset value for a preset time while the drain pump 73 operates.

The washing machine 10 may transmit a filter clogging signal to the filter apparatus 100 and/or the user device 3 in response to the detection of the clogging of the filter 120 (operation 2320).

The controller 90 may control the communicator 96 to transmit the filter clogging signal to the filter apparatus 100 and/or the user device 3 in response to the detection of the clogging of the filter 120.

The transmitting of the filter clogging signal to the filter apparatus 100 and/or the user device 3 by the washing machine 10 may include reception of the filter clogging signal transmitted from the washing machine 10 by the filter apparatus 100 and/or the user device 3.

The filter clogging signal may include information indicating that the filter 120 has been clogged.

A method in which the controller 90 transmits a filter clogging signal to the washing machine 10 and/or the user device 3 may be the same as operation 2130, and accordingly, a detailed description thereof will be omitted.

According to various embodiments of the disclosure, the washing machine 10, the filter apparatus 100 and/or the user device 3 may output filter clogging information (operation 2330).

For example, the washing machine 10 may output filter clogging information in response to the detection of the clogging of the filter 120.

The filter apparatus 100 may output filter clogging information in response to reception of the filter clogging signal from the washing machine 10.

The user device 3 may output filter clogging information in response to reception of the filter clogging signal from the washing machine 10.

The filter clogging information may include information indicating that the filter 120 of the filter apparatus 100 has been clogged.

An example in which the washing machine 10, the filter apparatus 100 and/or the user device 3 outputs filter clogging information may correspond to the examples shown in FIGS. 30 to 32, and accordingly, overlapping descriptions will be omitted.

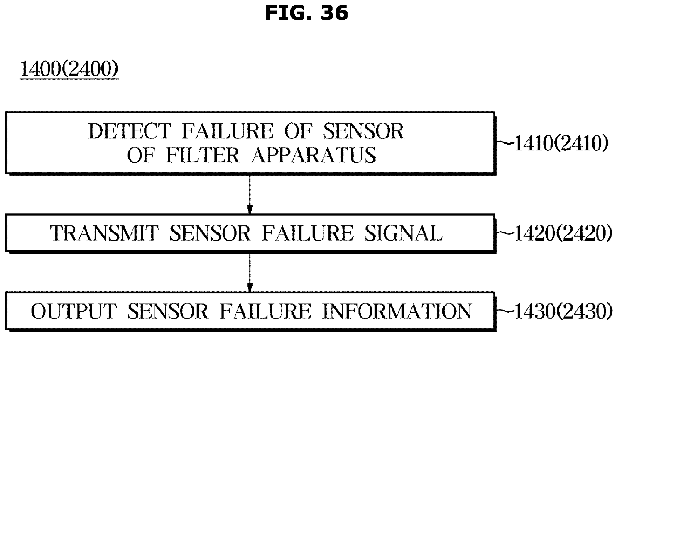

FIG. 36 is a flowchart showing an example of a method in which a filter apparatus (or a washing machine) according to an embodiment of the disclosure transmits a sensor failure signal to a washing machine (or a filter apparatus) and/or a user device.

An example of a method 1400 in which the filter apparatus 100 according to an embodiment of the disclosure transmits a sensor failure signal to the washing machine 10 and/or the user device 3 and an example of a method 2400 in which the washing machine 10 transmits a sensor failure signal to the filter apparatus 100 and/or the user device 3 are shown in FIG. 36.

The filter apparatus 100 according to an embodiment of the disclosure may detect a failure of the at least one sensor 181 and 182 of the filter apparatus 100 (operation 1410).

According to various embodiments of the disclosure, the filter apparatus 100 may compare information obtained from the at least one sensor 181 and 182 with information obtained from an external device (for example, the washing machine 10 and/or the user device 3), and identify a failure of the at least one sensor 181 and 182 according to a result of the comparison.

For example, the controller 191 may identify a failure of the water supply sensor 182 in response to an identification that no water inflow interruption is detected by the water supply sensor 182 although a preset time elapses after a drainage interruption signal is received from the washing machine 10.

As another example, the controller 191 may identify a failure of the filter sensor 181 in response to an identification that clogging of the filter 120 is not detected by the filter sensor 181 although a filter clogging signal is received from the washing machine 10.

The washing machine 10 according to an embodiment of the disclosure may detect a failure of the at least one sensor 181 and 182 of the filter apparatus 100 (operation 2410).

According to various embodiments of the disclosure, the washing machine 10 may compare information obtained from a component (for example, the drain pump 73 or the sensor device 95) of the washing machine 10 with information obtained from an external device (for example, the filter apparatus 100 and/or the user device 3), and identify a failure of the at least one sensor 181 and 182 according to a result of the comparison.

For example, the controller 90 may identify a failure of the water supply sensor 182 in response to an identification that no drainage interruption signal is received from the filter apparatus 100 although a preset time elapses after the controller 90 stops operating the drain pump 73.

As another example, the controller 90 may identify a failure of the filter sensor 181 in response to an identification that no filter clogging signal is received from the filter apparatus 100 although a filter clogging signal is transmitted to the filter apparatus 100 and/or the user device 3.

The filter apparatus 100 according to an embodiment of the disclosure may transmit a sensor failure signal to the washing machine 10 and/or the user device 3 in response to a detection of a failure of the at least one sensor 181 and 182 of the filter apparatus 100 (operation 1420).

A method in which the filter apparatus 100 transmits a sensor failure signal to the washing machine 10 and/or the user device 3 may be the same as operation 1120, and accordingly, a detailed description thereof will be omitted.

The washing machine 10 according to an embodiment of the disclosure may transmit a sensor failure signal to the filter apparatus 100 and/or the user device 3 in response to a detection of a failure of the at least one sensor 181 and 182 of the filter apparatus 100 (operation 2420).

The sensor failure signal may include information about a kind of a faulty sensor among the at least one sensor 181 and 182 of the filter apparatus 100.

A method in which the washing machine 10 transmits a sensor failure signal to the filter apparatus 100 and/or the user device 3 may be the same as operation 2130, and accordingly, a detailed description thereof will be omitted.

According to various embodiments of the disclosure, the washing machine 10, the filter apparatus 100 and/or the user device 3 may output sensor failure information (operations 1430 and 2430).

The sensor failure information may include information about a faulty sensor.

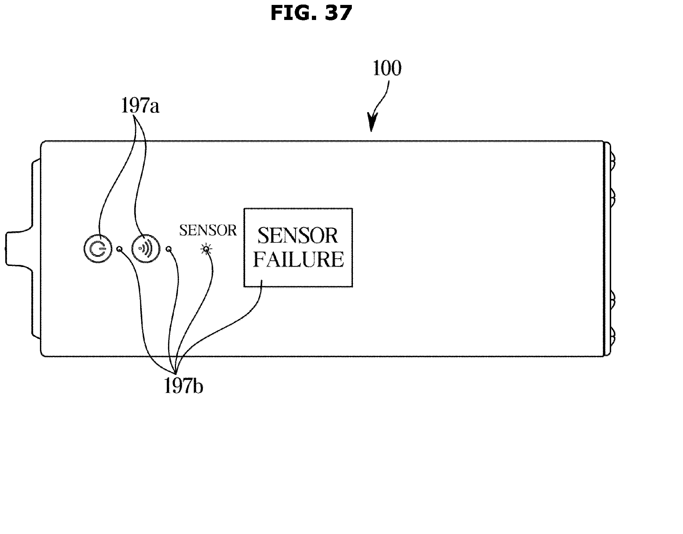

FIG. 37 shows an example of a state in which sensor failure information is output to a filter apparatus according to an embodiment of the disclosure.

Referring to FIG. 37, the filter apparatus 100 may output sensor failure information in response to a detection of a failure of the at least one sensor 181 and 182.

As another example, the filter apparatus 100 may output sensor failure information in response to reception of a sensor failure signal from the washing machine 10.

The controller 191 may control the output interface 197b to output sensor failure information in response to a detection of a failure of the at least one sensor 181 and 182 and/or reception of a sensor failure signal from the washing machine 10.

The output interface 197b may include a display, and the outputting of the sensor failure information may include displaying, on the display, a visual indicator informing a failure of a sensor and a kind of the faulty sensor.

As another example, the output interface 197b may include at least one indicator lamp, and the outputting of the sensor failure information may include turning on or off an indicator lamp corresponding to a sensor failure among the at least one indicator lamp.

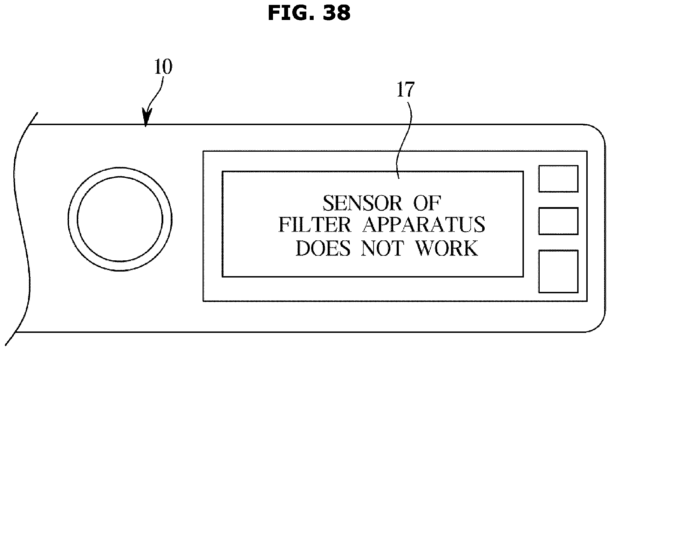

FIG. 38 shows an example of a state in which sensor failure information is output to a washing machine according to an embodiment of the disclosure.

Referring to FIG. 38, the washing machine 10 may output sensor failure information in response to a detection of a failure of the at least one sensor 181 and 182.

As another example, the washing machine 10 may output sensor failure information in response to reception of a sensor failure signal from the filter apparatus 100.

The controller 90 may control the output interface 17 to output sensor failure information in response to a detection of a failure of the at least one sensor 181 and 182 and/or reception of a sensor failure signal from the filter apparatus 100.

The output interface 17 may include a display, and the outputting of the sensor failure information may include displaying, on the display, a visual indicator informing a failure of a sensor and a kind of the faulty sensor.

As another example, the output interface 17 may include at least one indicator lamp, and the outputting of the sensor failure information may include turning on or off an indicator lamp corresponding to a sensor failure among the at least one indicator lamp.

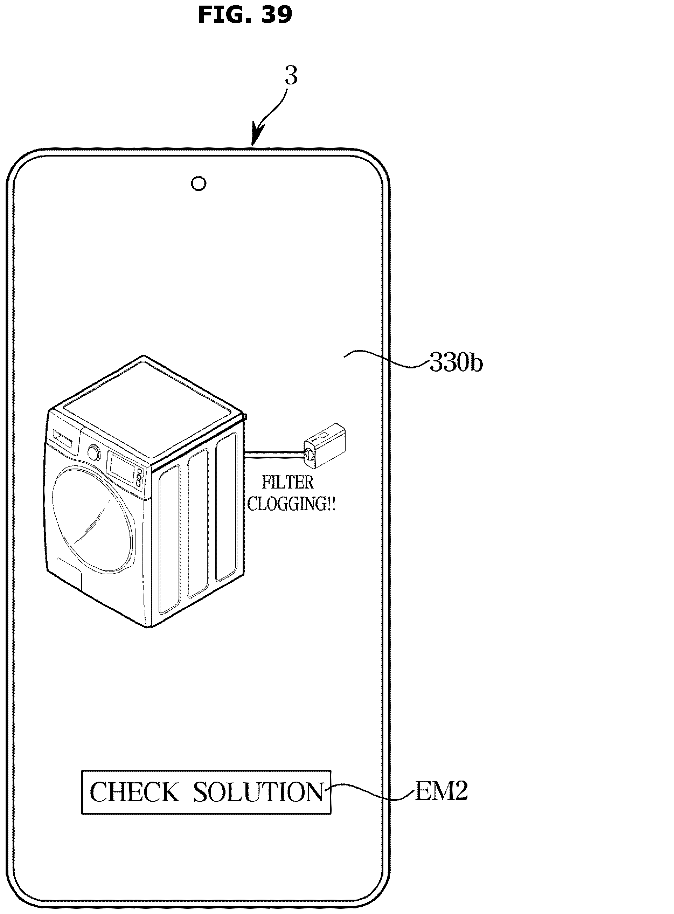

FIG. 39 shows an example of a state in which sensor failure information is output to a user device according to an embodiment of the disclosure.

Referring to FIG. 39, the user device 3 may output sensor failure information in response to reception of a sensor failure signal from the washing machine 10 and/or the filter apparatus 100.

For example, the controller 310 may control the output interface 330b to output sensor failure information in response to reception of a sensor failure signal from the washing machine 10 and/or the filter apparatus 100 through the communicator 320.

The output interface 330b may include a display, and the outputting of the sensor failure information from the washing machine 10 may include displaying, on the display, a visual indicator informing a failure of a sensor and a kind of the faulty sensor.

According to various embodiments of the disclosure, the controller 310 may control the output interface 330b to display a user interface element EM2 for checking a guide for solving a failure of the sensor 181 and 182.

The guide for solving the failure of the sensor 181 and 182 may be provided in response to a selection of the user interface element EM2.

As another example, the output interface 330b may include at least one indicator lamp, and the outputting of the sensor failure information may include turning on or off an indicator lamp corresponding to a sensor failure among the at least one indicator lamp.

According to the disclosure, the filter apparatus 100 may identify a failure of the sensor 181 and 182 of the filter apparatus 100 through communication with an external device.

According to the disclosure, a failure of the sensor 181 and 182 of the filter apparatus 100 may be easily notified to a user.

Also, according to the disclosure, according to the failure of the sensor 181 and 182 of the filter apparatus 100, a solution may be easily transferred to a user.

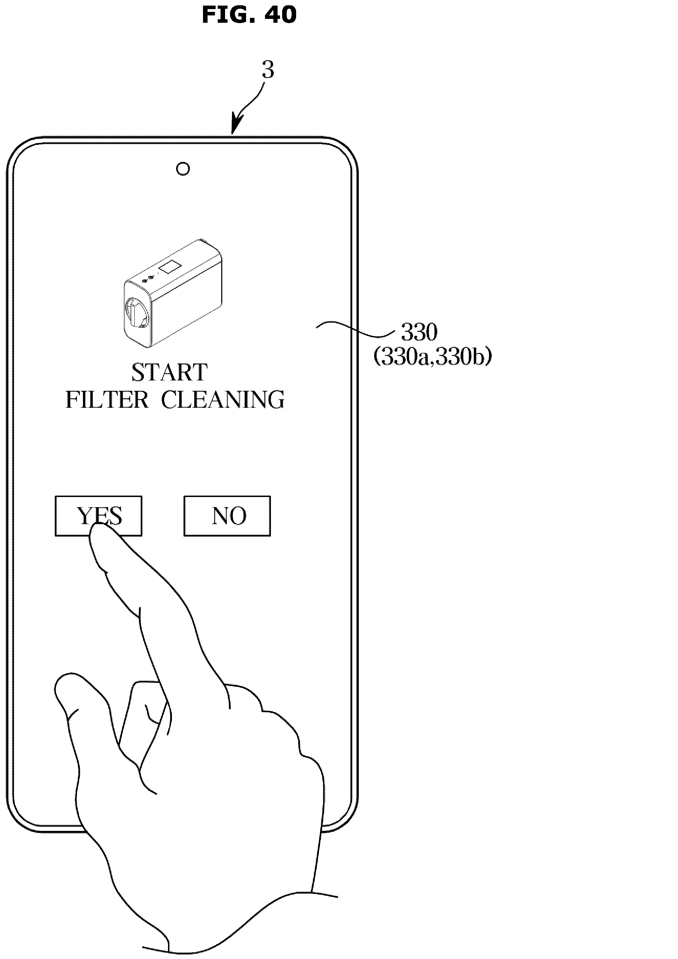

FIG. 40 shows a state in which a user interface for enabling an input of a filter cleaning command is provided by a user device according to an embodiment of the disclosure.

A user may transmit a filter cleaning command to the filter apparatus 100 remotely through the user device 3.

The user device 3 may establish communication with the server 2 in response to logging-on to the user's account after the user executes a preset application through the user device 3.

The filter apparatus 100 may have been registered in the user's account, and the output interface 330b may provide a user interface for controlling the filter apparatus 100.

The user interface for controlling the filter apparatus 100 may include an element for enabling an input of a control command for operating the filter cleaning device 130.

On the user interface for controlling the filter apparatus 100, the user may input a filter cleaning command through the input interface 330b.

The user device 3 may transfer the filter cleaning command to the filter apparatus 100 in response to reception of the filter cleaning command through the input interface 330b.

The controller 310 may control the communicator 320 to transfer the filter cleaning command to the filter apparatus 100.

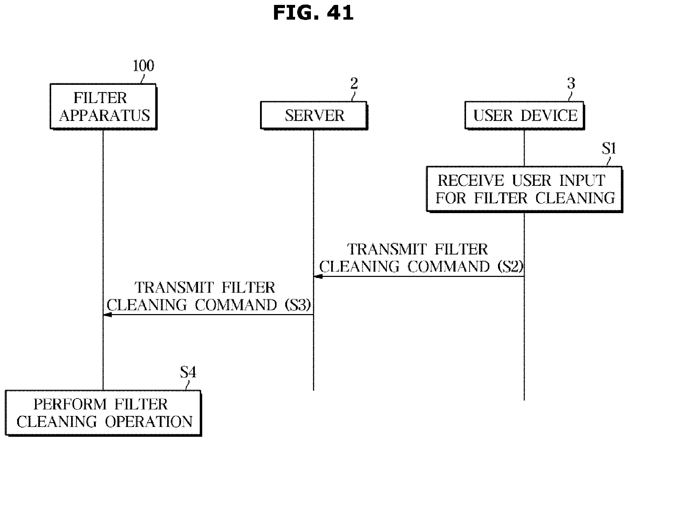

FIG. 41 shows an example of a process in which a filter cleaning command is transferred from a user device to a filter apparatus via a server.

Referring to FIG. 41, the user device 3 may receive a user input for cleaning the filter 120 (operation S1). The reception of the user input for cleaning the filter 120 may include a selection of a "YES" button on the user interface shown in FIG. 40.

The user device 3 may transmit a filter cleaning command to the server 2 in response to reception of the filter cleaning command through the input interface 330b (operation S2).

The server 2 may transmit the filter cleaning command to the filter apparatus 100 in response to reception of the filter cleaning command from the user device 3 (operation S3).

The filter apparatus 100 may perform a filter cleaning operation in response to reception of the filter cleaning command from the server 2 (operation S4).

The controller 191 may operate the filter cleaning device 130 in response to reception of the filter cleaning command through the communicator 199.

In summary, the user device 3 may transmit a filter cleaning command to the filter apparatus 100 via the server 2.

Meanwhile, in a case in which the filter apparatus 100 is incapable of using the second network, the filter apparatus 100 may have difficulties in receiving a filter cleaning command because the filter apparatus 100 is incapable of directly communicating with the server 2.

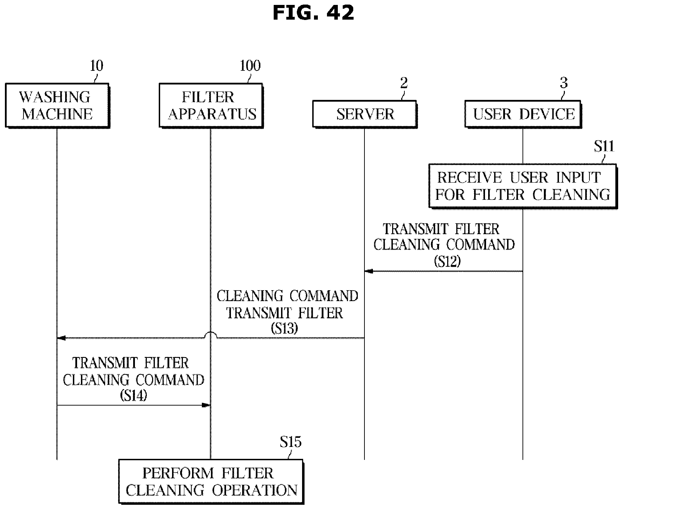

FIG. 42 shows an example of a process in which a filter cleaning command is transferred from a user device to a filter apparatus via a washing machine.

Referring to FIG. 42, the user device 3 may receive a user input for cleaning the filter 120 (operation S11).

The user device 3 may transmit a filter cleaning command to the server 2 in response to reception of a filter cleaning command through the input interface 330b (operation S12).

The server 2 may transmit the filter cleaning command to the washing machine 10 in response to reception of the filter cleaning command from the user device 3 (operation S13).

The washing machine 10 may transmit the filter cleaning command to the filter apparatus 100 in response to reception of the filter cleaning command from the server 2 (operation S14).

According to various embodiments of the disclosure, the washing machine 10 may perform D2D communication with the filter apparatus 100.

The filter apparatus 100 may perform a filter cleaning operation in response to reception of the filter cleaning command from the washing machine 10 (operation S15).

The controller 191 may operate the filter cleaning device 130 in response to reception of the filter cleaning command through the communicator 199.

In summary, the user device 3 may transmit a filter cleaning command to the filter apparatus 100 via the washing machine 10 and the server 2.

According to the disclosure, although the filter apparatus 100 is incapable of performing internet communication, the filter apparatus 100 may receive a command from the server 2.

A filter apparatus according to an aspect of the disclosure, which is positionable outside a washing machine and connectable to a drain device of the washing machine, may include: a housing; a filter case provided inside the housing and including an inlet and an outlet; a filter detachably installed in the filter case; and a circuitry provided between the housing and the filter case and including a controller and a communicator, wherein the communicator may be configured to transmit information obtained by the filter apparatus to at least one of the washing machine or a user device.

Also, the filter apparatus may include at least one sensor connected to the circuitry, and the controller may be configured to transmit a signal detected by the at least one sensor to the at least one of the washing machine or the user device.

Also, the at least one sensor may include a first sensor configured to detect an inflow of water through the inlet, and the controller may be configured to control the communicator to transmit a drainage sensing signal to the at least one of the washing machine or the user device, in response to a detection of an inflow of water through the inlet by the first sensor.

Also, the controller may be configured to control the communicator to transmit a drainage interruption signal to the at least one of the washing machine or the user device, in response to a detection of an interruption of a water inflow through the inlet by the first sensor.

Also, the at least one sensor may include a second sensor configured to detect clogging of the filter, and the controller may be configured to control the communicator to transmit a filter clogging signal to the at least one of the washing machine or the user device, in response to a detection of clogging of the filter by the second sensor.

Also, the filter apparatus may further include a filter cleaning device including a cleaning member configured to be rotatable while being in contact with a surface of the filter, through which foreign materials are filtered, and a cleaning motor configured to rotate the cleaning member, and the controller may be configured to operate the cleaning motor in response to a detection of a water inflow through the inlet.

Also, the controller may be configured to identify clogging of the filter based on a load of the cleaning motor while the cleaning motor operates, and control the communicator to transmit a filter clogging signal to the at least one of the washing machine or the user device in response to an identification that the filter has been clogged.

Also, the communicator may be configured to receive at least one of a drainage start signal or a drainage interruption signal from the washing machine.

Also, the communicator may be configured to transmit the at least one of the drainage start signal or the drainage interruption signal to the user device.

Also, the filter apparatus may further include a user interface exposed to an outer surface of the housing and connected to the circuitry.

Also, the user interface may include an output interface configured to display visualized information related to the filter apparatus.

Also, the controller may be configured to control the output interface to display visual information for informing clogging of the filter in response to a detection of the clogging of the filter.

Also, the controller may be configured to control the output interface to display visual information for informing a water inflow in response to a detection of the water inflow through the inlet.

Also, the communicator may be configured to transmit information obtained by the filter apparatus to the washing machine or the user device via a server.

Also, the communicator may be configured to transmit information obtained by the filter apparatus to the user device via the washing machine.

Also, the communicator may include a wireless communication module or a wired communication module being connectable to the washing machine.

Also, the circuitry may be provided on an upper side of the filter case.

Also, the filter apparatus may further include a cable connected to an external power source for supplying power to the circuitry.

Also, the filter apparatus may further include a battery configured to supply power to the circuitry.

Also, the controller may be configured to operate the cleaning motor in response to reception of a filter cleaning command from the washing machine or the user device through the communicator.

Meanwhile, the disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that can be interpreted by a computer. For example, the computer-readable recording medium may be Read Only Memory (ROM), Random Access Memory (RAM), a magnetic tape, a magnetic disc, a flash memory, an optical data storage, or the like.

Also, the machine-readable storage medium may be provided in the form of a non-transitory storage medium, wherein the term 'non-transitory' simply means that the storage medium is a tangible device, and does not include a signal (e.g., an electromagnetic wave), but this term does not differentiate between where data is semi-permanently stored in the storage medium and where the data is temporarily stored in the storage medium. For example, a 'non-transitory storage medium' may include a buffer in which data is temporarily stored.

According to an embodiment of the disclosure, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloadable or uploadable) online via an application store (e.g., Play StoreTM) or between two user devices (e.g., smart phones) directly. When distributed online, at least part of the computer program product (e.g., a downloadable app) may be temporarily generated or at least temporarily stored in the machine-readable storage medium, such as a memory of the manufacturer's server, a server of the application store, or a relay server.

So far, the disclosed embodiments have been described with reference to the accompanying drawings. It will be apparent that those skilled in the art can make various modifications thereto without changing the technical spirit and essential features of the present disclosure. Thus, it should be understood that the embodiments described above are merely for illustrative purposes and not for limitation purposes in all aspects.

## Claims

1. A filter apparatus positionable outside a washing machine and being connectable to a drain device of the washing machine, the filter apparatus comprising:
a housing;
a filter case inside the housing and including an inlet and an outlet that are configured so that, with the filter apparatus positioned outside the washing machine and connected to the drain device, water from the drain device is flowable through the inlet into the filter case, and water in the filter case is flowable through the outlet out of the filter case;
a filter detachably installable in the filter case so that water flowing through the inlet is flowable through the filter, and then to the outlet; and
circuitry between the housing and the filter case and including a controller configured to control the filter apparatus, and a communicator configured to transmit information obtained by the filter apparatus to at least one of the washing machine or a user device.

2. The filter apparatus of claim 1, further comprising:
at least one sensor connected to the circuitry,
wherein the controller is configured to control the communicator to transmit a signal that is based on a signal detected by the at least one sensor to the at least one of the washing machine or the user device.

3. The filter apparatus of claim 2, wherein
the at least one sensor includes a first sensor configured to detect an inflow of water through the inlet, and
the controller is configured to control the communicator to transmit a drainage sensing signal to the at least one of the washing machine or the user device, in response to a detection of an inflow of water through the inlet by the first sensor.

4. The filter apparatus of claim 3, wherein the controller is configured to control the communicator to transmit a drainage interruption signal to the at least one of the washing machine or the user device, in response to a detection of an interruption of a water inflow through the inlet by the first sensor.

5. The filter apparatus of claim 2, wherein
the at least one sensor includes a second sensor configured to detect clogging of the filter, and
the controller is configured to control the communicator to transmit a filter clogging signal to the at least one of the washing machine or the user device, in response to a detection of clogging of the filter by the second sensor.

6. The filter apparatus of claim 1, further comprising:
a filter cleaning device including a cleaning member configured to be rotatable while being in contact with a surface, through which foreign materials are filtered, of the filter while the filter is installed in the filter case, and a cleaning motor configured to rotate the cleaning member,
wherein the controller is configured to operate the cleaning motor in response to a detection of a water inflow through the inlet.

7. The filter apparatus of claim 6, wherein the controller is configured to identify clogging of the filter based on a load of the cleaning motor while the cleaning motor operates, and control the communicator to transmit a filter clogging signal to the at least one of the washing machine or the user device in response to an identification that the filter has been clogged.

8. The filter apparatus of claim 1, wherein the communicator is configured to receive at least one of a drainage start signal or a drainage interruption signal from the washing machine.

9. The filter apparatus of claim 8, wherein the communicator is configured to transmit the at least one of the drainage start signal or the drainage interruption signal to the user device.

10. The filter apparatus of claim 1, further comprising:
a user interface exposed to an outer surface of the housing and connected to the circuitry.

11. The filter apparatus of claim 10, wherein the user interface includes an output interface configured to display visualized information related to the filter apparatus.

12. The filter apparatus of claim 11, wherein the controller is configured to control the output interface to display visual information for informing clogging of the filter while the filter is installed in the filter case, in response to a detection of the clogging of the filter.

13. The filter apparatus of claim 11, wherein the controller is configured to control the output interface to display visual information for informing a water inflow in response to a detection of the water inflow through the inlet.

14. The filter apparatus of claim 1, wherein the communicator is configured to transmit information obtained by the filter apparatus to the washing machine or the user device via a server.

15. The filter apparatus of claim 1, wherein the communicator is configured to transmit information obtained by the filter apparatus to the user device via the washing machine.
